(19) Europäisches Patentamt
European Patent Office
Office européen des brevets

(11) EP 4 385 327 A1

(12) **EUROPEAN PATENT APPLICATION**

(43) Date of publication:
**19.06.2024 Bulletin 2024/25**

(21) Application number: **23216629.8**

(22) Date of filing: **14.12.2023**

(51) International Patent Classification (IPC):
***A01N 31/04*** $^{(2006.01)}$ ***A01N 65/34*** $^{(2009.01)}$
***A01N 65/00*** $^{(2009.01)}$ ***A01P 7/04*** $^{(2006.01)}$
***A01P 3/00*** $^{(2006.01)}$ ***A01N 31/02*** $^{(2006.01)}$
***A01N 37/06*** $^{(2006.01)}$

(52) Cooperative Patent Classification (CPC):
**A01N 31/04; A01N 31/02; A01N 37/06; A01N 65/00; A01N 65/34**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.12.2022 EP 22383225**

(71) Applicant: **Kimitec Group S.L.**
**04378 Vicar Almeria (ES)**

(72) Inventors:
- **SANTANA MÉRIDAS, OMAR**
**04378 Vicar (ES)**
- **MARTÍN BEJERANO, MARÍA**
**04378 Vicar (ES)**
- **GARCÍA MORENO, JUAN JOSÉ**
**04378 Vicar (ES)**
- **JULIO TORRES, LUIS FERNANDO**
**04378 Vicar (ES)**
- **VALVERDE SANCHO, JUAN**
**04378 Vicar (ES)**

(54) **BIOPESTICIDE COMPOSITION AND METHOD FOR CONTROLLING AND TREATING BROAD SPECTRUM OF PESTS AND DISEASES IN PLANTS**

(57) The present invention relates to a biopesticide composition and method of producing it as well as methods for controlling and treating broad spectrum of pests and diseases in plants. The biopesticide composition may be obtained by extracting plant parts using benzyl alcohol as extraction agent.

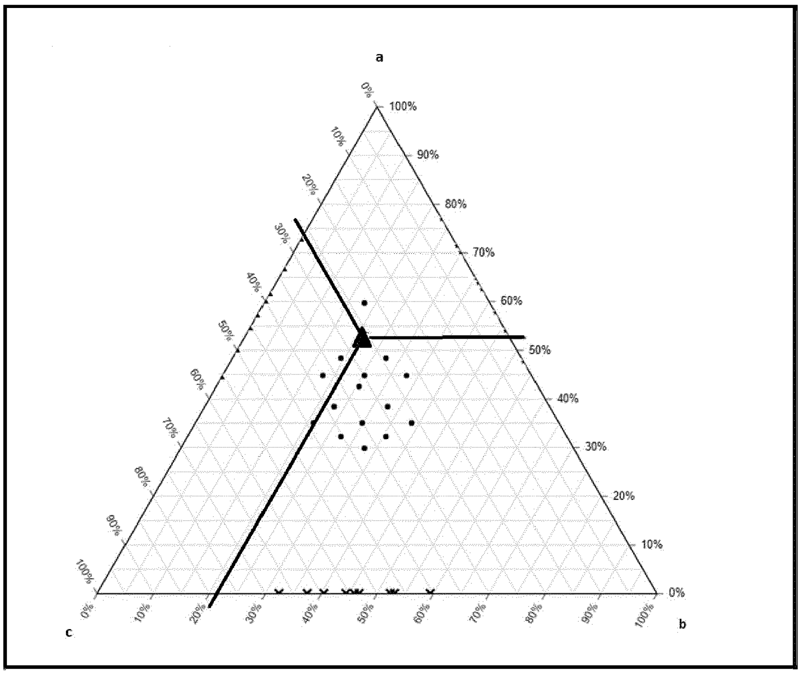


**Figure 16/16**



EP 4 385 327 A1

## Description

### Technical Field

The present invention relates to a biopesticide composition comprising a *Prunus dulcis* plant extract obtained by using benzyl alcohol in the extraction process, and preferably at least one compound of the formula (I) or pure compound or essential oil. In a further aspect, the present invention relates to a method for controlling pests and treating diseases in plants. The present invention relates to pesticides that are derived from natural substances.

### Background Art

Pests (insects, arachnids, mites, larvae thereof, nematodes, etc.) and diseases (fungi, bacteria, virus, etc) represent a huge problem in the agriculture field. They have annually cost humans in crop losses and in the expense of keeping them under control. For example, the losses caused by pests in agricultural environments include decreased crop yield, reduced crop quality, and increased harvesting costs.

Over the years, pesticides based on chemical principles have provided an effective means of pest control. Despite being efficient treatment, this kind of the commercial products involves the use of toxic chemical substances such as those disclosed in US 4,376,784; US 4,308,279; US 4,985,251; US 4,983,390; US 4,818,534; US 4,983,389; US 2,423,284, US 4,948,013, EP 462,347 and DE 4,421,471.

One wide alternative to resolve this problem is to use biopesticide composition as a phytosanitary treatment. According to US Environmental Protection Agency are certain types of pesticides derived from such natural materials as animals, plants, bacteria, and certain minerals. In the state of art can be found different biopesticide compositions such as WO 99/18802 accordingly, it provides a pesticidal composition which is relatively non-toxic to mammals, particularly humans, or plants. A pesticidal composition comprising by *Eucalyptus* oil, cajeput oil, lemongrass oils and of a surfactant for controlling pesticidal activity of limited use against some pests. US 4,759,930 discloses insect-killing compositions comprise pyrethrum, rotenone, or both, and one or more of the following: *Eucalyptus,* rosemary, peppermint and boric acid kill insects such as adult and immature cockroaches in large numbers, yet are, where no boric acid is present, relatively innocuous to most human beings and animals. US 8,623,420 this invention is directed to a sweet whey-based biopesticide composition for a limited use of pests.

Among the biopesticide composition based on bioactive ingredients, around 80% of known are isolated from plants and some specialized molecules are unique from the plant kingdom. Extraction is the crucial first step to separate the desired natural products (molecules, secondary metabolites) from the plant biomass (Adaramola and Onigbinde, 2017; Zhang *et al.,* 2018). The main objective of extraction process is to maximize the amount of target compounds and to obtain the highest biological activity of these extracts. The extraction yield and biological activity of the extracts strongly depends on the extraction method and solvent (Truong *et al.,* 2019).

There are plenty of extraction methods describe for the obtention of bioactive extract from vegetable matrixes. They can be classified as conventional methods (maceration, infusion, percolation, decoction, reflux extraction, soxhlet extraction, solvent- solvent extraction, hydro-distillation, steam distillation) and advanced methods (ultrasound assisted extraction, enzyme-assisted extraction, microwave-assisted extraction, pulsed electric field assisted extraction, supercritical fluid extraction, pressurized liquid extraction and colloid mill-based systems) (Adaramola and Onigbinde, 2017; Zhang *et* al., 2018). Solvent extraction, mainly plant extracts, and distillation, specific for a wide range of essential oils, are the most used in natural products.

(Pandey and Tripathi 2014) described desirable solvent properties to be used in extraction procedures. Most common solvents used for active component extraction are water, ethanol and/or water: ethanol mixtures (hydroalcoholic mixtures), methanol, chloroform, ether, and acetone. These are also used depending on the raw materials and compounds that want to be obtained.

Pesticidal compositions obtained from plants such as family Rosaceae, genus *Prunus* is known from US7,195,788 B2.

### Summary of invention

The present invention solves the following problems: reduction of use of toxic chemical pesticide and the reduction of Maximum Residue Levels (MRL) by means of number of active ingredients detectable.

The present invention is, inter alia, a biopesticide composition for controlling and treating broad spectrum of pests and diseases in plants comprising a *Prunus dulcis* extract and benzyl alcohol used as extraction agent.

Benzyl alcohol is an aromatic alcohol with the formula $CrH_5CH_2OH$. The benzyl group is often abbreviated "Bn", thus benzyl alcohol is denoted as BnOH. Benzyl alcohol is a colourless liquid with a mild pleasant aromatic odour, low toxicity, and low vapor pressure. Benzyl alcohol has moderate solubility in water (4 g/100 mL) and is miscible in

alcohols and diethyl ether. In addition, BnOH is characterised by high-boiling point that allow to be used in high-temperature extraction process. As a consequence, the performance of BnOH used extraction is better that no thermolabile substance.

One aspect of the present invention is a biopesticide composition based on a plant extract and resulting benzyl alcohol of step b) obtained by the following steps:

a. Drying and milling of vegetable matrix
b. Solid-liquid extraction technique from vegetable matrix using benzyl alcohol as extraction solvent.
c. Separation of solid material can be carried out with any process of centrifugation or filtration available in the state of art.

In another aspect, the present invention relates to a biopesticide composition comprising a *P. dulcis* extract, wherein the extraction agent is benzylalcohol or a derivative thereof.

All preferred embodiments disclosed herein, unless explicitly indicated otherwise, are applicable to all aspects of the biopesticide composition, as well as to other aspects of the invention. Accordingly, in a preferred embodiment of this aspect, at least one compound has the formula I

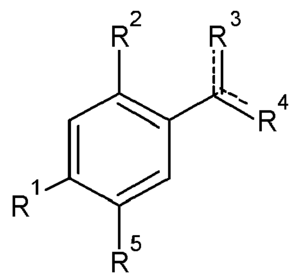

(I),

wherein derivatives suitable in the present application are listed in Table I below.

A vegetable matrix according to the invention preferably denotes any plant material including pure plant parts or a mixture thereof. Plant parts include leaves, stem, roots, fruits, seed, seed shells/hulls and any other plant part.

Vegetable matrix mentioned in the first step can be selected from different species and no limited to *Allium sativum, Aesculus hippocastanum, Arctium lappa, Camellia sinensis, Carum carvi, Centella asiatica, Cinnamomum camphora, Cinnamomum cassia, Cinnamomum verum, Citrus sp., Cymbopogon sp., Cynara scolymus, Equinacea purpura, Eucalyptus sp., Foeniculum vulgare, Illicium verum, Juglans regia, Juniperus communis, Lavandula x intermedia, Linum usitatissimum, Melilotus officinalis, Mentha sp., Olea europaea, Origanum vulgare, Persea americana, Petroselinum crispum, Peumus boldus, Pinus sp., Prunus armeniaca, Prunus avium, Prunus cerasus, Prunus dulcis, Salix sp., Salvia officinalis, Satureja montana, Tanacetum vulgare, Thymus vulgaris, Trigonella foenum-graecum, Urtica dioica and Zingiber officinale.*

It is preferred that the vegetable matrix is based on *P. dulcis,* preferably is almond hulls or almond seed shells, more preferably the mesocarp.

Vegetable material can be employed as powder, essential oil or hydroalcoholic extract.

The type of extraction technique can be selected from the group comprising maceration, percolation, soxhlet, pressurized liquid extraction, microwave-assisted extraction, ultrasound-assisted extraction, and accelerated solvent extraction. The employed technique is preferably maceration, more preferably coupled with recirculation condition, using a multi-function dispersing machine working on the rotor-stator principle.

Benzylalcohol is not a typical extraction solvent, in particular not for plant extracts. In the present invention, the insecticidal activity in plant extracts is increased by the polarity of BnOH that allow to extract a wide range of bioactive metabolites, and affinity of BnOH for them. Resulting a surprisingly composition with double performance; carrier and increasing biocide capacity. Resulting benzyl alcohol used as a solvent in the extraction process acts as a powerful efficiency carrier, not only transporting plant extracts but also the biopesticide composition, allowing to increase the diffusion rate of bioactive molecule across the arthropod's cuticle.

In one preferred embodiment of the present invention, the biopesticide composition further comprises one or more compound of formula:

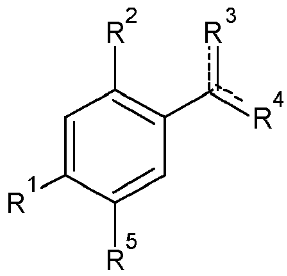

(I)

**TABLE 1: Compounds of formula (I)**

| $R_1$ | $R_2$ | $R_3$ | $R_4$ | $R_5$ |
|---|---|---|---|---|
| -H | -H | -H | -OH | -H |
| -H | -H | -H | -O-CO-CH-(CHs)z | -H |
| -H | -H | -H | $-O-CO-CH(CH_3)-CH_2-CH_3$ | -H |
| -H | -H | -H | $-O-CO-CH_3$ | -H |
| -H | -H | -H | $-O-CO-CH_2-CH_3$ | -H |
| -H | -H | -H | $-O-CO-(CH_2)_2-CH_3$ | -H |
| -H | -H | -H | $-O-CO-(CH_2)_3-CH_3$ | -H |
| -H | -H | -H | $-O-CO-(CH_2)_4-CH_3$ | -H |
| -H | -H | -H | $-O-CO-(CH_2)_5-CH_3$ | -H |
| -H | -H | -H | $-O-CO-(CH_2)_6-CH_3$ | -H |
| -H | -H | -H | $-O-CO-(CH_2)_7-CH_3$ | -H |
| -H | -H | -H | $-O-CO-(CH_2)_8-CH_3$ | -H |
| -H | -H | -H | $-O-CO-(CH_2)_9-CH_3$ | -H |
| -H | -H | -H | $-O-CO-(CH_2)_{10}-CH_3$ | -H |
| -H | -H | -H | $-O-CO-(CH_2)_{11}-CH_3$ | -H |
| -H | -H | -H | $-O-CO-(CH_2)_{12}-CH_3$ | -H |
| -H | -H | -H | $-O-CO-(CH_2)_{13}-CH_3$ | -H |
| -H | -H | -H | $-O-CO-(CH_2)_{14}-CH_3$ | -H |
| -H | -H | -H | $-O-CO-(CH_2)_{15}-CH_3$ | -H |
| -H | -H | -H | $-O-CO-(CH_2)_{16}-CH_3$ | -H |
| -H | -H | -H | $-O-CO-(CH_2)_{17}-CH_3$ | -H |
| -H | -H | -H | $-O-CO-(CH_2)_{18}-CH_3$ | -H |
| -H | -H | -H | $-O-CO-(CH_2)_7-CH=CH-(CH_2)_7-CH_3$ | -H |
| -H | -H | -H | $-O-CO-(CH_2)_7-CH=CH-CH_2-CH=CH-(CH_2)_4-CH_3$ | -H |
| -H | -H | -H | $-O-CO-(CH_2)_7-CH=CH-CH_2-CH=CH-CH_2-CH=CH-CH_2-CH_3$ | -H |
| -H | -H | -H | =O | -H |

(continued)

| $R_1$ | $R_2$ | $R_3$ | $R_4$ | $R_5$ |
|---|---|---|---|---|
| -H | -H | -H | $=CH_2$-CO-$CH_3$ | -H |
| -H | -H | -H | =CH-CO-CH=CH-Phenyl | -H |
| -H | -H | =O | $-CH_3$ | -H |
| -H | -H | =O | -CH=CH-Phenyl | -H |
| -H | -H | =O | -OH | -H |
| -H | -H | =O | -OH | -OH |
| -H | -H | =O | -O-$CH_3$ | -H |
| -H | -H | =O | -O-$CH_2$-$CH_3$ | -H |
| -H | -H | =O | -O-$CH_2$-Phenyl | -H |
| -H | -H | =O | -O-$CH_2$-CH=CH-Phenyl | -H |
| -H | -H | =O | 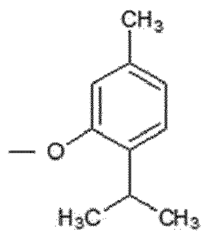 | -H |
| -H | -H | =O | 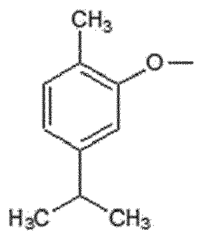 | -H |
| -H | -H | =O | 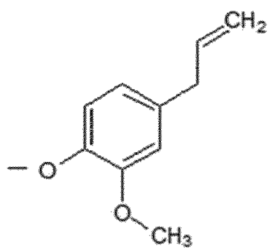 | -H |
| -H | -H | =O | 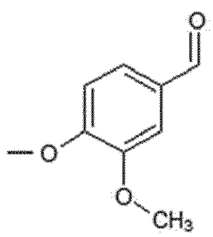 | -H |
| -H | -H | =O | 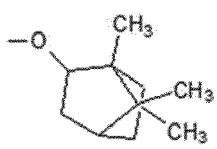 | -H |

(continued)

| $R_1$ | $R_2$ | $R_3$ | $R_4$ | $R_5$ |
|---|---|---|---|---|
| -H | -H | =O | 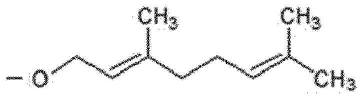 | -H |
| -H | -H | -H | $-NH_2$ | -H |
| -H | -H | -H | -NH-Glycine | -H |
| -H | -H | -H | $-NH-CH_2$-Phenyl | -H |
| -H | -H | -H | $-N-(-CH_2$-Phenyl$)_2$ | -H |
| -H | -H | =O | $-NH_2$ | -H |
| -H | -H | =O | $-NH-CH_2$-Phenyl | -H |
| -H | -H | =O | $-NH-CH=CH-CH_2$-Phenyl | -H |
| -H | -H | =O | $-NH-CH_2-COOH$ | -H |
| -H | -H | =O | -O-CO-Phenyl | -H |
| -H | -H | -H | $=CH-CH_2OH$ | -H |
| -H | -H | -H | =CH-CHO | -H |
| -H | -H | -H | $=CH-CH=CH-CO-CH_3$ | -H |
| -H | -H | -H | =CH-CH=CH-CO-CH=CH-CH=CH-Ph | -H |
| -H | -H | -H | $=C(CH_3)-COOH$ | -H |
| -H | -H | -H | =CH-COOH | -H |
| -H | -H | -H | $=CH-CO-O-CH_3$ | -H |
| -H | -H | -H | $=CH-CO-O-CH_2-CH_3$ | -H |
| -H | -H | -H | $=CH-CO-O-CH_2$-Phenyl | -H |
| -H | -H | -H | $-O-CH_2-CH=CH$-Phenyl | -H |
| -H | -H | -H | 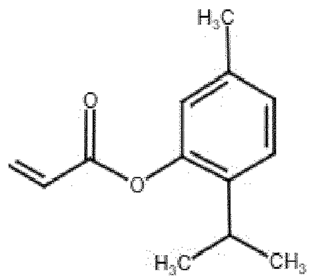 | -H |
| -H | -H | -H | 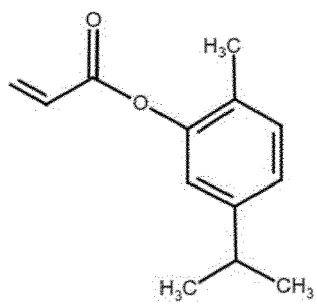 | -H |

(continued)

| $R_1$ | $R_2$ | $R_3$ | $R_4$ | $R_5$ |
|---|---|---|---|---|
| -H | -H | -H | 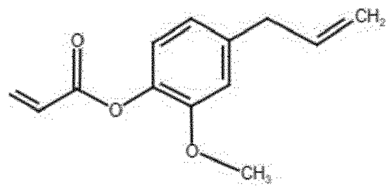 | -H |
| -H | -H | -H | 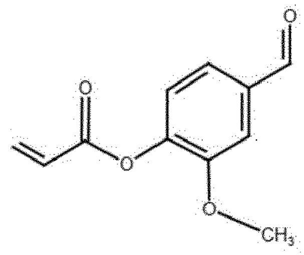 | -H |
| -H | -H | -H | 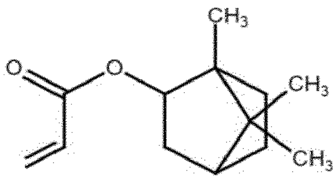 | -H |
| -H | -H | -H | 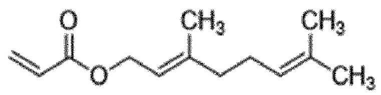 | -H |
| -H | -H | -H | $=CH-CO-NH_2$ | -H |
| -H | -H | -H | $=CH-CO-NH-CH_2$-Phenyl | -H |
| -H | -H | -H | $=CH-CO-NH-CH=CH-CH_2$-Phenyl | -H |
| -H | -H | -H | =CH-CO-NH-Glycine | -H |
| -H | -H | -H | $=CH-CO-NH-CH_2-COOH$ | -H |
| -H | -H | -H | =CH-CO-O-CO-CH=CH-Phenyl | -H |
| $-CH_3$ | -OH | $-CH_3$ | $-CH_3$ | -H |
| $-CH_3$ | -H | $-CH_3$ | $-CH_3$ | -OH |
| $-CH_3$ | $-O-CO-CH_3$ | $-CH_3$ | $-CH_3$ | -H |
| -CH3 | -H | -CH3 | -CH3 | -O-CO-CH3 |
| -CH3 | -O-CH2-COOH | -CH3 | -CH3 | -H |
| -CH3 | -H | -CH3 | -CH3 | -O-CH2-COOH |
| -CH3 | =O | -CH3 | -CH3 | =O |
| -OH | -H | =O | -OH | -H |
| -OH | -H | -H | -OH | -O-CH3 |
| -OH | -H | -H | =O | -O-CH3 |
| -OH | -H | =O | -OH | $-O-CH_3$ |

(continued)

| $R_1$ | $R_2$ | $R_3$ | $R_4$ | $R_5$ |
|---|---|---|---|---|
| $-O-CH_3$ | -H | -H | =O | $-O-CH_3$ |
| $-O-CH_2-CH_3$ | -H | -H | =O | $-O-CH_3$ |
| -O-$CH_2$-Phenyl | -H | -H | =O | $-O-CH_3$ |
| -OH | -H | -H | $=CH-CO-CH_3$ | $-O-CH_3$ |
| -OH | -H | -H | $-CH=CH_2$ | $-O-CH_3$ |
| $-O-CH_3$ | -H | -H | $-CH=CH_2$ | $-O-CH_3$ |
| $-O-CH_2-CH_3$ | -H | -H | $-CH=CH_2$ | $-O-CH_3$ |
| $-O-CO-CH_3$ | -H | -H | $-CH_2=CH_2$ | $-O-CH_3$ |
| -O-$CH_2$-Phenyl | -H | -H | $-CH=CH_2$ | $-O-CH_3$ |
| -H | -OH | =O | -OH | -H |
| -H | -OH | -H | =O | -H |
| -H | -OH | =O | $-O-CH_3$ | -H |
| -H | -OH | =O | $-O-CH_2-CH_3$ | -H |
| -H | -OH | =O | -O-$CH_2$-Phenyl | -H |
| -H | -H | -H | $=CH-CH_2-O-CO-CH-(CH_3)_2$ | -H |
| -H | -H | -H | $=CH-CH_2-O-CO-CH(CH_3)-CH_2-CH_3$ | -H |
| -H | -H | -H | $=CH-CH_2-O-CO-CH_3$ | -H |
| -H | -H | -H | $=CH-CH_2-O-CO-CH_2-CH_3$ | -H |
| -H | -H | -H | $=CH-CH_2-O-CO-(CH_2)_2-CH_3$ | -H |
| -H | -H | -H | $=CH-CH_2-O-CO-(CH_2)_3-CH_3$ | -H |
| -H | -H | -H | $=CH-CH_2-O-CO-(CH_2)_4-CH_3$ | -H |
| -H | -H | -H | $=CH-CH_2-O-CO-(CH_2)_5-CH_3$ | -H |
| -H | -H | -H | $=CH-CH_2-O-CO-(CH_2)_6-CH_3$ | -H |
| -H | -H | -H | $=CH-CH_2-O-CO-(CH_2)_7-CH_3$ | -H |
| -H | -H | -H | $=CH-CH_2-O-CO-(CH_2)_8-CH,$ | -H |
| -H | -H | -H | $=CH-CH_2-O-CO-(CH_2)_9-CH_3$ | -H |
| -H | -H | -H | $=CH-CH_2-O-CO-(CH_2)_{10}-CH_3$ | -H |
| -H | -H | -H | $=CH-CH_2-O-CO-(CH_2)_{11}-CH_3$ | -H |
| -H | -H | -H | $=CH-CH_2-O-CO-(CH_2)_{12}-CH_3$ | -H |
| -H | -H | -H | $=CH-CH_2-O-CO-(CH_2)_{13}-CH_3$ | -H |
| -H | -H | -H | $=CH-CH_2-O-CO-(CH_2)_{14}-CH_3$ | -H |
| -H | -H | -H | $=CH-CH_2-O-CO-(CH_2)_{15}-CH_3$ | -H |

(continued)

| $R_1$ | $R_2$ | $R_3$ | $R_4$ | $R_5$ |
|---|---|---|---|---|
| -H | -H | -H | $=CH-CH_2-O-CO-(CH_2)_{16}-CH_3$ | -H |
| -H | -H | -H | $=CH-CH_2-O-CO-(CH_2)_{17}-CH_3$ | -H |
| -H | -H | -H | $=CH-CH_2-O-CO-(CH_2)_{18}-CH_3$ | -H |
| -H | -H | -H | $=CH-CH_2-O-CO-(CH_2)_7-CH=CH-(CH_2)_7-CH_3$ | -H |
| -H | -H | -H | $=CH-CH_2-O-CO-(CH_2)_7-CH=CH-CH_2-CH=CH-(CH_2)_4-CH_3$ | -H |
| -H | -H | -H | $=CH-CH_2-O-CO-(CH_2)_7-CH=CH-CH_2-CH=CH-$ $CH_2-CH=CH-CH_2-CH_3$ | -H |
| -OH | -H | -H | =CH-COOH | -OH |
| -OH | -H | -H | =CH-CO-O-CHz-Phenyl | -OH |
| -OH | -H | -H | =CH-CO-Phenyl | -H |
| -H | -OH | -H | =CH-CO-Phenyl | -H |
| -H | -H | -H | =CH-CO-Phenyl | -OH |
| -OH | -H | -H | =CH-COOH | -H |
| -H | -OH | -H | =CH-COOH | -H |
| -H | -H | -H | =CH-COOH | -OH |
| $-O-CO-CH_3$ | -H | -H | =CH-COOH | -H |
| -H | $-O-CO-CH_3$ | -H | =CH-COOH | -H |
| -H | -H | -H | =CH-COOH | $-O-CO-CH_3$ |
| $-CH_3$ | -H | =O | $-CH_3$ | -H |
| $-NH_2$ | -H | =O | -OH | -H |
| $-CH-(CH_3)_2$ | -H | -H | -CHz-OH | -H |
| $-CH-(CH_3)_2$ | -H | -H | -CH=O | -H |
| $-CH-(CH_3)_2$ | -H | -H | -COOH | -H |
| $-CH-(CH_3)_2$ | -H | -H | $-O-CO-CH_3$ | -H |
| -H | -H | -H | $-CH_2-OH$ | -H |
| -H | -H | -H | -CHO | -H |
| -H | -H | -H | -COOH | -H |
| -H | -H | -H | $-CH_2-O-CO-CH_3$ | -H |
| -H | -H | -H | $-CH_2-O-CO-CH_2-CH_3$ | -H |
| -H | -H | -H | $-CH_2-O-CO-(CH_2)_2-CH_3$ | -H |
| -H | -H | -H | $-CH_2-O-CO-(CH_2)_3-CH_3$ | -H |
| -H | -H | -H | $-CH_2-O-CO-(CH_2)_4-CH_3$ | -H |
| -H | -H | -H | $-CH_2-O-CO-(CH_2)_5-CH_3$ | -H |
| -H | -H | -H | $-CH_2-O-CO-(CH_2)_6-CH_3$ | -H |
| -H | -H | -H | $-CH_2-O-CO-(CH_2)_7-CH_3$ | -H |

(continued)

| $R_1$ | $R_2$ | $R_3$ | $R_4$ | $R_5$ |
|---|---|---|---|---|
| -H | -H | -H | $-CH_2-O-CO-(CH_9)_8-CH_3$ | -H |
| -H | -H | -H | $-CH_2-O-CO-(CH_2)_9-CH_3$ | -H |
| -H | -H | -H | $-CH_2-O-CO-(CH_2)_{10}-CH_3$ | -H |
| -H | -H | -H | $-CH_2-O-CO-(CH_2)_{11}-CH_3$ | -H |
| -H | -H | -H | $-CH_2-O-CO-(CH_2)_{12}-CH_3$ | -H |
| -H | -H | -H | $-CH_2-O-CO-(CH_2)_{13}-CH_3$ | -H |
| -H | -H | -H | $-CH_2-O-CO-(CH_2)_{14}-CH_3$ | -H |
| -H | -H | -H | $-CH_2-O-CO-(CH_2)_{15}-CH_3$ | -H |
| -H | -H | -H | $-CH_2-O-CO-(CH_2)_{16}-CH_3$ | -H |
| -H | -H | -H | $-CH_2-O-CO-(CH_2)_{17}-CH_3$ | -H |
| -H | -H | -H | $-CH_2-O-CO-(CH_2)_{18}-CH_3$ | -H |
| -H | -H | -H | $-CH_2-O-CO-(CH_2)_7-CH=CH-(CH_2)_7-CH_3$ | -H |
| -H | -H | -H | $-CH_2-O-CO-(CH_2)_7-CH=CH-CH_2-CH=CH-(CH_2)_4-CH_3$ | -H |
| -H | -H | -H | $-CH_2-O-CO-(CH_2)_7-CH=CH-CH_2-CH=CH-CH_2-CH=CH-CH_2-CH_3$ | -H |
| -H | -OH | -H | -OH | -H |
| -H | -OH | =O | 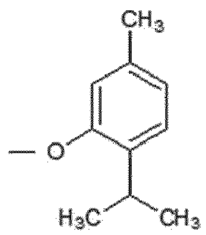 | -H |
| -H | -OH | =O | 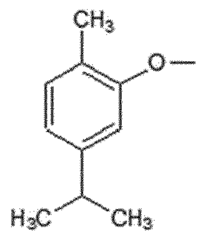 | -H |
| -H | -OH | =O | 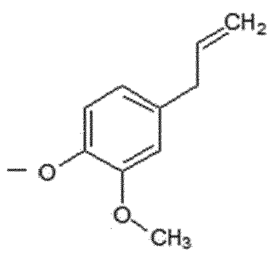 | -H |

(continued)

| $R_1$ | $R_2$ | $R_3$ | $R_4$ | $R_5$ |
|---|---|---|---|---|
| -H | -OH | =O | 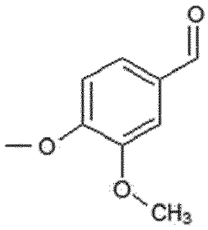 | -H |

In other words, where the extraction agent is e.g. benzylalcohol, the composition according to the present invention may further comprise an agent falling within Formula I which is not benzyl alcohol.

It is preferred that the extraction agent is benzyl alcohol.

In a preferred embodiment, the biopesticide composition according to the invention comprises said extraction agent. In other words, in this preferred embodiment, the extractant is not or not completely removed after completion of the extraction process.

In a more preferred embodiment, the concentration of extractant in said biopesticide composition is at least 5 w/v. %, more preferably at least 10w/v%, even more preferably between 8 and 20 w/v%. These preferred values and ranges apply to those embodiments of the biopesticide composition according to the invention that comprise at least one more active ingredient and/or formulant as will be described further below.

In an alternative more preferred embodiment, the concentration of extractant in said biopesticide composition is at least 30%, at least 40% or at least 50%. Even more preferably, the concentration of benzylalcohol is at least 60 w/v. %, at least 70 w/v. % or even at least 80 w/v.%. In this alternative, it is most preferred that the concentration of benzylalcohol is in the range of between 80 and 90w/v%, such as any number in between this range, such as 80, 81, 82, 83, 84, 85, 86, 87, 88, 89 or 90 w/v. %. These preferred numbers and ranges apply to those embodiments of the biopesticide composition according to the invention that essentially consist of only the P. *dulcis* extract and benzylalcohol. Further, where formulations according to the invention are disclosed, these preferred numbers and ranges serve to characterize the P. *dulcis* extract in benzylalcohol serving as ingredient of such formulation.

In another preferred embodiment of the present invention, the biopesticide composition further comprises at least one pure compound that is preferably an active ingredient. Such further active ingredient may be active against any one of plant pests and diseases. It is preferred that any further active ingredient is pesticidal active. The at least one pure compound/active ingredient may be selected from a group comprising borneol, bornyl acetate, carvone, Y-cadinene, camphene, caryophyllene, citronellal, citronellol, coumarin, 4-methyl-coumarin, dihydromyrcenol, decanal, dihydrocarvone, epoxycarvone, epoxygeranial, farnesol, farnesal, felandrene, fenchone, geranial- citral A-, citronellic acid, geraniol, geranic acid, geranyl acetate, germacrene, 1,4 cineol, 2-heptanone, isocitronellene, D-limonene, linalol, longifolene, menthol, menthyl acetate, ρ-menthane-3,8-diol, p-mentha-1(7),8-diene, methylcinnamate, myrcene, neral-citral B-, nerol, nerolidol, neryl acetate, α- ocimene, octanal, 1- octanol, α- pinene, β-pinene, terpinene, terpineol, terpinolene and 3-trans-5-cis-pseudoionone.

Geranial-citral A and neral-citral B are the two isomers comprised in citral as also comprised in the biopesticide composition according to Example 3.

In a more preferred embodiment, said at least one further active ingredient is citral and/or methylcinnamate. It is even more preferred that the composition comprises both citral and methylcinnamate.

The present invention also relates to a biopesticide composition comprising (a) a P. *dulcis* extract, preferably extracted using benzylalcohol; (b) citral; and (c) methylcinnamate.

It has been surprisingly found in the present invention that a combination of ingredients (a), (b) and (c) exert a superior activity against insect pests, as shown in the examples.

In yet another preferred embodiment of the biopesticide composition of the invention, the biopesticide composition further comprises at least one essential oil and/or isomeric mixtures. Non-limiting examples of such essential oils or isomeric mixtures are selected from a group comprising *Cinnamomun* sp., *Citrus* sp., *Cuminum* sp., *Cymbopogon* sp., *Eucalyptus* sp., *Geranium* sp., *Mentha* sp., *Origanum* sp., *Pelargonium* sp., *Pinus* sp., *Rosmarinus* sp., *Satureja* sp., *Salvia* sp. *and Thymus* sp.

In yet another preferred embodiment of the present invention, the biopesticide composition further comprises at least one inert ingredient. In connection with the present invention, this term relates to common formulation aids that do not themselves exert any activity. Such inert ingredients may be one or more selected from carriers, surfactants, emulsifiers, wetting additives, solvents, adjuvants, and stabilizers.

A surfactant can be an ionic (cationic or anionic), amphoteric or non-ionic surfactant, such as ionic or non-ionic emulsifier(s), foam former(s), dispersant(s), wetting agent(s), penetration enhancer(s) and any mixtures thereof. Examples of suitable surfactants include, but are not limited to, sulfates (such as alkyl sulfates and alkyl ether sulfates), polyalkylene glycol ethers, siloxanes including modified siloxanes, for example polyoxyethylene-modified siloxanes, such as polyoxyethylene-modified polydimethyl-siloxane, polyether-modified trisiloxane or also polysiloxanes; protein hydrolysates, lignosulfite waste liquors and methylcellulose. Any reference to salts in this paragraph refers preferably to the respective alkali, alkaline earth and ammonium salts.

Preferred surfactants are selected from polyoxyethylene fatty alcohol ethers, polyoxyethylene fatty acid esters, such as castor oil ethoxylate or polyoxyehtylene sorbitan monooleate, alkylbenzene sulfonates, such as calcium dodecylbenzenesulfonate, castor oil ethoxylate, sodium lignosulfonate, polyalkylene glycol ethers, siloxanes including modified siloxanes, for example polyoxyethylene-modified siloxanes, such as polyoxyethylene-modified polydimethylsiloxane, polyether-modified trisiloxane or also polysiloxanes, and arylphenol ethoxylates, such as tristyrylphenol ethoxylate.

Especially preferred are polyalkylene glycol ethers (available e.g. as ATLAS G5002L), siloxanes including modified siloxanes, for example polyoxyethylene-modified siloxanes, such as polyoxyethylene-modified polydimethylsiloxane (available e.g. as Xiameter OFX5211), polyether-modified trisiloxane (available e.g. as BreakThru S301) or also polysiloxanes, such as organically modified polysiloxanes (available e.g. as Modarez SW452).

A preferred formulation comprises at least one, at least two, at least three or all of polyoxyethylene-modified polydimethyl-siloxane (e.g. Xiameter OFX5211), polyether-modified trisiloxane (e.g. BreakThru S301) and organically modified polysiloxanes (e.g. Modarez SW452) and optionally in addition polyalkylene glycol ether (available e.g. as ATLAS G5002L). Such formulation preferably does not comprise water.

The concentration of surfactants typically ranges from 0.5 to 10%, for example 0.5 to 5%, by weight of the composition for ready-to-use diluted compositions. The present biopesticide composition in undiluted form (that is preferably essentially free of water) may comprise between 10% and up to 58%, preferably up to 50%, more preferably up to 40%, such as between 30% and 40%.

Suitable extenders are, for example, water, polar and nonpolar organic chemical liquids, for example from the classes of the aromatic and non-aromatic hydrocarbons (such as paraffins, alkylbenzenes, alkylnaphthalenes, chlorobenzenes), , the ketones (such as acetone, cyclohexanone), , the substituted amines, lactams (such as N-alkylpyrrolidones) and lactones, the sulphones and sulphoxides (such as dimethyl sulphoxide).

Further auxiliaries that may be present in the formulations and in the application forms derived from them include colorants such as inorganic pigments, examples being iron oxide, titanium oxide, Prussian Blue, and organic dyes, such as alizarin dyes, azo dyes and metal phthalocyanine dyes, and nutrients and trace nutrients, such as salts of iron, manganese, boron, copper, cobalt, molybdenum and zinc.

Stabilizers, such as low-temperature stabilizers, preservatives, antioxidants, light stabilizers or other agents which improve chemical and/or physical stability may also be present. Additionally present may be foam-formers or defoamers.

Furthermore, the formulations and application forms derived from them may also comprise, as additional auxiliaries, stickers such as carboxymethylcellulose, natural and synthetic polymers in powder or granule form, such as polyvinyl alcohol, polyvinyl acetate, and also natural phospholipids, such as cephalins and lecithins, and synthetic phospholipids.

There may possibly be further auxiliaries present in the formulations and the application forms derived from them. Examples of such additives include fragrances, protective colloids, binders, adhesives, thickeners, thixotropic substances, penetrants, retention promoters, stabilizers, sequestrants, complexing agents, humectants and spreaders. Generally speaking, the active compounds may be combined with any solid or liquid additive commonly used for formulation purposes.

Suitable retention promoters include all those substances which increase the viscoelasticity, such as hydroxypropylguar polymers, for example.

Suitable penetrants in the present context include all those substances which are typically used in order to enhance the penetration of active agrochemical compounds into plants. Penetrants in this context are defined in that, from the (generally aqueous) application liquor and/or from the spray coating, they are able to penetrate the cuticle of the plant and thereby increase the mobility of the active compounds in the cuticle. This property can be determined using the method described in the literature (Baur et al., 1997, Pesticide Science 51, 131-152). Examples include fatty amine alkoxylates such as tallowamine ethoxylate (15), or ammonium and/or phosphonium salts such as ammonium sulphate or diammonium hydrogen phosphate, for example.

In a more preferred embodiment, the biopesticide composition according to the invention comprises 25 to 40 % *P. dulcis* extract in benzylalcohol, 10 to 20 % citral, 7 to 18 % methyl cinnamate and 22 to 58 % inert ingredients.

In a preferred embodiment, the biopesticide composition according to the invention is obtainable or obtained from a process comprising:

(a) Drying and milling a vegetable matrix that is preferably P. dulcis almond hulls or seed shells, more preferably the mesocarp;

(b) Applying a solid-liquid extraction technique using benzyl alcohol or a derivative thereof as extraction agent;

(c) Separating the solid material thereby obtaining a liquid composition.

Solid-liquid extraction techniques are standard and well-known in the art. Exemplary techniques that may be used in the process according to the invention include wherein step b) is selected from the types of techniques comprising maceration, percolation, Soxhlet, pressurized liquid extraction, microwave-assisted extraction, ultrasound-assisted extraction, and accelerated solvent extraction. It is preferred that the extraction technique is maceration. One specific example for such technique is given in Example 1.

Separation techniques are well-known in the art and include centrifugation and filtration. It is preferred that the separation according to the invention takes place via filtration.

The present invention in addition relates to a method for controlling and treating broad spectrum of pests, as arthropods in all its life cycle, and diseases caused by fungi in plants.

Further, the present invention relates to a method for controlling and treating at least one plant pest or plant disease and/or for reducing overall damage of plants and plant parts as well as losses in harvested fruits or vegetables caused by plant pests and/or plant diseases comprising applying an effective amount of the biopesticide composition according to the present invention or a biopesticide composition obtained by the method of the present invention to a plant, plant part, seed or locus where said plant or seed in intended to be grown.

The biopesticide composition according to the present invention may be used as pesticide. It is active against normally sensitive and resistant species and against all or some stages of development. Pests include:

Pests from the phylum of the Arthropoda, in particular from the class of the Arachnida, for example *Acarus spp.,* for *example Acarus siro, Aceria kuko, Aceria sheldoni, Aculops spp., Aculus spp.,* for example *Aculus fockeui, Aculus schlechtendali, Amblyomma spp., Amphitetranychus viennensis, Argas spp., Boophilus spp., Brevipalpus spp.,* for example *Brevipalpus phoenicis, Bryobia graminum, Bryobia praetiosa, Centruroides spp., Chorioptes spp., Dermanyssus gallinae, Dermatophagoides pteronyssinus, Dermatophagoides farinae, Dermacentor spp., Eotetranychus spp.,* for example *Eotetranychus hicoriae, Epitrimerus pyri, Eutetranychus spp.,* for example *Eutetranychus banksi, Eriophyes spp.,* for example *Eriophyes pyri, Glycyphagus domesticus, Halotydeus destructor, Hemitarsonemus spp.,* for example *Hemitarsonemus latus (=Polyphagotarsonemus latus), Hyalomma spp., Ixodes spp., Latrodectus spp., Loxosceles spp., Neutrombicula autumnalis, Nuphersa spp., Oligonychus spp.,* for example *Oligonychus coffeae, Oligonychus coniferarum, Oligonychus ilicis, Oligonychus indicus, Oligonychus mangiferus, Oligonychus pratensis, Oligonychus punicae, Oligonychus yothersi, Ornithodorus spp., Ornithonyssus spp., Panonychus spp.,* for example *Panonychus citri (=Metatetranychus citri), Panonychus ulmi (=Metatetranychus ulmi), Phyllocoptruta oleivora, Platytetranychus multidigituli, Polyphagotarsonemus latus, Psoroptes spp., Rhipicephalus spp., Rhizoglyphus spp., Sarcoptes spp., Scorpio maurus, Steneotarsonemus spp., Steneotarsonemus spinki, Tarsonemus spp.,* for example *Tarsonemus confusus, Tarsonemus pallidus, Tetranychus spp.,* for example *Tetranychus canadensis, Tetranychus cinnabarinus, Tetranychus turkestani, Tetranychus urticae, Trombicula alfreddugesi, Vaejovis spp., Vasates lycopersici;*

from the class of the *Chilopoda,* for example *Geophilus spp., Scutigera spp.;*

from the order or the class of the *Collembola,* for example *Onychiurus armatus; Sminthurus viridis;*

from the class of the *Diplopoda,* for example *Blaniulus guttulatus;*

from the class of the *Insecta,* for example from the order of the *Blattodea,* for example *Blatta orientalis, Blattella asahinai, Blattella germanica, Leucophaea maderae, Loboptera decipiens, Neostylopyga rhombifolia, Panchlora spp., Parcoblatta spp., Periplaneta spp.,* for example *Periplaneta americana, Periplaneta australasiae, Pycnoscelus surinamensis, Supella longipalpa;*

from the order of the *Coleoptera,* for example *Acalymma vittatum, Acanthoscelides obtectus, Adoretus spp., Aethina tumida, Agelastica alni, Agrilus spp., for example Agrilus planipennis, Agrilus coxalis, Agrilus bilineatus, Agrilus anxius, Agriotes spp.,* for example *Agriotes linneatus, Agriotes mancus, Alphitobius diaperinus, Amphimallon solstitialis, Anobium punctatum, Anoplophora spp.,* for example *Anoplophora glabripennis, Anthonomus spp.,* for example *Anthonomus grandis or Anthonomus rubi, Anthrenus spp., Apion spp., Apogonia spp., Atomaria spp.,* for

example *Atomaria linearis, Attagenus spp., Baris caerulescens, Bruchidius obtectus, Bruchus spp.,* for example *Bruchus pisorum, Bruchus rufimanus, Cassida spp., Cerotoma trifurcata, Ceutorrhynchus spp.,* for example *Ceutorrhynchus assimilis, Ceutorrhynchus quadridens, Ceutorrhynchus rapae, Chaetocnema spp.,* for example *Chaetocnema confinis, Chaetocnema denticulata, Chaetocnema ectypa, Cleonus mendicus, Conoderus spp., Cosmopolites spp.,* for example *Cosmopolites sordidus, Costelytra zealandica, Ctenicera spp., Curculio spp.,* for example *Curculio caryae, Curculio caryatrypes,Curculio obtusus, Curculio sayi, Cryptolestes ferrugineus, Cryptolestes pusillus, Cryptorhynchus lapathi, Cryptorhynchus mangiferae, Cylindrocopturus spp., Cylindrocopturus adspersus, Cylindrocopturus furnissi, Dendroctonus spp., for example Dendroctonus ponderosae, Dermestes spp., Diabrotica spp.,* for *example Diabrotica balteata, Diabrotica barberi, Diabrotica undecimpunctata howardi, Diabrotica undecimpunctata undecimpunctata, Diabrotica virgifera virgifera, Diabrotica virgifera zeae, Dichocrocis spp., Dicladispa armigera, Diloboderus spp., Epicaerus spp., Epilachna spp.,* for example *Epilachna borealis, Epilachna varivestis, Epitrix spp.,* for example *Epitrix cucumeris, Epitrix fuscula, Epitrix hirtipennis, Epitrix subcrinita, Epitrix tuberis, Faustinus spp., Gibbium psylloides, Gnathocerus cornutus, Hellula undalis, Heteronychus arator, Heteronyx spp., Hylamorpha elegans, Hylotrupes bajulus, Hypera postica, Hypomeces squamosus, Hypothenemus spp.,* for *example Hypothenemus hampei, Hypothenemus obscurus, Hypothenemus pubescens, Lachnosterna consanguinea, Lasioderma serricorne, Latheticus oryzae, Lathridius spp., Lema spp., Leptinotarsa decemlineata, Leucoptera spp.,* for example *Leucoptera coffeella, Limonius ectypus, Lissorhoptrus oryzophilus, Listronotus (= Hyperodes) spp., Lixus spp., Luperodes spp., Luperomorpha xanthodera, Lyctus spp., Megacyllene spp.,* for example *Megacyllene robiniae, Megascelis spp., Melanotus spp., for example Melanotus longulus oregonensis, Meligethes aeneus, Melolontha spp.,* for example *Melolontha melolontha, Migdolus spp., Monochamus spp., Naupactus xanthographus, Necrobia spp., Neogalerucella spp., Niptus hololeucus, Oryctes rhinoceros, Oryzaephilus surinamensis, Oryzaphagus oryzae, Otiorhynchus spp.,* for example *Otiorhynchus cribricollis, Otiorhynchus ligustici, Otiorhynchus ovatus, Otiorhynchus rugosostriarus, Otiorhynchus sulcatus, Oulema spp.,* for example *Oulema melanopus, Oulema oryzae, Oxycetonia jucunda, Phaedon cochleariae, Phyllophaga spp., Phyllophaga helleri, Phyllotreta spp., for example Phyllotreta armoraciae, Phyllotreta pusilla, Phyllotreta ramosa, Phyllotreta striolata, Popillia japonica, Premnotrypes spp., Prostephanus truncatus, Psylliodes spp.,* for example *Psylliodes affinis, Psylliodes chrysocephala, Psylliodes punctulata, Ptinus spp., Rhizobius ventralis, Rhizopertha dominica, Rhynchophorus spp., Rhynchophorus ferrugineus, Rhynchophorus palmarum, Scolytus spp.,* for example *Scolytus multistriatus, Sinoxylon perforans, Sitophilus spp., for example Sitophilus granarius, Sitophilus linearis, Sitophilus oryzae, Sitophilus zeamais, Sphenophorus spp., Stegobium paniceum, Sternechus spp.,* for example *Sternechus paludatus, Symphyletes spp., Tanymecus spp.,* for example *Tanymecus dilaticollis, Tanymecus indicus, Tanymecus palliatus, Tenebrio molitor, Tenebrioides mauretanicus, Tribolium spp.,* for example *Tribolium audax, Tribolium castaneum, Tribolium confusum, Trogoderma spp., Tychius spp., Xylotrechus spp., Zabrus spp.,* for example *Zabrus tenebrioides*;

from the order of the Dermaptera, for example *Anisolabis maritime, Forficula auricularia, Labidura riparia;*

from the order of the Diptera, for example *Aedes spp.,* for example *Aedes aegypti, Aedes albopictus, Aedes sticticus, Aedes vexans, Agromyza spp.,* for example *Agromyza frontella, Agromyza parvicornis, Anastrepha spp., Anopheles spp.,* for example *Anopheles quadrimaculatus, Anopheles gambiae, Asphondylia spp., Bactrocera spp.,* for example *Bactrocera cucurbitae, Bactrocera dorsalis, Bactrocera oleae, Bibio hortulanus, Calliphora erythrocephala, Calliphora vicina, Ceratitis capitata, Chironomus spp., Chrysomya spp., Chrysops spp., Chrysozona pluvialis, Cochliomya spp., Contarinia spp.,* for example *Contarinia johnsoni, Contarinia nasturtii, Contarinia pyrivora, Contarinia schulzi, Contarinia sorghicola, Contarinia tritici,Cordylobia anthropophaga, Cricotopus sylvestris, Culex spp.,* for example *Culex pipiens, Culex quinquefasciatus, Culicoides spp., Culiseta spp., Cuterebra spp., Dacus oleae, Dasineura spp.,* for example *Dasineura brassicae, Delia spp.,* for example *Delia antiqua, Delia coarctata, Delia florilega, Delia platura, Delia radicum, Dermatobia hominis, Drosophila spp.,* for example *Drosphila melanogaster, Drosophila suzukii, Echinocnemus spp., Euleia heraclei, Fannia spp., Gasterophilus spp., Glossina spp., Haematopota spp., Hydrellia spp., Hydrellia griseola, Hylemya spp., Hippobosca spp., Hypoderma spp., Liriomyza spp.,* for example *Liriomyza brassicae, Liriomyza huidobrensis, Liriomyza sativae, Lucilia spp.,* for example *Lucilia cuprina, Lutzomyia spp., Mansonia spp., Musca spp., for example Musca domestica, Musca domestica vicina, Oestrus spp., Oscinella frit, Paratanytarsus spp., Paralauterborniella subcincta, Pegomya or Pegomyia spp.,* for example *Pegomya betae, Pegomya hyoscyami, Pegomya rubivora, Phlebotomus spp., Phorbia spp., Phormia spp., Piophila casei, Platyparea poeciloptera, Prodiplosis spp., Psila rosae, Rhagoletis spp.,* for example *Rhagoletis cingulata, Rhagoletis completa, Rhagoletis fausta, Rhagoletis indifferens, Rhagoletis mendax, Rhagoletis pomonella, Sarcophaga spp., Simulium spp.,* for example *Simulium meridionale, Stomoxys spp., Tabanus spp., Tetanops spp., Tipula spp.,* for example *Tipula paludosa, Tipula simplex, Toxotrypana curvicauda;*

from the order of the *Hemiptera,* for example *Acizzia acaciaebaileyanae, Acizzia dodonaeae, Acizzia uncatoides,*

*Acrida turrita, Acyrthosipon spp.,* for example *Acyrthosiphon pisum, Acrogonia spp., Aeneolamia spp., Agonoscena spp., Aleurocanthus spp., Aleyrodes proletella, Aleurolobus barodensis, Aleurothrixus floccosus, Allocaridara malayensis, Amrasca spp.,* for example *Amrasca bigutulla, Amrasca devastans, Anuraphis cardui, Aonidiella spp.,* for example *Aonidiella aurantii, Aonidiella citrina, Aonidiella inornata, Aphanostigma piri, Aphis spp.,* for example *Aphis citricola, Aphis craccivora, Aphis fabae, Aphis forbesi, Aphis glycines, Aphis gossypii, Aphis hederae, Aphis illinoisensis, Aphis middletoni, Aphis nasturtii, Aphis nerii, Aphis pomi, Aphis spiraecola, Aphis viburniphila, Arboridia apicalis, Arytainilla spp., Aspidiella spp., Aspidiotus spp.,* for example *Aspidiotus nerii, Atanus spp., Aulacorthum solani, Bemisia tabaci, Blastopsylla occidentalis, Boreioglycaspis melaleucae, Brachycaudus helichrysi, Brachycolus spp., Brevicoryne brassicae, Cacopsylla spp.,* for example *Cacopsylla pyricola, Calligypona marginata, Capulinia spp., Carneocephala fulgida, Ceratovacuna lanigera, Cercopidae, Ceroplastes spp., Chaetosiphon fragaefolii, Chionaspis tegalensis, Chlorita onukii, Chondracris rosea, Chromaphis juglandicola, Chrysomphalus aonidum, Chrysomphalus ficus, Cicadulina mbila, Coccomytilus halli, Coccus spp.,* for example *Coccus hesperidum, Coccus longulus, Coccus pseudomagnoliarum, Coccus viridis, Cryptomyzus ribis, Cryptoneossa spp., Ctenarytaina spp., Dalbulus spp., Dialeurodes chittendeni, Dialeurodes citri, Diaphorina citri, Diaspis spp., Diuraphis spp., Doralis spp., Drosicha spp., Dysaphis spp.,* for example *Dysaphis apiifolia, Dysaphis plantaginea, Dysaphis tulipae, Dysmicoccus spp., Empoasca spp.,* for example *Empoasca abrupta, Empoasca fabae, Empoasca maligna, Empoasca solana, Empoasca stevensi, Eriosoma spp.,* for example *Eriosoma americanum, Eriosoma lanigerum, Eriosoma pyricola, Erythroneura spp., Eucalyptolyma spp., Euphyllura spp., Euscelis bilobatus, Ferrisia spp., Fiorinia spp., Furcaspis oceanica, Geococcus coffeae, Glycaspis spp., Heteropsylla cubana, Heteropsylla spinulosa, Homalodisca coagulata, Hyalopterus arundinis, Hyalopterus pruni, Icerya spp.,* for example *Icerya purchasi, Idiocerus spp., Idioscopus spp., Laodelphax striatellus, Lecanium spp., for example Lecanium corni (=Parthenolecanium corni), Lepidosaphes spp.,* for example *Lepidosaphes ulmi, Lipaphis eηsimi, Lopholeucaspis japonica, Lycorma delicatula, Macrosiphum spp.,* for example *Macrosiphum euphorbiae, Macrosiphum lilii, Macrosiphum rosae, Macrosteles facifrons, Mahanarva spp., Melanaphis sacchari, Metcalfiella spp., Metcalfa pruinosa, Metopolophium dirhodum, Monellia costalis, Monelliopsis pecanis, Myzus spp.,* for example *Myzus ascalonicus, Myzus cerasi, Myzus ligustri, Myzus ornatus, Myzus persicae,. Myzus nicotianae, Nasonovia ribisnigri, Neomaskellia spp., Nephotettix spp.,* for example *Nephotettix cincticeps, Nephotettix nigropictus, Nettigoniclla spectra, Nilaparvata lugens, Oncometopia spp., Orthezia praelonga, Oxya chinensis, Pachypsylla spp., Parabemisia myricae, Paratrioza spp.,* for example *Paratrioza cockerelli, Parlatoria spp., Pemphigus spp.,* for example *Pemphigus bursarius, Pemphigus populivenae, Peregrinus maidis, Perkinsiella spp., Phenacoccus spp.,* for example *Phenacoccus madeirensis, Phloeomyzus passerinii, Phorodon humuli, Phylloxera spp.,* for example *Phylloxera devastatrix, Phylloxera notabilis, Pinnaspis aspidistrae, Planococcus spp.,* for example *Planococcus citri, Prosopidopsylla flava, Protopulvinaria pyriformis, Pseudaulacaspis pentagona, Pseudococcus spp.,* for example *Pseudococcus calceolariae, Pseudococcus comstocki, Pseudococcus longispinus, Pseudococcus maritimus, Pseudococcus viburni, Psyllopsis spp., Psylla spp.,* for example *Psylla buxi, Psylla mali, Psylla pyri, Pteromalus spp., Pulvinaria spp., Pyrilla spp., Quadraspidiotus spp.,* for example *Quadraspidiotus juglansregiae, Quadraspidiotus ostreaeformis, Quadraspidiotus perniciosus, Quesada gigas, Rastrococcus spp., Rhopalosiphum spp.,* for example *Rhopalosiphum maidis, Rhopalosiphum oxyacanthae, Rhopalosiphum padi, Rhopalosiphum rufiabdominale, Saissetia spp.,* for example *Saissetia coffeae, Saissetia miranda, Saissetia neglecta, Saissetia oleae, Scaphoideus titanus, Schizaphis graminum, Selenaspidus articulatus, Sipha flava, Sitobion avenae, Sogata spp., Sogatella furcifera, Sogatodes spp., Stictocephala festina, Siphoninus phillyreae, Tenalaphara malayensis, Tetragonocephela spp., Tinocallis caryaefoliae, Tomaspis spp., Toxoptera spp.,* for example *Toxoptera aurantii, Toxoptera citricidus, Trialeurodes vaporariorum, Trioza spp.,* for example *Trioza diospyri, Typhlocyba spp., Unaspis spp., Viteus vitifolii, Zygina spp.;*

from the suborder of the *Heteroptera,* for example *Aelia spp., Anasa tristis, Antestiopsis spp., Boisea spp., Blissus spp., Calocoris spp., Campylomma livida, Cavelerius spp., Cimex spp.,* for example *Cimex adjunctus, Cimex hemipterus, Cimex lectularius, Cimex pilosellus, Collaria spp., Creontiades dilutus, Dasynus piperis, Dichelops furcatus, Diconocoris hewetti, Dysdercus spp., Euschistus spp.,* for example *Euschistus heros, Euschistus servus, Euschistus tristigmus, Euschistus variolarius, Eurydema spp., Eurygaster spp., Halyomorpha halys, Heliopeltis spp., Horcias nobilellus, Leptocorisa spp., Leptocorisa varicornis, Leptoglossus occidentalis, Leptoglossus phyllopus, Lygocoris spp.,* for example *Lygocoris pabulinus, Lygus spp., for example Lygus elisus, Lygus hesperus, Lygus lineolaris, Macropes excavatus, Megacopta cribraria, Miridae, Monalonion atratum, Nezara spp.,* for example *Nezara viridula, Nysius spp., Oebalus spp., Pentomidae, Piesma quadrata, Piezodorus spp.,* for example *Piezodorus guildinii, Psallus spp., Pseudacysta persea, Rhodnius spp., Sahlbergella singularis, Scaptocoris castanea, Scotinophora spp., Stephanitis nashi, Tibraca spp., Triatoma spp.;*

from the order of the *Hymenoptera,* for example *Acromyrmex spp., Athalia spp., for example Athalia rosae, Atta spp., Camponotus spp., Dolichovespula spp., Diprion spp.,* for example *Diprion similis, Hoplocampa spp.,* for example

*Hoplocampa cookei, Hoplocampa testudinea, Lasius spp., Linepithema (Iridiomyrmex) humile, Monomorium pharaonis, Paratrechina spp., Paravespula spp., Plagiolepis spp., Sirex spp.,* for example *Sirex noctilio, Solenopsis invicta, Tapinoma spp., Technomyrmex albipes, Urocerus spp., Vespa spp.,* for example *Vespa crabro, Wasmannia auropunctata, Xeris spp.;*

from the order of the Isopoda, for example *Armadillidium vulgare, Oniscus asellus, Porcellio scaber,*

from the order of the *Isoptera,* for example *Coptotermes spp.,* for example *Coptotermes formosanus, Cornitermes cumulans, Cryptotermes spp., Incisitermes spp., Kalotermes spp., Microtermes obesi, Nasutitermes spp., Odontotermes spp., Porotermes spp., Reticulitermes spp.,* for example *Reticulitermes flavipes, Reticulitermes hesperus;*

from the order of the *Lepidoptera,* for example *Achroia grisella, Acronicta major, Adoxophyes spp.,* for example *Adoxophyes orana, Aedia leucomelas, Agrotis spp.,* for example *Agrotis segetum, Agrotis ipsilon, Alabama spp.,* for example *Alabama argillacea, Amyelois transitella, Anarsia spp., Anticarsia spp.,* for example *Anticarsia gemmatalis, Argyroploce spp., Autographa spp., Barathra brassicae, Blastodacna atra, Borbo cinnara, Bucculatrix thurberiella, Bupalus piniarius, Busseola spp., Cacoecia spp., Caloptilia theivora, Capua reticulana, Carpocapsa pomonella, Carposina niponensis, Cheimatobia brumata, Chilo spp.,* for example *Chilo plejadellus, Chilo suppressalis, Choreutis pariana, Choristoneura spp., Chrysodeixis chalcites, Clysia ambiguella, Cnaphalocerus spp., Cnaphalocrocis medinalis, Cnephasia spp., Conopomorpha spp., Conotrachelus spp., Copitarsia spp., Cydia spp.,* for example *Cydia nigricana, Cydia pomonella, Dalaca noctuides, Diaphania spp., Diparopsis spp., Diatraea saccharalis, Dioryctria spp.,* for example *Dioryctria zimmermani, Earias spp., Ecdytolopha aurantium, Elasmopalpus lignosellus, Eldana saccharina, Ephestia spp.,* for example *Ephestia elutella, Ephestia kuehniella, Epinotia spp., Epiphyas postvittana, Erannis spp., Erschoviella musculana, Etiella spp., Eudocima spp., Eulia spp., Eupoecilia ambiguella, Euproctis spp.,* for example *Euproctis chrysorrhoea, Euxoa spp., Feltia spp., Galleria mellonella, Gracillaria spp., Grapholitha spp.,* for example *Grapholita molesta, Grapholita prunivora, Hedylepta spp., Helicoverpa spp.,* for example *Helicoverpa armigera, Helicoverpa zea, Heliothis spp.,* for example *Heliothis virescens, Hofmannophila pseudospretella, Homoeosoma spp., Homona spp., Hyponomeuta padella, Kakivoria flavofasciata, Lampides spp., Laphygma spp., Laspeyresia molesta, Leucinodes orbonalis, Leucoptera spp.,* for example *Leucoptera coffeella, Lithocolletis spp.,* for example *Lithocolletis blancardella, Lithophane antennata, Lobesia spp.,* for example *Lobesia botrana, Loxagrotis albicosta, Lymantria spp.,* for example *Lymantria dispar, Lyonetia spp.,* for example *Lyonetia clerkella, Malacosoma neustria, Maruca testulalis, Mamestra brassicae, Melanitis leda, Mocis spp., Monopis obviella, Mythimna separata, Nemapogon cloacellus, Nymphula spp., Oiketicus spp., Omphisa spp., Operophtera spp., Oria spp., Orthaga spp., Ostrinia spp.,* for example *Ostrinia nubilalis, Panolis flammea, Parnara spp., Pectinophora spp.,* for example *Pectinophora gossypiella, Perileucoptera spp., Phthorimaea spp.,* for example *Phthorimaea operculella, Phyllocnistis citrella, Phyllonorycter spp.,* for example *Phyllonorycter blancardella, Phyllonorycter crataegella, Pieris spp.,* for example *Pieris rapae, Platynota stultana, Plodia interpunctella, Plusia spp., Plutella xylostella (=Plutella maculipennis), Podesia spp.,* for example *Podesia syringae, Prays spp., Prodenia spp., Protoparce spp., Pseudaletia spp.,* for example *Pseudaletia unipuncta, Pseudoplusia includens, Pyrausta nubilalis, Rachiplusia nu, Schoenobius spp.,* for example *Schoenobius bipunctifer, Scirpophaga spp.,* for example *Scirpophaga innotata, Scotia segetum, Sesamia spp.,* for example *Sesamia inferens, Sparganothis spp., Spodoptera spp.,* for example *Spodoptera eradiana, Spodoptera exigua, Spodoptera frugiperda, Spodoptera praefica, Stathmopoda spp., Stenoma spp., Stomopteryx subsecivella, Synanthedon spp., Tecia solanivora, Thaumetopoea spp., Thermesia gemmatalis, Tinea cloacella, Tinea pellionella, Tineola bisselliella, Tortrix spp., Trichophaga tapetzella, Trichoplusia spp.,* for example *Trichoplusia ni, Tryporyza incertulas, Tuta absoluta, Virachola spp.;*

from the order of the *Orthoptera* or *Saltatoria,* for example *Acheta domesticus, Dichroplus spp., Gryllotalpa spp.,* for example *Gryllotalpa gryllotalpa, Hieroglyphus spp., Locusta spp.,* for example *Locusta migratoria, Melanoplus spp.,* for example *Melanoplus devastator, Paratlanticus ussuriensis, Schistocerca gregaria;*

from the order of the *Phthiraptera,* for example *Damalinia spp., Haematopinus spp., Linognathus spp., Pediculus spp., Phylloxera vastatrix, Phthirus pubis, Trichodectes spp.;*

from the order of the *Psocoptera,* for example *Lepinotus spp., Liposcelis spp.;*

from the order of the *Siphonaptera,* for example, *Ceratophyllus spp., Ctenocephalides* spp., for example *Ctenocephalides canis, Ctenocephalides felis, Pulex irritans, Tunga penetrans, Xenopsylla cheopis;*

from the order of the *Thysanoptera,* for example *Anaphothrips obscurus, Baliothrips biformis, Chaetanaphothrips*

*leeuweni, Drepanothrips reuteri, Enneothrips flavens, Frankliniella spp.,* for example *Frankliniella fusca, Frankliniella occidentalis, Frankliniella schultzei, Frankliniella tritici, Frankliniella vaccinii, Frankliniella williamsi, Haplothrips spp., Heliothrips spp., Hercinothrips femoralis, Kakothrips spp., Rhipiphorothrips cruentatus, Scirtothrips spp., Taeniothrips cardamomi, Thrips spp.,* for example *Thrips palmi, Thrips tabaci;*

from the order of the *Zygentoma (= Thysanura*), for example *Ctenolepisma spp., Lepisma saccharina, Lepismodes inquilinus, Thermobia domestica;*

from the class of the *Symphyla,* for example *Scutigerella spp.,* for example *Scutigerella immaculata;*

pests from the phylum of the *Mollusca,* for example from the class of the *Bivalvia,* for example *Dreissena spp.,*

and also from the class of the Gastropoda, for example *Arion spp., for example Arion ater rufus, Biomphalaria spp., Bulinus spp., Deroceras spp.,* for example *Deroceras laeve, Galba spp., Lymnaea spp., Oncomelania spp., Pomacea spp., Succinea spp.;*

plant pests from the phylum of the *Nematoda,* i.e. *phytoparasitic nematodes,* in particular *Aglenchus spp.,* for example *Aglenchus agricola, Anguina spp.,* for example *Anguina tritici, Aphelenchoides spp.,* for example *Aphelenchoides arachidis, Aphelenchoides fragariae, Belonolaimus spp.,* for example *Belonolaimus gracilis, Belonolaimus longicaudatus, Belonolaimus nortoni, Bursaphelenchus spp.,* for example *Bursaphelenchus cocophilus, Bursaphelenchus eremus, Bursaphelenchus xylophilus, Cacopaurus spp.,* for example *Cacopaurus pestis, Criconemella spp., for example Criconemella curvata, Criconemella onoensis, Criconemella ornata, Criconemella rusium, Criconemella xenoplax (= Mesocriconema xenoplax), Criconemoides spp.,* for example *Criconemoides ferniae, Criconemoides onoense, Criconemoides ornatum, Ditylenchus spp.,* for example *Ditylenchus dipsaci, Dolichodorus spp., Globodera spp.,* for example *Globodera pallida, Globodera rostochiensis, Helicotylenchus spp.,* for example *Helicotylenchus dihystera, Hemicriconemoides spp., Hemicycliophora spp., Heterodera spp.,* for example *Heterodera avenae, Heterodera glycines, Heterodera schachtii, Hirschmaniella spp., Hoplolaimus spp., Longidorus spp.,* for example *Longidorus africanus, Meloidogyne spp.,* for example *Meloidogyne chitwoodi, Meloidogyne fallax, Meloidogyne hapla, Meloidogyne incognita, Meloinema spp., Nacobbus spp., Neotylenchus spp., Paralongidorus spp., Paraphelenchus spp., Paratrichodorus spp.,* for example *Paratrichodorus minor, Paratylenchus spp., Pratylenchus spp.,* for example *Pratylenchus penetrans, Pseudohalenchus spp., Psilenchus spp., Punctodera spp., Quinisulcius spp., Radopholus spp.,* for example *Radopholus citrophilus, Radopholus similis, Rotylenchulus spp., Rotylenchus spp., Scutellonema spp., Subanguina spp., Trichodorus spp.,* for example *Trichodorus obtusus, Trichodorus primitivus, Tylenchorhynchus spp.,* for example *Tylenchorhynchus annulatus, Tylenchulus spp.,* for example *Tylenchulus semipenetrans, Xiphinema spp.,* for example *Xiphinema index.*

The plant nematodes include, for example, *Aglenchus agricola, Anguina tritici, Aphelenchoides arachidis, Aphelenchoides fragaria,* and the stem and leaf endoparasites *Aphelenchoides spp., Belonolaimus gracilis, Belonolaimus longicaudatus, Belonolaimus nortoni, Bursaphelenchus cocophilus, Bursaphelenchus eremus, Bursaphelenchus xylophilus and Bursaphelenchus spp., Cacopaurus pestis, Criconemella curvata, Criconemella onoensis, Criconemella ornata, Criconemella rusium, Criconemella xenoplax (= Mesocriconema xenoplax*) and *Criconemella spp., Criconemoides ferniae, Criconemoides onoense, Criconemoides ornatum* and *Criconemoides spp., Ditylenchus destructor, Ditylenchus dipsaci, Ditylenchus myceliophagus* and also the stem and leaf endoparasites *Ditylenchus spp., Dolichodorus heterocephalus, Globodera pallida (=Heterodera pallida), Globodera rostochiensis* (yellow potato cyst nematode), *Globodera solanacearum, Globodera tabacum, Globodera virginia* and the non-migratory cyst-forming parasites *Globodera spp., Helicotylenchus digonicus, Helicotylenchus dihystera, Helicotylenchus erythrine, Helicotylenchus multicinctus, Helicotylenchus nannus, Helicotylenchus pseudorobustus and Helicotylenchus spp., Hemicriconemoides, Hemicycliophora arenaria, Hemicycliophora nudata, Hemicycliophora parvana, Heterodera avenae, Heterodera cruciferae, Heterodera glycines* (soya bean cyst nematode), *Heterodera oryzae, Heterodera schachtii, Heterodera zeae* and the non-migratory cyst-forming parasites *Heterodera spp., Hirschmaniella gracilis, Hirschmaniella oryzae, Hirschmaniella spinicaudata* and the stem and leaf endoparasites *Hirschmaniella spp., Hoplolaimus aegyptii, Hoplolaimus californicus, Hoplolaimus columbus, Hoplolaimus galeatus, Hoplolaimus indicus, Hoplolaimus magnistylus, Hoplolaimus pararobustus, Longidorus africanus, Longidorus breviannulatus, Longidorus elongatus, Longidorus laevicapitatus, Longidorus vineacola* and the ectoparasites *Longidorus spp., Meloidogyne acronea, Meloidogyne africana, Meloidogyne arenaria, Meloidogyne arenaria thamesi, Meloidogyne artiella, Meloidogyne chitwoodi, Meloidogyne coffeicola, Meloidogyne ethiopica, Meloidogyne exigua, Meloidogyne fallax, Meloidogyne graminicola, Meloidogyne graminis, Meloidogyne hapla, Meloidogyne incognita, Meloidogyne incognita acrita, Meloidogyne javanica, Meloidogyne kikuyensis, Meloidogyne minor, Meloidogyne naasi, Meloidogyne paranaensis, Meloidogyne thamesi and the non-migratory parasites Meloidogyne spp., Mel-*

*oinema spp., Nacobbus aberrans, Neotylenchus vigissi, Paraphelenchus pseudoparietinus, Paratrichodorus allius, Paratrichodorus lobatus, Paratrichodorus minor, Paratrichodorus nanus, Paratrichodorus porosus, Paratrichodorus teres* and *Paratrichodorus spp., Paratylenchus hamatus, Paratylenchus minutus, Paratylenchus projectus and Paratylenchus spp., Pratylenchus agilis, Pratylenchus alleni, Pratylenchus andinus, Pratylenchus brachyurus, Pratylenchus cerealis, Pratylenchus coffeae, Pratylenchus crenatus, Pratylenchus delattrei, Pratylenchus giibbicaudatus, Pratylenchus goodeyi, Pratylenchus hamatus, Pratylenchus hexincisus, Pratylenchus loosi, Pratylenchus neglectus, Pratylenchus penetrans, Pratylenchus pratensis, Pratylenchus scribneri, Pratylenchus teres, Pratylenchus thornei, Pratylenchus vulnus, Pratylenchus zeae* and the migratory endoparasites *Pratylenchus spp., Pseudohalenchus minutus, Psilenchus magnidens, Psilenchus tumidus, Punctodera chalcoensis, Quinisulcius acutus, Radopholus citrophilus, Radopholus similis,* the migratory endoparasites *Radopholus spp., Rotylenchulus borealis, Rotylenchulus parvus, Rotylenchulus reniformis and Rotylenchulus spp., Rotylenchus laurentinus, Rotylenchus macrodoratus, Rotylenchus robustus, Rotylenchus uniformis and Rotylenchus spp., Scutellonema brachyurum, Scutellonema bradys, Scutellonema clathricaudatum* and the migratory endoparasites *Scutellonema spp., Subanguina radiciola, Tetylenchus nicotianae, Trichodorus cylindricus, Trichodorus minor, Trichodorus primitivus, Trichodorus proximus, Trichodorus similis, Trichodorus sparsus* and the ectoparasites *Trichodorus spp., Tylenchorhynchus agri, Tylenchorhynchus brassicae, Tylenchorhynchus clarus, Tylenchorhynchus claytoni, Tylenchorhynchus digitatus, Tylenchorhynchus ebriensis, Tylenchorhynchus maximus, Tylenchorhynchus nudus, Tylenchorhynchus vulgaris and Tylenchorhynchus spp., Tylenchulus semipenetrans and the semiparasites Tylenchulus spp., Xiphinema americanum, Xiphinema brevicolle, Xiphinema dimorphicaudatum, Xiphinema index* and the ectoparasites *Xiphinema spp.*

Nematodes for the control of which the biopesticide composition may be used include nematodes of the genus *Meloidogyne* such as the Southern root-knot nematode (*Meloidogyne incognita*), the Javanese root-knot nematode (*Meloidogyne javanica*), the Northern root-knot nematode (*Meloidogyne hapla*) and the peanut root-knot nematode (*Meloidogyne arenaria*); nematodes of the genus *Ditylenchus* such as the potato rot nematode *(Ditylenchus destructor*) and stem and bulb eelworm (*Ditylenchus dipsaci*); nematodes of the genus *Pratylenchus* such as the cob root-lesion nematode (*Pratylenchus penetrans*), the chrysanthemum root-lesion nematode (*Pratylenchus fallax*), the coffee root nematode (*Pratylenchus coffeae*), the tea root nematode (*Pratylenchus loosi*) and the walnut root-lesion nematode (*Pratylenchus vulnus*); nematodes of the genus *Globodera* such as the yellow potato cyst nematode (*Globodera rostochiensis*) and the white potato cyst nematode (*Globodera pallida*); nematodes of the genus *Heterodera* such as the soya bean cyst nematode (*Heterodera glycines*) and beet cyst eelworm (*Heterodera schachtii*); nematodes of the genus *Aphelenchoides* such as the rice white-tip nematode (*Aphelenchoides besseyi*), the chrysanthemum nematode (*Aphelenchoides ritzemabosi*) and the strawberry nematode (*Aphelenchoides fragariae*); nematodes of the genus *Aphelenchus* such as the fungivorous nematode (*Aphelenchus avenae*); nematodes of the genus *Radopholus,* such as the burrowing nematode (*Radopholus similis*); nematodes of the genus *Tylenchulus* such as the citrus root nematode (*Tylenchulus semipenetrans*); nematodes of the genus *Rotylenchulus* such as the reniform nematode (*Rotylenchulus reniformis*); tree-dwelling nematodes such as the pine wood nematode (*Bursaphelenchus xylophilus*) and the red ring nematode (*Bursaphelenchus cocophilus*) and the like.

In a preferred embodiment, the pest is caused by at least one of the following species selected from group of insects comprising *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Bemisia argentifolii, Bemisia tabaci, Brevicoryne brassicae, Cydia pomonella, Cydia molesta, Cydia splendana, Diuraphis noxia, Dysaphis devecta, Dysaphis plantaginea, Eriosoma lanigerum, Frankliniella bispinosa, Frankliniella gossvpiana, Frankliniella occidentalis, Frankliniella parvula, Frankliniella schultzei, Frankliniella tenuicornis, Frankliniella tritici, Frankliniella vaccinii, Frankliniella williamsi, Helicoverpa armigera, Hyalopterus pruni, Leptinotarsa behrensi, Leptinotarsa collinsi, Leptinotarsa decemlineata, Leptinotarsa defecta, Leptinotarsa haldemani, Leptinotarsa heydeni, Leptinotarsa juncta, Leptinotarsa lineolata, Leptinotarsa peninsularis, Leptinotarsa rubiginosa, Leptinotarsa texana, Leptinotarsa tlascalana, Leptinotarsa tumamoca, Leptinotarsa typographica, Liriomyza brassicae, Liriomyza huidobrensis, Liriomyza trifolii, Lipaphis erysimi, Macrosiphum avenae, Macrosiphum euphorbiae, Macrosiphum rosae, Myzus cerasi, Myzus nicotianae, Myzus persicae, Nasonovia ribisnigri, Planococcus citri, Pemphigus bursarius, Phorodon humuli, Phylloxera vitifoliae, Pseudococcus comstocki, Pseudococcus cyptus, Pseudococcus longispinus, Pseudococcus saccharicoia, Pseudococcus viburni, Rhopalosiphum insertum, Rhopalosiphum maidis, Rhopalosiphum padi, Schizaphis graminum, Sitobion avenae, Spodoptera cilium, Spodoptera cosmioides, Spodoptera eridania, Spodoptera frugiperda, Spodoptera litoralis, Spodoptera litura, Spodoptera ornithogalli, Trialurodes vaporariorum ,Tecia solanivora, Thrips obscuratus, Thrips palmi, Thrips tabaci, Toxoptera aurantii, Toxoptera citricola, and Tuta absoluta.*

In a more preferred embodiment, the pest is caused by at least one of the following species selected from group of mites comprising *Tetranychus kanzawai, Tetranychus urticae, Eutetranychus orientalis, Eutetranychus banks and Phyllocoptruta oleivora.*

Non-limiting examples of pathogens of fungal diseases which may be treated in accordance with the invention include:

diseases caused by powdery mildew pathogens, for example *Blumeria* species, for example *Blumeria graminis*; *Podosphaera* species, for example *Podosphaera leucotricha; Sphaerotheca* species, for example *Sphaerotheca fuliginea*; *Uncinula* species, for example *Uncinula necator,*

diseases caused by rust disease pathogens, for example *Gymnosporangium* species, for example *Gymnosporangium sabinae; Hemileia* species, for example *Hemileia vastatrix*; *Phakopsora* species, for example *Phakopsora pachyrhizi* or *Phakopsora meibomiae*; *Puccinia* species, for example *Puccinia recondita, Puccinia graminis* oder *Puccinia striiformis*; *Uromyces* species, for example *Uromyces appendiculatus*;

diseases caused by pathogens from the group of the Oomycetes, for example *Albugo* species, for example *Albugo candida*; *Bremia* species, for example *Bremia lactucae*; *Peronospora* species, for example *Peronospora pisi* or P. *brassicae; Phytophthora* species, for example *Phytophthora infestans; Plasmopara* species, for example *Plasmopara viticola; Pseudoperonospora* species, for example *Pseudoperonospora humuli* or *Pseudoperonospora cubensis; Pythium* species, for example *Pythium ultimum;*

leaf blotch diseases and leaf wilt diseases caused, for example, by *Alternaria* species, for example *Alternaria solani; Cercospora* species, for example *Cercospora beticola; Cladiosporium* species, for example *Cladiosporium cucumerinum*; *Cochliobolus* species, for example *Cochliobolus sativus* (conidial form: *Drechslera,* syn: *Helminthosporium)* or *Cochliobolus miyabeanus; Colletotrichum* species, for example *Colletotrichum lindemuthanium*; *Corynespora* species, for example *Corynespora cassiicola*; *Cycloconium* species, for example *Cycloconium oleaginum*; *Diaporthe* species, for example *Diaporthe citri*; *Elsinoe* species, for example *Elsinoe fawcettii*; *Gloeosporium* species, for example *Gloeosporium laeticolor, Glomerella* species, for example *Glomerella cingulata*; *Guignardia* species, for example *Guignardia bidwelli*; *Leptosphaeria* species, for example *Leptosphaeria maculans*; *Magnaporthe* species, for example *Magnaporthe grisea*; *Microdochium* species, for example *Microdochium nivale*; *Mycosphaerella* species, for example *Mycosphaerella graminicola, Mycosphaerella arachidicola* or *Mycosphaerella fijiensis*; *Phaeosphaeria* species, for example *Phaeosphaeria nodorum*; *Pyrenophora* species, for example *Pyrenophora teres* or *Pyrenophora tritici repentis*; *Ramularia* species, for example *Ramularia collo-cygni* or *Ramularia areola*; *Rhynchosporium* species, for example *Rhynchosporium secalis*; *Septoria* species, for example *Septoria apii* or *Septoria lycopersici*; *Stagonospora* species, for example *Stagonospora nodorum*; *Typhula* species, for example *Typhula incarnata*; *Venturia* species, for example *Venturia inaequalis*;

root and stem diseases caused, for example, by *Corticium* species, for example *Corticium graminearum*; *Fusarium* species, for example *Fusarium oxysporum*; *Gaeumannomyces* species, for example *Gaeumannomyces graminis*; *Plasmodiophora* species, for example *Plasmodiophora brassicae*; *Rhizoctonia* species, for example *Rhizoctonia solani*; *Sarocladium* species, for example *Sarocladium oryzae*; *Sclerotium* species, for example *Sclerotium oryzae*; *Tapesia* species, for example *Tapesia acuformis*; *Thielaviopsis* species, for example *Thielaviopsis basicola*;

ear and panicle diseases (including corn cobs) caused, for example, by *Alternaria* species, for example *Alternaria spp.*; *Aspergillus* species, for example *Aspergillus flavus*; *Cladosporium* species, for example *Cladosporium cladosporioides*; *Claviceps* species, for example *Claviceps purpurea*; *Fusarium* species, for example *Fusarium culmorum*; *Gibberella* species, for example *Gibberella zeae*; *Monographella* species, for example *Monographella nivalis*; *Stagnospora* species, for example *Stagnospora nodorum*;

diseases caused by smut fungi, for example *Sphacelotheca* species, for example *Sphacelotheca reiliana*; *Tilletia* species, for example *Tilletia caries* or *Tilletia controversa*; *Urocystis* species, for example *Urocystis occulta*; *Ustilago* species, for example *Ustilago nuda*;

fruit rot caused, for example, by *Aspergillus* species, for example *Aspergillus flavus*; *Botrytis* species, for example *Botrytis cinerea*; *Monilinia* species, for example *Monilinia laxa*; *Penicillium* species, for example *Penicillium expansum* or *Penicillium purpurogenum*; *Rhizopus* species, for example *Rhizopus stolonifer*, *Sclerotinia* species, for example *Sclerotinia sclerotiorum*; *Verticilium* species, for example *Verticilium alboatrum*;

seed- and soil-borne rot and wilt diseases, and also diseases of seedlings, caused, for example, by *Alternaria* species, for example *Alternaria brassicicola*; *Aphanomyces* species, for example *Aphanomyces euteiches*; *Ascochyta* species, for example *Ascochyta lentis*; *Aspergillus* species, for example *Aspergillus flavus*; *Cladosporium* species, for example *Cladosporium herbarum*; *Cochliobolus* species, for example *Cochliobolus sativus* (conidial form: *Drechslera,* Bipolaris Syn: *Helminthosporium*); *Colletotrichum* species, for example *Colletotrichum coccodes*; *Fusarium* species, for example *Fusarium culmorum*; *Gibberella* species, for example *Gibberella zeae*; *Macrophomina*

species, for example *Macrophomina phaseolina*; *Microdochium* species, for example *Microdochium nivale*; *Monographella* species, for example *Monographella nivalis*; *Penicillium* species, for example *Penicillium expansum*; *Phoma* species, for example *Phoma lingam*; *Phomopsis* species, for example *Phomopsis sojae*; *Phytophthora* species, for example *Phytophthora cactorum*; *Pyrenophora* species, for example *Pyrenophora graminea*; *Pyricularia* species, for example *Pyricularia oryzae*; *Pythium* species, for example *Pythium ultimum*; *Rhizoctonia* species, for example *Rhizoctonia solani*; *Rhizopus* species, for example *Rhizopus oryzae*; *Sclerotium* species, for example *Sclerotium rolfsii*; *Septoria* species, for example *Septoria nodorum*; *Typhula* species, for example *Typhula incarnata*; *Verticillium* species, for example *Verticillium dahliae*;

cancers, galls and witches' broom caused, for example, by *Nectria* species, for example *Nectria galligena;*

wilt diseases caused, for example, by *Verticillium* species, for example *Verticillium longisporum*; *Fusarium* species, for example *Fusarium oxysporum*;

deformations of leaves, flowers and fruits caused, for example, by *Exobasidium* species, for example *Exobasidium vexans*; *Taphrina* species, for example *Taphrina deformans*;

degenerative diseases in woody plants, caused, for example, by *Esca* species, for example *Phaeomoniella chlamydospora*, *Phaeoacremonium aleophilum* or *Fomitiporia mediterranea*; *Ganoderma* species, for example *Ganoderma boninense*;

diseases of plant tubers caused, for example, by *Rhizoctonia* species, for example *Rhizoctonia solani*; *Helminthosporium* species, for example *Helminthosporium solani*;

diseases caused by bacterial pathogens, for example *Xanthomonas* species, for example *Xanthomonas campestris pv. oryzae*; *Pseudomonas* species, for example *Pseudomonas syringae pv. lachrymans*; *Erwinia* species, for example *Erwinia amylovora*; *Liberibacter* species, for example *Liberibacter asiaticus*; *Xyella* species, for example *Xylella fastidiosa*; *Ralstonia* species, for example *Ralstonia solanacearum*; *Dickeya* species, for example *Dickeya solani*; *Clavibacter* species, for example *Clavibacter michiganensis*; *Streptomyces* species, for example *Streptomyces scabies*.

diseases of soya beans:

Fungal diseases on leaves, stems, pods and seeds caused, for example, by *Alternaria* leaf spot (*Alternaria spec. atrans tenuissima*), *Anthracnose* (*Colletotrichum gloeosporoides dematium var. truncatum*), brown spot (*Septoria glycines*), *cercospora* leaf spot and blight (*Cercospora kikuchii*), *choanephora* leaf blight (*Choanephora infundibulifera trispora (Syn.)*), *dactuliophora* leaf spot (*Dactuliophora glycines*), downy mildew (*Peronospora manshurica*), *drechslera* blight (*Drechslera glycim*), frogeye leaf spot (*Cercospora sojina*), *leptosphaerulina* leaf spot (*Leptosphaerulina trifolii*), *phyllostica* leaf spot (*Phyllosticta sojaecola*), pod and stem blight (*Phomopsis sojae*), powdery mildew (*Microsphaera diffusa*), *pyrenochaeta* leaf spot (*Pyrenochaeta glycines*), rhizoctonia aerial, foliage, and web blight (*Rhizoctonia solani*), rust (*Phakopsora pachyrhizi, Phakopsora meibomiae*), scab (*Sphaceloma glycines*), *stemphylium* leaf blight (*Stemphylium botryosum*), sudden death syndrome (*Fusarium virguliforme*), target spot (*Corynespora cassiicola*).

Fungal diseases on roots and the stem base caused, for example, by black root rot (*Calonectria crotalariae*), charcoal rot (*Macrophomina phaseolina*), fusarium blight or wilt, root rot, and pod and collar rot (*Fusarium oxysporum, Fusarium orthoceras, Fusarium semitectum, Fusarium equiseti*), mycoleptodiscus root rot (*Mycoleptodiscus terrestris*), neocosmospora (*Neocosmospora vasinfecta*), pod and stem blight (*Diaporthe phaseolorum*), stem canker (*Diaporthe phaseolorum var. caulivora*), phytophthora rot (*Phytophthora megasperma*), brown stem rot (*Phialophora gregata*), pythium rot (*Pythium aphanidermatum, Pythium irregulare, Pythium debaryanum, Pythium myriotylum, Pythium ultimum*), rhizoctonia root rot, stem decay, and damping-off (*Rhizoctonia solani*), sclerotinia stem decay (*Sclerotinia sclerotiorum*), sclerotinia southern blight (*Sclerotinia rolfsii*), thielaviopsis root rot (*Thielaviopsis basicola*).

In a preferred embodiment, the disease is caused by fungal pathogens selected from the group comprising *Botrytis cinerea, Botrytis paeoniae, Botrytis tulipae, Erysiphe necator, Fusarium semitectum, Fusarium moniliforme, Fusarium solani, Fusarium oxysporum, Leveillula taurica, and Uncinula necato.*

When the biopesticide composition of the invention is used as a fungicide or pesticide, the application rates

can vary within a relatively wide range, depending on the kind of application. For the treatment of plant parts, such as leaves, the application rate may range from 0.1 to 1000 l/ha, preferably from 1 to 100 l/ha, more preferably between 1 and 50 l/ha and most preferably between 2 and 1 l/ha, such as between 3 and 12 l/ha, e.g depending on the pest/disease pressure. For the treatment of seeds, the application rate may range from 0.1 to 2000 ml per 100 kg of seeds, preferably from 1 to 1500 ml per 100 kg of seeds, more preferably from 2.5 to 250 ml per 100 kg of seeds, even more preferably from 2.5 to 125 ml per 100 kg of seeds. For the treatment of soil, the application rate may range from 0.1 to 10000 l/ha, preferably from 1 to 5000 l/ha. The outlined application rates refer to the total application rates of biopesticide composition of the present invention with the concentrations of active ingredient(s) as described above. These application rates are merely examples and are not intended to limit the scope of the present invention.

In another aspect, the present invention relates to a method for reducing overall damage of plants and plant parts as well as losses in harvested fruits or vegetables caused by plant pests and/or plant diseases comprising the step of the biopesticide composition as defined herein to a plant, plant part or seed or a locus where said plant or seed is intended to be grown.

In another aspect, the present invention relates to a method for increasing crop yield and/or the quality of food commodities comprising the step of applying the biopesticide composition as defined to a plant, plant part or seed or a locus where said plant or seed is intended to be grown.

*Plants and plant parts*

The biopesticide composition of the invention may be applied to any plants or plant parts.

Plants mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the genetically modified plants (GMO or transgenic plants) and the plant cultivars which are protectable and non-protectable by plant breeders' rights.

Plant cultivars are understood to mean plants which have new properties ("traits") and have been obtained by conventional breeding, by mutagenesis or by recombinant DNA techniques. They can be cultivars, varieties, bio- or genotypes.

Plant parts are understood to mean all parts and organs of plants above and below the ground, such as shoots, leaves, needles, stalks, stems, flowers, fruit bodies, fruits, seeds, roots, tubers and rhizomes. The plant parts also include harvested material and vegetative and generative propagation material, for example cuttings, tubers, rhizomes, slips and seeds.

Plants which may be treated in accordance with the methods of the invention include the following: cotton, flax, grapevine, fruit, vegetables, such as *Rosaceae sp.* (for example pome fruits such as apples and pears, but also stone fruits such as apricots, cherries, almonds and peaches, and soft fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for example banana trees and plantations), *Rubiaceae sp.* (for example coffee), *Theaceae sp., Sterculiceae sp., Rutaceae sp.* (for example lemons, oranges and grapefruit); *Solanaceae sp.* (for example tomatoes), *Liliaceae sp., Asteraceae sp.* (for example lettuce), *Umbelliferae sp., Cruciferae sp., Chenopodiaceae sp., Cucurbitaceae sp.* (for example cucumber), *Alliaceae sp.* (for example leek, onion), *Papilionaceae sp.* (for example peas); major crop plants, such as *Gramineae sp.* (for example maize, turf, cereals such as wheat, rye, rice, barley, oats, millet and triticale), *Asteraceae sp.* (for example sunflower), *Brassicaceae sp.* (for example white cabbage, red cabbage, broccoli, cauliflower, Brussels sprouts, pak choi, kohlrabi, radishes, and oilseed rape, mustard, horseradish and cress), *Fabacae sp.* (for example bean, peanuts), *Papilionaceae sp.* (for example soya bean), *Solanaceae sp.* (for example potatoes), *Chenopodiaceae sp.* (for example sugar beet, fodder beet, swiss chard, beetroot); useful plants and ornamental plants for gardens and wooded areas; and genetically modified varieties of each of these plants.

Plants and plant cultivars which may be treated by the above disclosed methods include plants and plant cultivars which are resistant against one or more biotic stresses, i.e. said plants show a better defence against animal and microbial pests, such as against nematodes, insects, mites, phytopathogenic fungi, bacteria, viruses and/or viroids.

Plants and plant cultivars which may be treated by the above disclosed methods include those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may be treated by the above disclosed methods include those plants characterized by enhanced yield characteristics. Increased yield in said plants may be the result of, for example, improved plant physiology, growth and development, such as water use efficiency, water retention efficiency, improved nitrogen use, enhanced carbon assimilation, improved photosynthesis, increased germination efficiency and accelerated maturation. Yield may furthermore be affected by improved plant architecture (under stress and non-stress conditions),

including but not limited to, early flowering, flowering control for hybrid seed production, seedling vigour, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants and plant cultivars which may be treated by the above disclosed methods include plants and plant cultivars which are hybrid plants that already express the characteristic of heterosis or hybrid vigour which results in generally higher yield, vigour, health and resistance towards biotic and abiotic stresses.

*Transgenic plants and integration events*

The biopesticide composition according to the invention can be advantageously used to treat transgenic plants, plant cultivars or plant parts that received genetic material which imparts advantageous and/or useful properties (traits) to these plants, plant cultivars or plant parts. Therefore, it is contemplated that the present invention may be combined with one or more recombinant traits or transgenic event(s) or a combination thereof. For the purposes of this application, a transgenic event is created by the insertion of a specific recombinant DNA molecule into a specific position (locus) within the chromosome of the plant genome. The insertion creates a novel DNA sequence referred to as an "event" and is characterized by the inserted recombinant DNA molecule and some amount of genomic DNA immediately adjacent to/flanking both ends of the inserted DNA. Such trait(s) or transgenic event(s) include, but are not limited to, pest resistance, water use efficiency, yield performance, drought tolerance, seed quality, improved nutritional quality, hybrid seed production, and herbicide tolerance, in which the trait is measured with respect to a plant lacking such trait or transgenic event. Concrete examples of such advantageous and/or useful properties (traits) are better plant growth, vigor, stress tolerance, standability, lodging resistance, nutrient uptake, plant nutrition, and/or yield, in particular improved growth, increased tolerance to high or low temperatures, increased tolerance to drought or to levels of water or soil salinity, enhanced flowering performance, easier harvesting, accelerated ripening, higher yields, higher quality and/or a higher nutritional value of the harvested products, better storage life and/or processability of the harvested products, and increased resistance against animal and microbial pests, such as against insects, arachnids, nematodes, mites, slugs and snails.

Among DNA sequences encoding proteins which confer properties of tolerance to such animal and microbial pests, in particular insects, mention will particularly be made of the genetic material from *Bacillus thuringiensis* encoding the Bt proteins widely described in the literature and well known to those skilled in the art. Mention will also be made of proteins extracted from bacteria such as *Photorhabdus* (WO97/17432 and WO98/08932). In particular, mention will be made of the Bt Cry or VIP proteins which include the CrylA, CrylAb, CrylAc, CryIIA, CryIIIA, CryIIIB2, Cry9c Cry2Ab, Cry3Bb and CrylF proteins or toxic fragments thereof and also hybrids or combinations thereof, especially the CrylF protein or hybrids derived from a CrylF protein (e.g. hybrid CrylA-CrylF proteins or toxic fragments thereof), the CrylA-type proteins or toxic fragments thereof, preferably the CrylAc protein or hybrids derived from the CrylAc protein (e.g. hybrid CrylAb-CrylAc proteins) or the CrylAb or Bt2 protein or toxic fragments thereof, the Cry2Ae, Cry2Af or Cry2Ag proteins or toxic fragments thereof, the CrylA. 105 protein or a toxic fragment thereof, the VIP3Aa19 protein, the VIP3Aa20 protein, the VIP3A proteins produced in the COT202 or COT203 cotton events, the VIP3Aa protein or a toxic fragment thereof as described in Estruch et al. (1996), Proc Natl Acad Sci US A. 28;93(11):5389-94, the Cry proteins as described in WO2001/47952, the insecticidal proteins from *Xenorhabdus* (as described in WO98/50427), *Serratia* (particularly from S. *entomophila)* or *Photorhabdus* species strains, such as Tc-proteins from *Photorhabdus* as described in WO98/08932. Also, any variants or mutants of any one of these proteins differing in some amino acids (1-10, preferably 1-5) from any of the above named sequences, particularly the sequence of their toxic fragment, or which are fused to a transit peptide, such as a plastid transit peptide, or another protein or peptide, is included herein.

Another and particularly emphasized example of such properties is conferred tolerance to one or more herbicides, for example imidazolinones, sulphonylureas, glyphosate or phosphinothricin. Among DNA sequences encoding proteins which confer properties of tolerance to certain herbicides on the transformed plant cells and plants, mention will be particularly be made to the bar or PAT gene or the Streptomyces coelicolor gene described in WO2009/152359 which confers tolerance to glufosinate herbicides, a gene encoding a suitable EPSPS (5-Enolpyruvylshikimat-3-phosphat-synthase) which confers tolerance to herbicides having EPSPS as a target, especially herbicides such as glyphosate and its salts, a gene encoding glyphosate-n-acetyltransferase, or a gene encoding glyphosate oxidoreductase. Further suitable herbicide tolerance traits include at least one ALS (acetolactate synthase) inhibitor (e.g. WO2007/024782), a mutated Arabidopsis ALS/AHAS gene (e.g. U.S. Patent 6,855,533), genes encoding 2,4-D-monooxygenases conferring tolerance to 2,4-D (2,4- dichlorophenoxyacetic acid) and genes encoding Dicamba monooxygenases conferring tolerance to dicamba (3,6-dichloro-2- methoxybenzoic acid).

Yet another example of such properties is resistance to one or more phytopathogenic fungi, for example Asian

Soybean Rust. Among DNA sequences encoding proteins which confer properties of resistance to such diseases, mention will particularly be made of the genetic material from *glycine tomentella,* for example from any one of publically available accession lines PI441001, PI483224, PI583970, PI446958, PI499939, PI505220, PI499933, PI441008, PI505256 or PI446961 as described in WO2019/103918.

Further and particularly emphasized examples of such properties are increased resistance against bacteria and/or viruses owing, for example, to systemic acquired resistance (SAR), systemin, phytoalexins, elicitors and also resistance genes and correspondingly expressed proteins and toxins.

Particularly useful transgenic events in transgenic plants or plant cultivars which can be treated with preference in accordance with the invention include Event 531/ PV-GHBK04 (cotton, insect control, described in WO2002/040677), Event 1143-14A (cotton, insect control, not deposited, described in WO2006/128569); Event 1143-51B (cotton, insect control, not deposited, described in WO2006/128570); Event 1445 (cotton, herbicide tolerance, not deposited, described in US-A 2002-120964 or WO2002/034946); Event 17053 (rice, herbicide tolerance, deposited as PTA-9843, described in WO2010/117737); Event 17314 (rice, herbicide tolerance, deposited as PTA-9844, described in WO2010/117735); Event 281-24-236 (cotton, insect control - herbicide tolerance, deposited as PTA-6233, described in WO2005/103266 or US-A 2005-216969); Event 3006-210-23 (cotton, insect control - herbicide tolerance, deposited as PTA-6233, described in US-A 2007-143876 orWO2005/103266); Event 3272 (corn, quality trait, deposited as PTA-9972, described in WO2006/098952 or US-A 2006-230473); Event 33391 (wheat, herbicide tolerance, deposited as PTA-2347, described in WO2002/027004), Event 40416 (corn, insect control - herbicide tolerance, deposited as ATCC PTA-11508, described in WO 11/075593); Event 43A47 (corn, insect control - herbicide tolerance, deposited as ATCC PTA-11509, described in WO2011/075595); Event 5307 (corn, insect control, deposited as ATCC PTA-9561, described in WO2010/077816); Event ASR-368 (bent grass, herbicide tolerance, deposited as ATCC PTA-4816, described in US-A 2006-162007 or WO2004/053062); Event B16 (corn, herbicide tolerance, not deposited, described in US-A 2003-126634); Event BPS-CV127-9 (soybean, herbicide tolerance, deposited as NCIMB No. 41603, described in WO2010/080829); Event BLRI (oilseed rape, restoration of male sterility, deposited as NCIMB 41193, described in WO2005/074671), Event CE43-67B (cotton, insect control, deposited as DSM ACC2724, described in US-A 2009-217423 or WO2006/128573); Event CE44-69D (cotton, insect control, not deposited, described in US-A 2010-0024077); Event CE44-69D (cotton, insect control, not deposited, described in WO2006/128571); Event CE46-02A (cotton, insect control, not deposited, described in WO2006/128572); Event COT102 (cotton, insect control, not deposited, described in US-A 2006-130175 or WO2004/039986); Event COT202 (cotton, insect control, not deposited, described in US-A 2007-067868 or WO2005/054479); Event COT203 (cotton, insect control, not deposited, described in WO2005/054480); ); Event DAS21606-3 / 1606 (soybean, herbicide tolerance, deposited as PTA-11028, described in WO2012/033794), Event DAS40278 (corn, herbicide tolerance, deposited as ATCC PTA-10244, described in WO2011/022469); Event DAS-44406-6 / pDAB8264.44.06.I (soybean, herbicide tolerance, deposited as PTA-11336, described in WO2012/075426), Event DAS-14536-7 /pDAB8291.45.36.2 (soybean, herbicide tolerance, deposited as PTA-11335, described in WO2012/075429), Event DAS-59122-7 (corn, insect control - herbicide tolerance, deposited as ATCC PTA 11384, described in US-A 2006-070139); Event DAS-59132 (corn, insect control - herbicide tolerance, not deposited, described in WO2009/100188); Event DAS68416 (soybean, herbicide tolerance, deposited as ATCC PTA-10442, described in WO2011/066384 or WO2011/066360); Event DP-098140-6 (corn, herbicide tolerance, deposited as ATCC PTA-8296, described in US-A 2009-137395 or WO 08/112019); Event DP-305423-1 (soybean, quality trait, not deposited, described in US-A 2008-312082 or WO2008/054747); Event DP-32138-1 (corn, hybridization system, deposited as ATCC PTA-9158, described in US-A 2009-0210970 or WO2009/103049); Event DP-356043-5 (soybean, herbicide tolerance, deposited as ATCC PTA-8287, described in US-A 2010-0184079 or WO2008/002872); Event EE-I (brinjal, insect control, not deposited, described in WO 07/091277); Event Fil 17 (corn, herbicide tolerance, deposited as ATCC 209031, described in US-A 2006-059581 or WO 98/044140); Event FG72 (soybean, herbicide tolerance, deposited as PTA-11041, described in WO2011/063413), Event GA21 (corn, herbicide tolerance, deposited as ATCC 209033, described in US-A 2005-086719 or WO 98/044140); Event GG25 (corn, herbicide tolerance, deposited as ATCC 209032, described in US-A 2005-188434 or WO98/044140); Event GHB119 (cotton, insect control, herbicide tolerance, deposited as ATCC PTA-8398, described in WO2008/151780); Event GHB614 (cotton, herbicide tolerance, deposited as ATCC PTA-6878, described in US-A 2010-050282 or WO2007/017186); Event GJ11 (corn, herbicide tolerance, deposited as ATCC 209030, described in US-A 2005-188434 or WO98/044140); Event GM RZ13 (sugar beet, virus resistance, deposited as NCIMB-41601, described in WO2010/076212); Event H7-I (sugar beet, herbicide tolerance, deposited as NCIMB 41158 or NCIMB 41159, described in US-A 2004-172669 or WO 2004/074492); Event JOPLINI (wheat, disease tolerance, not deposited, described in US-A 2008-064032); Event LL27 (soybean, herbicide tolerance, deposited as NCIMB41658, described in WO2006/108674 or US-A 2008-320616); Event LL55 (soybean, herbicide tolerance, deposited as NCIMB 41660, described in WO 2006/108675 or US-A 2008-196127); Event LLcotton25 (cotton, herbicide tolerance, deposited as ATCC PTA-3343, described in WO2003/013224 or US- A 2003-097687); Event LLRICE06 (rice, herbicide tolerance, deposited as ATCC 203353, described in US 6,468,747 or WO2000/026345); Event LLRice62 ( rice, herbicide tolerance, deposited as ATCC 203352, described in WO2000/026345), Event LLRICE601 (rice, herbicide tolerance, deposited as

ATCC PTA-2600, described in USA 2008-2289060 or WO2000/026356); Event LY038 (corn, quality trait, deposited as ATCC PTA-5623, described in US-A 2007-028322 or WO2005/061720); Event MIR162 (corn, insect control, deposited as PTA-8166, described in US-A 2009-300784 or WO2007/142840); Event MIR604 (corn, insect control, not deposited, described in USA 2008-167456 or WO2005/103301); Event MON15985 (cotton, insect control, deposited as ATCC PTA-2516, described in US-A 2004-250317 or WO2002/100163); Event MON810 (corn, insect control, not deposited, described in US-A 2002-102582); Event MON863 (corn, insect control, deposited as ATCC PTA-2605, described in WO2004/011601 or US-A 2006-095986); Event MON87427 (corn, pollination control, deposited as ATCC PTA-7899, described in WO2011/062904); Event MON87460 (corn, stress tolerance, deposited as ATCC PTA-8910, described in WO2009/111263 or US-A 2011-0138504); Event MON87701 (soybean, insect control, deposited as ATCC PTA-8194, described in US-A 2009-130071 or WO2009/064652); Event MON87705 (soybean, quality trait - herbicide tolerance, deposited as ATCC PTA-9241, described in US-A 2010-0080887 or WO2010/037016); Event MON87708 (soybean, herbicide tolerance, deposited as ATCC PTA-9670, described in WO2011/034704); Event MON87712 (soybean, yield, deposited as PTA-10296, described in WO2012/051199), Event MON87754 (soybean, quality trait, deposited as ATCC PTA-9385, described in WO2010/024976); Event MON87769 (soybean, quality trait, deposited as ATCC PTA-8911, described in US-A 2011-0067141 or WO2009/102873); Event MON88017 (corn, insect control - herbicide tolerance, deposited as ATCC PTA-5582, described in US-A 2008-028482 or WO2005/059103); Event MON88913 (cotton, herbicide tolerance, deposited as ATCC PTA-4854, described in WO2004/072235 or US-A 2006-059590); Event MON88302 (oilseed rape, herbicide tolerance, deposited as PTA-10955, described in WO2011/153186), Event MON88701 (cotton, herbicide tolerance, deposited as PTA-11754, described in WO2012/134808), Event MON89034 (corn, insect control, deposited as ATCC PTA-7455, described in WO 07/140256 or US-A 2008-260932); Event MON89788 (soybean, herbicide tolerance, deposited as ATCC PTA-6708, described in US-A 2006-282915 or WO2006/130436); Event MSI 1 (oilseed rape, pollination control - herbicide tolerance, deposited as ATCC PTA-850 or PTA-2485, described in WO2001/031042); Event MS8 (oilseed rape, pollination control - herbicide tolerance, deposited as ATCC PTA-730, described in WO2001/041558 or US-A 2003-188347); Event NK603 (corn, herbicide tolerance, deposited as ATCC PTA-2478, described in US-A 2007-292854); Event PE-7 (rice, insect control, not deposited, described in WO2008/114282); Event RF3 (oilseed rape, pollination control - herbicide tolerance, deposited as ATCC PTA-730, described in WO2001/041558 or US-A 2003-188347); Event RT73 (oilseed rape, herbicide tolerance, not deposited, described in WO2002/036831 or US-A 2008-070260); Event SYHT0H2 / SYN-000H2-5 (soybean, herbicide tolerance, deposited as PTA-11226, described in WO2012/082548), Event T227-1 (sugar beet, herbicide tolerance, not deposited, described in WO2002/44407 or US-A 2009-265817); Event T25 (corn, herbicide tolerance, not deposited, described in US-A 2001-029014 or WO2001/051654); Event T304-40 (cotton, insect control - herbicide tolerance, deposited as ATCC PTA-8171, described in US-A 2010-077501 or WO2008/122406); Event T342-142 (cotton, insect control, not deposited, described in WO2006/128568); Event TC1507 (corn, insect control - herbicide tolerance, not deposited, described in US-A 2005-039226 or WO2004/099447); Event VIP1034 (corn, insect control - herbicide tolerance, deposited as ATCC PTA-3925, described in WO2003/052073), Event 32316 (corn, insect control-herbicide tolerance, deposited as PTA-11507, described in WO2011/084632), Event 4114 (corn, insect control-herbicide tolerance, deposited as PTA-11506, described in WO2011/084621), event EE-GM3 / FG72 (soybean, herbicide tolerance, ATCC Accession N° PTA-11041) optionally stacked with event EE-GM1/LL27 or event EE-GM2/LL55 (WO2011/063413A2), event DAS-68416-4 (soybean, herbicide tolerance, ATCC Accession N° PTA-10442, WO2011/066360A1), event DAS-68416-4 (soybean, herbicide tolerance, ATCC Accession N° PTA-10442, WO2011/066384A1), event DP-040416-8 (corn, insect control, ATCC Accession N° PTA-11508, WO2011/075593A1), event DP-043A47-3 (corn, insect control, ATCC Accession N° PTA-11509, WO2011/075595A1), event DP- 004114-3 (corn, insect control, ATCC Accession N° PTA-11506, WO2011/084621A1), event DP-032316-8 (corn, insect control, ATCC Accession N° PTA-11507, WO2011/084632A1), event MON-88302-9 (oilseed rape, herbicide tolerance, ATCC Accession N° PTA-10955, WO2011/153186A1), event DAS-21606-3 (soybean, herbicide tolerance, ATCC Accession No. PTA-11028, WO2012/033794A2), event MON-87712-4 (soybean, quality trait, ATCC Accession N°. PTA-10296, WO2012/051199A2), event DAS-44406-6 (soybean, stacked herbicide tolerance, ATCC Accession N°. PTA-11336, WO2012/075426A1), event DAS-14536-7 (soybean, stacked herbicide tolerance, ATCC Accession N°. PTA-11335, WO2012/075429A1), event SYN-000H2-5 (soybean, herbicide tolerance, ATCC Accession N°. PTA-11226, WO2012/082548A2), event DP-061061-7 (oilseed rape, herbicide tolerance, no deposit N° available, WO2012071039A1), event DP-073496-4 (oilseed rape, herbicide tolerance, no deposit N° available, US2012131692), event 8264.44.06.1 (soybean, stacked herbicide tolerance, Accession N° PTA-11336, WO2012075426A2), event 8291.45.36.2 (soybean, stacked herbicide tolerance, Accession N°. PTA-11335, WO2012075429A2), event SYHT0H2 (soybean, ATCC Accession N°. PTA-11226, WO2012/082548A2), event MON88701 (cotton, ATCC Accession N° PTA-11754, WO2012/134808A1), event KK179-2 (alfalfa, ATCC Accession N° PTA-11833, WO2013/003558A1), event pDAB8264.42.32.1 (soybean, stacked herbicide tolerance, ATCC Accession N° PTA-11993, WO2013/010094A1), event MZDT09Y (corn, ATCC Accession N° PTA-13025, WO2013/012775A1).

Further, a list of such transgenic event(s) is provided by the United States Department of Agriculture's (USDA) Animal and Plant Health Inspection Service (APHIS) and can be found on their website on the world wide web at

aphis.usda.gov. For this application, the status of such list as it is/was on the filing date of this application, is relevant.

The genes/events which impart the desired traits in question may also be present in combinations with one another in the transgenic plants. Examples of transgenic plants which may be mentioned are the important crop plants, such as cereals (wheat, rice, triticale, barley, rye, oats), maize, soya beans, potatoes, sugar beet, sugar cane, tomatoes, peas and other types of vegetable, cotton, tobacco, oilseed rape and also fruit plants (with the fruits apples, pears, citrus fruits and grapes), with particular emphasis being given to maize, soya beans, wheat, rice, potatoes, cotton, sugar cane, tobacco and oilseed rape. Traits which are particularly emphasized are the increased resistance of the plants to insects, arachnids, nematodes and slugs and snails, as well as the increased resistance of the plants to one or more herbicides.

Commercially available examples of such plants, plant parts or plant seeds that may be treated with preference in accordance with the invention include commercial products, such as plant seeds, sold or distributed under the GENUITY®, DROUGHTGARD®, SMARTSTAX®, RIB COMPLETE®, ROUNDUP READY®, VT DOUBLE PRO®, VT TRIPLE PRO®, BOLLGARD II®, ROUNDUP READY 2 YIELD®, YIELDGARD®, ROUNDUP READY® 2 XTEN™, INTACTA RR2 PRO®, VISTIVE GOLD®, and/or XTENDFLEX™ trade names.

The biopesticide composition of the invention can be applied as such, or for example in the form of as ready-to-use solutions, emulsions, water- or oil-based suspensions, powders, wettable powders, pastes, soluble powders, dusts, soluble granules, granules for broadcasting, suspoemulsion concentrates, natural products impregnated with the biopesticide composition of the invention, synthetic substances impregnated with the biopesticide composition of the invention, fertilizers or microencapsulations in polymeric substances.

Application is accomplished in a customary manner, for example by watering, spraying, atomizing, broadcasting, dusting, foaming or spreading-on. It is also possible to deploy the biopesticide composition of the invention by the ultra-low volume method, via a drip irrigation system or drench application, to apply it in-furrow or to inject it into the soil stem or trunk. It is further possible to apply the biopesticide composition of the invention by means of a wound seal, paint or other wound dressing. The effective and plant-compatible amount of the biopesticide composition of the invention which is applied to the plants, plant parts, fruits, seeds or soil will depend on various factors, such as the compound/composition employed, the subject of the treatment (plant, plant part, fruit, seed or soil), the type of treatment (dusting, spraying, seed dressing), the purpose of the treatment (curative and protective), the type of microorganisms, the development stage of the microorganisms, the sensitivity of the microorganisms, the crop growth stage and the environmental conditions.

The biopesticide composition of the invention can be used in combination with models e.g. embedded in computer programs for site specific crop management, satellite farming, precision farming or precision agriculture. Such models support the site-specific management of agricultural sites with data from various sources such as soils, weather, crops (e.g. type, growth stage, plant health), weeds (e.g. type, growth stage), diseases, pests, nutrients, water, moisture, biomass, satellite data, yield etc. with the purpose to optimize profitability, sustainability and protection of the environment. In particular, such models can help to optimize agronomical decisions, control the precision of pesticide applications and record the work performed.

As an example, the compound of the invention can be applied to a crop plant according to appropriate dose regime if a model replica the development of a plant pest and calculates that a threshold has been reached for which it is recommendable to apply the compound of the invention to the crop plant.

Commercially available systems which include agronomic models are e.g. FieldScripts™ from The Climate Corporation, Xarvio™ from BASF, AGLogic™ from John Deere, etc.

The compounds of the invention can also be used in combination with smart spraying equipment such as e.g. spot spraying or precision spraying equipment attached to or housed within a farm vehicle such as a tractor, robot, helicopter, airplane, unmanned aerial vehicle (UAV) such as a drone, etc. Such an equipment usually includes input sensors (such as e.g. a camera) and a processing unit configured to analyze the input data and configured to provide a decision based on the analysis of the input data to apply the compound of the invention to the crop plants (respectively the weeds) in a specific and precise manner. The use of such smart spraying equipment usually also requires positions systems (e.g. GPS receivers) to localize recorded data and to guide or to control farm vehicles; geographic information systems (GIS) to represent the information on intelligible maps, and appropriate farm vehicles to perform the required farm action such as the spraying.

In an example, plant pests can be detected from imagery acquired by a camera. In an example, plant pests can be identified and/or classified based on that imagery. Such identification and/ classification can make use of image processing algorithms. Such image processing algorithms can utilize machine learning algorithms, such as trained neutral networks, decision trees and utilize artificial intelligence algorithms. In this manner, the compounds described herein can be applied only where needed.

If not mentioned otherwise the treatment of plants or plant parts (which includes seeds and plants emerging from the seed), harvested fruits and vegetables with the composition according to the invention is carried out directly or by action on their surroundings, habitat or storage space using customary treatment methods, for example dipping, spraying, atomizing, irrigating, evaporating, dusting, fogging, broadcasting, foaming, painting, spreading-on, watering

(drenching), drip irrigating. It is furthermore possible to apply the at least one biological control agent, the at least one insecticide, and optionally the at least one fungicide as solo-formulation or combined-formulations by the ultra-low volume method, or to inject the composition according to the present invention as a composition or as sole-formulations into the soil (in-furrow).

One advantage of the present invention is the use of benzylalcohol or derivative thereof as specific solvent for selective extraction of the active principles with enhanced biopesticidal activity from plants is not found in the state of art. If another conventional solvent or extractant such as ethanol, isopropanol, ethyl acetate, water and/or hydroalcoholic mixtures (e.g. water:ethanol), was used in extraction process of the component consisting of plant extract, biopesticidal activity of the composition decreased significantly.

Other advantage of the present invention as result of biopesticide composition is avoiding and/or minimizing the risk of pest resistance.

Other advantage of the present invention is a decreased number of treatments in the same crop by applying one biopesticide composition efficiency in wide type of pests.

## Brief description of drawings

**Figure 1** shows stirred-tanks reactors for the maceration/recirculation (1) and passive maceration (2)

**Figure 2** shows colloid mill a common emulsification device for drop breakage using intense shearing force, which even allows the size of products to reach micrometer range. where (1) is rotor-stator unit, (2) mix inlet from stirred-tank reactor for the maceration/recirculation, (3) mix recirculation to stirred-tank reactor for the maceration/recirculation, (4) mix outlet to rotatory sieve and (5) mix sampling.

**Figure 3** shows a filter press

**Figure 4** shows full chemical space detected for almond hulls (each ball representing a particular chemical identity

**Figure 5** shows molecular entity for ethyl acetate extracting.

**Figure 6** shows general chromatogram for ethyl acetate extracting.

**Figure 7** shows molecular entity for ethanol extracting.

**Figure 8** shows general chromatogram for ethanol extracting.

**Figure 9** shows molecular entity for water extracting.

**Figure 10** shows general chromatogram for water extracting.

**Figure 11** shows molecular entity for benzyl alcohol extracting.

**Figure 12** shows general chromatogram for benzyl alcohol extracting.

**Figure 13** shows plastic net bottles (10 cm height, 5 cm diameter, 100-140 microns mesh)

**Figure 14** shows Cage Bugdorm® view (60x60x60 cm, 140 microns mesh).

**Figure 15** shows Pot of 14 cm diameter.

**Figure 16** represents a Gibbs triangle of a) *Prunus dulcis* hull benzyl alcohol extract, b) Methyl cinnamate and c) Citral.

## Description of embodiments

Unless otherwise defined, all terms of art, notations and other scientific terms or terminology used herein are intended to have the meanings commonly understood by those of skill in the art to which this invention pertains. In some cases, terms with commonly understood meanings are defined herein for clarity and/or for ready reference, and the

inclusion of such definitions herein should not necessarily be construed to represent a substantial difference over what is generally understood in the art. Many of the techniques and procedures described or referenced herein are well understood and commonly employed using conventional methodology by those skilled in the art.

The singular form "a", "an", and "the" include plural references unless the context clearly dictates otherwise.

Biopesticide: According to Environment Protection Agency from United States of America (EPA), biopesticides are certain types of pesticides derived from natural materials such as animals, plants, bacteria, and certain minerals. Biopesticides include naturally occurring substances that control pests (biochemical pesticides), microorganisms that control pests (microbial pesticides), and pesticidal substances produced by plants containing added genetic material (plant-incorporated protectants) or PIPs.

Biopesticides fall into three major classes:

1. Biochemical pesticides are naturally occurring substances (or structurally similar synthetic substances) that control pests by non-toxic mechanisms. Conventional pesticides, by contrast, are generally synthetic materials that directly kill or inactivate the pest involving toxic effects on nervous system and digestive system.

2. Microbial pesticides consist of a microorganism (e.g., a bacterium, fungus, virus or protozoan) as the active ingredient. Microbial pesticides can control many kinds of pests, although each separate active ingredient is relatively specific for its target pest[s]. For example, there are fungi that control certain weeds and other fungi that kill specific insects.

3. Plant-Incorporated-Protectants (PIPs) are pesticidal substances that plants produce from genetic material that has been added to the plant. For example, scientists can take the gene for the *Bt* pesticidal protein and introduce the gene into the plant's own genetic material.

Composition: as used herein "composition" is defined as a combination or blend of active ingredients and another compound, carrier, composition, or element inert (for example: surfactant or wetting).

Effective amount or dose , as used herein, is an amount sufficient to affect desired results. An effective amount can be administered in one or more applications. In terms of treatment, it is considered protection against pests.

"Essential oil", "oil "or "volatile essential oil", as used herein, is any oil derived from any part of a plant, and includes any compound purified or derived from a plant oil, such as a hydrophobic, volatile organic compound that is produced by a plant species. A plant essential oil used in composition as disclosed herein need not be isolated from a plant, for example, it may be chemically synthesized or isolated from a microorganism that produce the compound.

Maximum Residue Levels (MRL) is the maximum concentration of a pesticide residue in or on food or feed of plant and animal origin that is legally tolerated when a plant protection product (PPP) is applied correctly (following good agricultural practice).

Pure compound: a chemical substance that contains only one type of molecule, which is the molecule of a compound.

The term "sublethal" describes the amount or concentration of active ingredient, composition or component that does not give rise to acute mortality. Sublethal effects on an insect may involve modifications of insect behaviour and physiology. They do not directly cause the death of the individual or the collapse of a colony but may become lethal in time and/or may make the colony more sensitive, which may contribute to its collapse.

Synergy, synergism or synergistic, as used in this application means a cooperative action encountered in a combination of two or more biologically active components in which the combined activity of the two or more components exceeds the sum of the activity of each component alone. The present invention is illustrated by the following Examples in a non-limiting fashion.

Example 1 Extraction process of ***Prunus dulcis*** **plant extract and benzyl alcohol as extraction agent**

One embodiment of present invention is to obtain industrially a plant extract using benzyl alcohol in an extraction process as follows: first, vegetable matrix (almond mesocarp) is pre-treated for extraction. The main process comprising the following steps:

a) Drying and milling; the vegetable material is drying at room temperature in shadow, milling using a hammer mill up to 500 microns (micronization) and storing at 10-15 °C in shadow until step b). The previous almond hull treated in order to extract secondary metabolites is dissolved in benzyl alcohol. At the same way, benzyl alcohol (2,000 litters) is conditioned **(Figure 1)** inside the stirred tank (1). This agitation tank, with a useful volume of 3,000 litters, is equipped with an anchor stirrer with scrapers driven by a drive motor that allows a rotation speed control between 25 and 90 rpm and has a double jacket with a heat transfer fluid at a programmed temperature to maintain a

temperature control of the product introduced into the tank. The solvent is introduced through a plate exchanger that preheats it to 40°C and this temperature is maintained in the tank by the double jacket, A temperature control is always maintained by monitoring the mixture with a PT 100 temperature sensor. The solvent is kept under stirring for 8-10 minutes to perfect fit of the extraction temperature. After pre-treatment a weight of 1,000 kg of dried and micronized almond hulls (500 microns) is subsequently added to the agitated tank (1) shown in the **Figure 1,** through an endless screw in a 2: 1 v/w ratio (benzyl alcohol: almond hulls). The loading time of the pre-treated almond hulls is about 30 minutes. At this point, by the action of the anchor agitator, almond hulls is kept in suspension preventing its decantation and mixed with benzyl alcohol, giving rise to an imbibition step (penetration of benzyl alcohol into the free spaces present in the particles of almond hulls generating the first dissolution processes of the specific components soluble in benzyl alcohol), starting the extraction process by which, the almond hulls components begin to migrate from the plant's biomass to benzyl alcohol. As a result, the almond hulls are softened, optimizing the subsequent wet grinding process.

b) At this moment, it is carried on the extraction process by solid-liquid extraction technique such as maceration under recirculation conditions. Benzyl alcohol and almond hulls are kept under agitation with the anchor agitator with a rotation speed of 75 rpm to keep all solids in suspension, which prevents jams in the process of recirculation through the tubes when circulates to wet grinding. Supporting the extraction process, the solvent/almond hulls mixture is kept in continuous recirculation on the same tank (1) shown in the **Figure 1** through a colloid mill unit **(Figure 2)** equipped with three serrated crowns of hardened steel that rotate at a constant speed of 3000 rpm working on a rotor-stator principle (1), for 2.5 hours and temperature range (40-60°C). The last parameter is controlled and regulated by a double-jacket in the stirred tank (1) showed in the **Figure 1.** During this time, a sample is taken every hour to verify the dynamic of the extraction process **Figure 2** (5). In this step of the process, colloidal mill allows to break down the vegetal matrix to cellular level, specifically structures that contain the active components, which boost the penetration of benzyl alcohol. As a consequence, active ingredients solubilize more rapidly and better distribution in the solvent preventing saturation zones. The mix (almond hulls with solvent) pass through the narrow gap (0.1-3.0 mm) between rotor and stator, breakage occurs due to intense shearing force, high frequency vibration, and vortex.

c) The third step is separation of solid material using a filter press **(Figure 3)** the resulting liquid is pumped to an external appropriate container for storing it.

Example 2. Selective extraction of ***Prunus dulcis* hulls using different extractants**

According to the example 1, four different extractions were conducted using the following solvents: water, ethanol, ethyl acetate and benzyl alcohol. Each extract was chemically characterized using LC-QTOF MS/MS analysis. **Figure 4** shows the full chemical space obtained for *Prunus dulcis* (almond) hulls as a sum of all the molecular entities detected in all extracts processed (sum of ethanol, water, ethyl acetate and benzyl alcohol extracts). **Figures 5-12** show the comparative chemical space for each extract using different solvents.

The present example demonstrates that benzyl alcohol (BnOH) or derivate thereof as a solvent in the extraction process of *Prunus dulcis* hulls results in a much different profile of compounds as compared to other solvents used in the extraction of *Prunus dulcis* such as water, ethanol and ethyl acetate.

**Example 3. Method to obtain biopesticide composition**

One embodiment of the biopesticide composition, the obtained product in the example 1 is mixed in a reactor that operates in discontinuous mode. Considering the characteristics of the reactor, the final formulation is carried out carefully following the order of addiction of the components and the rotational speed parameters of each agitator and the temperature of the product set out in **Table 2.**

**Table 2. Formulation of biopesticide composition**

| Ingredient | Stirrer/ rpm | Vacuum inside tank | % (w/v) | Order | Time (min) | Product temperature |
|---|---|---|---|---|---|---|
| Product example 1 | Cowles/ 800 | 760 mbar | 32.47% | 1 | - | 25°C |
| XIAMETEX® OFX-5211 Fluid | Cowles/ 800 | 760 mbar | 12.89% | 2 | 10 | 25°C |
| Modarez ®SW-452 | Cowles/ 800 | 760 mbar | 12.89% | 2 | 10 | 25°C |

(continued)

| Ingredient | Stirrer/ rpm | Vacuum inside tank | % (w/v) | Order | Time (min) | Product temperature |
|---|---|---|---|---|---|---|
| ATLAS G-5002L | Cowles/ 1000 | 760 mbar | 6.96% | 3 | 15 | 30°C |
| Break Thru | Cowles/ 1000 | 760 mbar | 6.44% | 4 | 15 | 30°C |
| Citral | Cowles/ 800 | 760 mbar | 15.46% | 5 | 15 | 30°C |
| Methyl cinnamate | Cowles/ 800 | 760 mbar | 12.89% | 6 | 30 | 35°C |

**Example 4. Method for controlling and treating pest and fungi applying biopesticide composition.**

The composition and methods set forth in the present invention will be further illustrated in the following, non-limiting examples. The examples are illustrative of various embodiments only and do not limit the claimed invention regarding the compounds, conditions, volume ratios, process parameters and the like recited herein.

**Bioassay type**

Bioassays were newly designed and/or adapted from the scientific literature to demonstrate the biopesticidal activity of present invention. These were developed to differentiate among the different modes and mechanisms of actions:

- **Contact mortality (Leaf Disc Method)**

The objective of this bioassay is to evaluate the effect of test items on the mortality of adult insects and mites in a short/medium-term (0-24 hours) by topical application. Tests were conducted in plastic net bottles. A total of 10 replicates for each treatment (tests items and negative control) were used in each experiment and temporarily replicated 3 times along the week. **(Figure 13)**

Numbers of live and dead adult insects and mites were counted at 24 h post-treatment. Adult insects and mites were considered dead if no movement was apparent after probing with the tip of a fine brush under stereoscopic magnifying glass. Mortality percentage was calculated in treatment and control groups. If the mortality in negative control is above 20% the test was discarded. When control mortality was greater than 5% but less than 20%, the observed **contact mortality (%M)** was corrected using Abbot's formula:

$$\%\,Corrected\ M = \frac{X-Y}{100-Y} * 100$$

where: x= Mortality (%) in the treatment; y= Mortality (%) in the control.

Means of %M were compared using a one-way analysis of variance (ANOVA, $p<0.05$) and LSD-test as a post hoc test to verify significant differences between single treatments using Statgraphics Centurion XVII software. When nonnormality in the data was detected, an additional Kruskal-Wallis test was conducted, and Box-and-Whisker Plot (Median Notch) was presented.

- **Antifeedant effects**

The concept of antifeedant as a substance that acts on insect behaviour involves **feeding reduction (FR), settling inhibition (SI) and oviposition Inhibition (IO).** In some cases, settling inhibition is considered as indirect repellent effect. The objective of this bioassay is to evaluate the effect of test items on the settling behaviour of target insects and mites. It is based on the preference of target adults for treated and non-treated host plants located in the same entomological cages (in planta assays). The experiments were conducted in bugdorm®-type net cages **(Figure 14).** Four similar host plants (two leaf stage) were transferred to a same pot **(Figure 15).** Two of the plants were sprayed with biopesticide compositions and the others with the control and dried for 30 minutes. Target adults were released at the site that was equidistant from the two plants. A total of 5 cages for each treatment (fourth plant each) and control

were used in each experiment and replicated 3 times in different days. Closed and labelled cages were incubated in a "walk-in" type growth chamber at 25 (±2) °C, 60% relative humidity (RH), and a photoperiod of 16 h:8 h light: dark. After 24 hours the number of settled adults in treated and non-treated plants and the number of laid eggs were recorded on the upper and underside of each leaf. Number of adults and eggs were counted under a stereomicroscope.

Settling inhibition index (%SI) was calculated according to the following formula:

$$\%SI = \left(1 - \left(\frac{T}{C}\right)\right) * 100$$

where: T= Settling of treated plants; C= Setting of control plants.

Oviposition inhibition index (%IO) was calculated according to the following formula:

$$\%IO = \left(1 - \left(\frac{T}{C}\right)\right) * 100$$

where: T= Eggs laid on treated plants; C= Eggs laid on control plants.

Means of %SI and %IO were analysed for significance by the non-parametric Wilcoxon signed-rank test ($p < 0.05$).

• **Mycelial Growth Inhibition**

Test items were dissolved on dimethyl sulfoxide (DMSO) at 50%, 25% and 12.5% (w/v). Culture media were prepared mixing prior solutions at 1% (v/v) with PDA medium achieving 0.5%, 0.25% and 0.125% final concentrations. Control treatment was 1% (v/v) of DMSO with PDA medium. Culture media were autoclaved at 120 °C for 21 min and poured in Petri dishes. The inoculation was by placing an agar circle with mycelia in the centre of each Petri dish. Next step, dishes were sealed with parafilm and incubated at 28 °C for 6 days. Colony diameters were measured at sixth day. Five replicates per treatment were performed.

Mycelial growth inhibition was determined by measuring the colony diameter (cm) on treatments taking in consideration the growth in control. Percentage of mycelial growth inhibition (%MGI) was calculated according to the following formula:

$$MGI = \frac{Dt - D}{Dt} * 100$$

Dt is the diameter of colonies in control and Ds is the colony diameter in treatment dishes.

**Example 5. Biopesticidal activity of composition with benzyl alcohol as extraction agent.**

One embodiment of the present invention was tested the biopesticide composition and the individual compounds for demonstrating an unexpectedly synergetic effect. The different compositions were tested by trials that were carried out on different relevant insect pests and acari including: *Tuta absoluta, Bemisia tabaci, Myzus persicae, Frankliniella occidentalis* and *Tetranychus urticae.* The bioassay type used was contact mortality (Leaf Disc Method) described in the example 4.

The *Prunus dulcis* hull benzyl alcohol extract works better than other common solvents against plant pests. The main treatments included in the comparison of efficacy are:

Group A: Individual solvents: Benzyl alcohol, ethanol, isopropanol, and water were applied directly (purity as in the label) diluted at 0.3% (3cc/L) in water without formulation.

Group B: *Prunus dulcis* hull extracts were extracted with different solvents such as benzyl alcohol, ethanol, isopropanol, and water in a blend of inert ingredients as follows:

| Ingredient | % (w/v) |
|---|---|
| Prunus dulcis hull extracts (one per different solvent) | 32.47% |
| Modarez® SW-452 | 4% |

(continued)

| Ingredient | % (w/v) |
|---|---|
| ATLAS G-5002L | 7% |
| SilwetTM 408 | 4% |
| Break Thru® | 4% |
| Tween® 23 | 11% |
| Water | 37.53% |

Group C: Biopesticide compositions with different extraction agents were formulated as follows:

| Ingredient | % (w/v) |
|---|---|
| Prunus dulcis hull extracts (one per different solvent) | 32.47% |
| Modarez® SW-452 | 4% |
| ATLAS G-5002L | 7% |
| SilwetTM 408 | 4% |
| Break Thru® | 4% |
| Tween® 23 | 11% |
| Citral | 15.46% |
| Methyl cinnamate | 12.89% |
| Water | 9.18% |

**Table 3. Contact mortality against sucking pest**

| Treatment | Description | Contact mortality (%M)[1] | | |
|---|---|---|---|---|
| | | ***Bemisia tabaci*** | ***Myzus persicae*** | ***Frankliniella occidentalis*** |
| **Group A: Individual solvents** | | | | |
| Benzyl alcohol (BnOH) | Benzyl alcohol (99%) | 49.8 ± 6.2 a | 19.8 ± 6.2 a | 12.5 ± 7.8 a |
| Ethanol (EtOH) | Ethanol (96%) | 23.5 ± 8.4 b | 16.7 ± 9.1 a | 0.0 ± 0.0 b |
| Isopropanol (IPN) | Isopropanol (99%) | 0.0 ± 0.0 c | 0.0 ± 0.0 b | 0.0 ± 0.0 b |
| Water | Distilled water | 0.0 ± 0.0 c | 0.0 ± 0.0 b | 0.0 ± 0.0 b |
| **Group B: *Prunus dulcis* hull extracts** | | | | |
| *P. dulcis* hull benzyl alcohol extract | Extraction of *P. dulcis* hulls with benzyl alcohol | 62.5 ± 8.1 a | 65.9 ± 2.5 a | 54.3 ± 5.4 a |
| *P. dulcis* hull ethanol extract | Extraction of *P. dulcis* hulls with ethanol | 44.5 ± 11.2 b | 49.5 ± 7.3 b | 36.3 ± 4.6 b |
| *P. dulcis* hull isopropanol extract | Extraction of *P. dulcis* hulls with isopropanol | 39.4 ± 6.6 bc | 40.1 ± 6.8 b | 30.3 ± 4.2 b |
| *P. dulcis* hull aqueous extract | Extraction of *P. dulcis* hulls with water | 20.4 ± 2.2 c | 27.6 ± 7.2 c | 19.1 ± 5.8 c |

(continued)

| Group C: Biopesticide compositions | | | | |
|---|---|---|---|---|
| *P. dulcis* hull benzyl alcohol extract | *P. dulcis* benzyl alcohol extract (32.47%) + Citral (15.46%) + Methyl cinnamate (12-89%) | 100.0 ± 0.0[a] | 100.0 ± 0.0[a] | 100.0 ± 0.0 [a] |
| *P. dulcis* hull ethanol extract | *P. dulcis* ethanol extract (32.47%) + Citral (15.46%) + Methyl cinnamate (12-89%) | 78.3 ± 4.3 [b] | 70.1 ± 5.2 [b] | 67.8 ± 6.2 [b] |
| *P. dulcis* hull water extract | *P. dulcis* water extract (32.47%) + Citral (15.46%) + Methyl cinnamate (12-89%) | 60.4 ± 3.9 [c] | 63.5 ± 8.3 [c] | 50.4 ± 4.2 [c] |
| *Applications were carried out at 3 cell (0.3) of pure and/or preformulated treatments according to the groups to which they belong, %M: % of mortality-Abbott's corrected, means within the* same *column and the* same *group followed by the* same *letter are not significantly different (ANOVA, Kruskal-Wallis, p<0.05).* | | | | |

**Table 4. Contact mortality against chewing insect and acari pests**

| Treatment | Description | Contact mortality (%M)[1] | |
|---|---|---|---|
| | | ***Tuta absoluta*** | ***Tetranychus urticae*** |
| **Group A: Individual solvents** | | | |
| Benzyl alcohol (BnOH) | Benzyl alcohol (99%) | 29.6 ± 5.7 [a] | 33.4 ± 4.1 [a] |
| Ethanol (EtOH) | Ethanol (96%) | 0.0 ± 0.0 [c] | 0.0 ± 0.0 [b] |
| Isopropanol (IPN) | Isopropanol (99%) | 11.4 ± 7.2 [b] | 0.0 ± 0.0 [b] |
| Water | Distilled water | 0.0 ± 0.0 [c] | 0.0 ± 0.0 [b] |
| **Group B: *Prunus dulcis* hull extracts** | | | |
| *P. dulcis* hull benzyl alcohol extract | Extraction of *P. dulcis* hulls with benzyl alcohol (99%) without further concentration | 56.8 ± 9.4 [a] | 76.2 ± 7.0 [a] |
| *P. dulcis* hull ethanol extract | Extraction of *P. dulcis* hulls with ethanol (99%) without further concentration | 38.5 ± 6.2 [bc] | 60.3 ± 5.2 [ab] |
| *P. dulcis* hull isopropanol extract | Extraction of *P. dulcis* hulls with isopropanol (99%) without further concentration | 42.3 ± 8.1 [b] | 47.6 ± 3.9 [b] |
| *P. dulcis* hull aqueous extract | Extraction of *P. dulcis* hulls with water without concentration | 31.5 ± 5.5 [c] | 38.4 ± 6.3 [c] |
| **Group C: Biopesticide compositions** | | | |
| *P. dulcis* hull benzyl alcohol extract | *P. dulcis* benzyl alcohol extract (32.47%) + Citral (15.46%) + Methyl cinnamate (12-89%) | 96.6 ± 0.9 [a] | 100.0 ± 0.0 [a] |
| *P. dulcis* hull ethanol extract | *P. dulcis* ethanol extract (32.47%) + Citral (15.46%) + Methyl cinnamate (12-89%) | 80.1 ± 4.2 [b] | 79.4 ± 3.1 [b] |
| *P. dulcis* hull water extract | *P. dulcis* water extract (32.47%) + Citral (15.46%) + Methyl cinnamate (12-89%) | 66.4 ± 6.2 [c] | 70.2 ± 4.5 [b] |
| *1Applications were carried out at 3 cell (0.3) of pure and/or preformulated treatments according to the groups to which they belong, %M: % of mortality-Abbott's corrected, means within the* same *column and the* same *group followed by the* same *letter are not significantly different (ANOVA, Kruskal-Wallis, p<0.05).* | | | |

The *Prunus dulcis* benzyl alcohol extract demonstrated better pesticidal activity than the same extract using

other conventional solvent (Group B) or just benzyl alcohol. Biopesticide composition has better pesticide activity with benzyl alcohol as extraction agent that other extracting agent with the same mixture shown in Tables 3 and 4.

**Example 6. Biopesticide composition with synergistic effect**

One embodiment of the present invention the biopesticide composition is improved such as efficacy to lower dose, the group of target pests is wider, and the occurrence of resistance is reduced in some combination of the two or three components in the following range of concentrations:

P. dulcis hull benzyl alcohol extract: 25 to 60 % (w/v)

Methyl cinnamate: 12 to 24% (w/v)

Citral: 15 to 30% (w/v)

The interaction for the three components is demonstrated by Gibbs triangle: A tool for analysing compositional data in the three-dimensional case. The concentration of the three components sum to constant for all substances being graphed, any one variable is not independent of the others, so only two variables must be known to find a sample's point on the graph. Because the three numerical values, components, cannot vary independently-there are only two degrees of freedom-it is possible to graph the combinations of all three variables in only two dimensions as is shown in the figure 16.
Synergistic interactions among three active ingredients with pesticide activity can be explained based on the sublethal effects of individual active ingredient. When the required sublethal concentration can be measured for individual agents, detection of synergistic interactions among them may be easy.
Sublethal effect, in the case of pesticide, any dose and/or concentration below the effective dose 50 (EC50) is considered sublethal. A dose-response bioassays and probit analysis were carried out with the individual active ingredients to calculate sublethal concentrations.
Contact mortality and antifeedant and/or repellent effects trials, previously mentioned, were conducted for demonstrating the synergic effect of the biopesticide composition.
The sublethal concentrations were calculated and theirs corresponding efficacy against different targets species for the individual active ingredients covering the two main mode of actions: Contact mortality (Table 5) and antifeedant effect (Table 6). These concentrations will be used to demonstrate the synergistic effects when the individual active ingredients are combined in binary and tertiary mixtures from combinatory matrix described in Table 7 and 8.

**Table 5. Sublethal concentration and efficacy (contact mortality) of individual active ingredients on target pests**

| **Target pest** | **Almond hull BnOH extract** | | **Methyl cinnamate** | | **Citral** | |
|---|---|---|---|---|---|---|
| | **Sublethal concentratio n (%)** | **%M** | **Sublethal concentratio n (%)** | **%M** | **Sublethal concentratio n (%)** | **%M** |
| *Bemisia tabaci* | 0.033 | 27.8 ± 6.6 | 0.014 | 14.5 ± 9.8 | 0.017 | 20.7 ± 7.3 |
| *Myzus persicae* | 0.033 | 35.4 ± 4.6 | 0.014 | 17.1 ± 4.7 | 0.017 | 30.2 ± 5.8 |
| *Frankliniella occidentalis* | 0.049 | 19.8 ± 6.3 | 0.021 | 25.6 ± 4.6 | 0.025 | 27.8 ± 3.6 |
| *Tuta absoluta* | 0.049 | 29.6 ± 9.9 | 0.021 | 17.5 ± 5.9 | 0.025 | 0.0 ± 0.0 |
| *Tetranychus urticae* | 0.049 | 36.2 ± 3.2 | 0.021 | 24.7 ± 6.9 | 0.025 | 16.9 ± 3.9 |
| *Concentration under the lethal $EC_{50}$ was considered sublethal, %M: % of contact mortality-Abbott's corrected.* | | | | | | |

**Table 6. Sublethal concentration and efficacy (antifeedant/repellent) of individual active ingredient on target pests**

| Target pest | Almond hull BnOH extract | | Methyl cinnamate | | Citral | |
|---|---|---|---|---|---|---|
| | Sublethal concentrati on (%) | %SI/ %FR | Sublethal concentratio n (%) | %SI/ %FR | Sublethal concentratio n (%) | %SI/ %FR |
| *Bemisia tabaci* | 0.049 | 14.7 ± 7.1 | 0.021 | 14.4 ± 3.6 | 0.025 | 20.4 ± 3.8 |
| *Myzus persicae* | 0.049 | 18.6 ± 8.9 | 0.014 | 17.9 ± 6.7 | 0.017 | 28.4 ± 4.8 |
| *F. occidentalis* | 0.049 | 14.3 ± 2.4 | 0.014 | 22.2 ± 2.1 | 0.025 | 20.2 ± 4.3 |
| *Tuta absoluta* | 0.049 | 0.0 ± 0.0 | 0.014 | 30.4 ± 5.7 | 0.025 | 35.0 ± 12.3 |
| *T. urticae* | 0.049 | 0.0 ± 0.0 | 0.021 | 20.0 ± 4.6 | 0.025 | 6.8 ± 3.2 |

Concentration under the lethal $EC_{50}$ was considered sublethal, %SI: Settling inhibition index (B. tabaci, M. persicae and T. urticae); %FR: Feeding reduction index (T. absoluta, F. occidentalis).

In all cases, the efficacy of each combination was greater (or similar at lower doses) than the sum of the efficacy of individual active ingredients.

**Table 7. Binary and tertiary synergistic effects for active ingredients (contact mortality)**

| Combination | Dose (cc/L) | Concentration (%) of Biopesticide composition | | | Contact mortality (%M, %)[2] | |
|---|---|---|---|---|---|---|
| | | Extract[1] | Citral | Methyl cinnamate | ***Frankliniella occidentalis*** | ***Tetranychus urticae*** |
| 1 | 1 | 0.04 | 0.015 | 0.012 | 78.9 | 81.4 |
| 2 | 1 | 0.03 | 0.02 | 0.017 | 76.4 | 78.5 |
| 3 | 1.5 | 0.045 | 0.025 | 0.018 | 86.1 | 90.1 |
| 4 | 1 | 0.02 | 0.025 | 0.012 | 80.1 | 84.2 |
| 5 | 1 | 0.02 | 0.02 | 0.022 | 75.6 | 76.8 |
| 6 | 1 | 0.04 | 0.025 | | 62.6 | 60.4 |
| 7 | 1 | 0.03 | 0.015 | | 56.9 | 52.8 |
| 8 | 1 | 0.02 | 0.02 | | 59.1 | 50.8 |
| 9 | 1 | 0.04 | | 0.022 | 50.3 | 69.8 |
| 10 | 1 | 0.03 | | 0.017 | 49.2 | 66.7 |
| 11 | 1 | 0.02 | | 0.012 | 46.8 | 58.9 |
| 12 | 1 | | 0.025 | 0.022 | 62.6 | 62.4 |
| 13 | 1 | | 0.02 | 0.017 | 60.0 | 59.6 |
| 14 | 1 | | 0.015 | 0.012 | 52.1 | 50.3 |

[1]Extract (*P. dulcis* hull benzyl alcohol extract), [2]%M: % of mortality-Abbott's corrected

**Table 8. Binary and tertiary synergistic effects for active ingredients (antifeedant/repellent)**

| Combination | Dose (cc/L) | Concentration (%) of Biopesticide composition | | | Antifeedant (%) | |
|---|---|---|---|---|---|---|
| | | Extract[1] | Citral | Methyl cinnamate | *Frankliniella occidentalis* (%FR)[2] | *Tetranychus urticae* (%SI)[3] |
| 1 | 1 | 0.04 | 0.015 | 0.012 | 74.5 | 61.3 |
| 2 | 1 | 0.03 | 0.02 | 0.017 | 69.5 | 57.5 |
| 3 | 1.5 | 0.045 | 0.025 | 0.018 | 70.7 | 67.4 |
| 4 | 1 | 0.02 | 0.025 | 0.012 | 60.3 | 58.4 |
| 5 | 1 | 0.02 | 0.02 | 0.022 | 63.1 | 46.5 |
| 6 | 1 | 0.04 | 0.025 | | 50.1 | 57.8 |
| 7 | 1 | 0.03 | 0.015 | | 54.3 | 50.4 |
| 8 | 1 | 0.02 | 0.02 | | 49.8 | 44.9 |
| 9 | 1 | 0.04 | | 0.022 | 68.3 | 54.3 |
| 10 | 1 | 0.03 | | 0.017 | 53.2 | 51.3 |
| 11 | 1 | 0.02 | | 0.012 | 40.3 | 39.6 |
| 12 | 1 | | 0.025 | 0.022 | 62.1 | 53.6 |
| 13 | 1 | | 0.02 | 0.017 | 54.8 | 49.4 |
| 14 | 1 | | 0.015 | 0.012 | 44.6 | 39.9 |

[1] Extract (P. *dulcis* hull benzyl alcohol extract), [2] %FR: Feeding reduction index, [3] %SI: Settling inhibition index.

The concentration of the individual active ingredient in the biopesticide composition was determined applying the universal formula to calculate volume and concentrations:

$$Ci \, x \, Vi = Cf \, x \, Vf$$

Where:

Ci: Starting concentration.

Vi: Starting volume

Cf: Final concentration

Vf: Final volume

Table 9 shows the efficacy data demonstrating the synergistic effects of tertiary combinations for contact mortality (Tabla10) for antifeedant activity. For all the combinations tested were observed synergistic effects.

**Table 9. Demonstration of synergistic effects for tertiary combinations (Contact mortality)**

| Target pest | Individual active ingredients | | Synergistic effect of tertiary combinations [3] | | |
|---|---|---|---|---|---|
| | Sum of sublethal doses (%) [2] | Sum of efficacy (%M)[2] | Combination | Sum of doses of active ingredients[1] | Efficacy (%M) of the combination [4] |
| *Frankliniella occidentalis* | 0.095 | 73.2 | 1 | 0.067 | 78.9 |
| | | | 2 | 0.067 | 76.4 |
| | | | 3 | 0.088 | 86.1 |
| | | | 4 | 0.057 | 80.1 |
| | | | 5 | 0.062 | 75.6 |
| *Tetranychus urticae* | 0.095 | 77.8 | 1 | 0.067 | 81.4 |
| | | | 2 | 0.067 | 78.5 |
| | | | 3 | 0.088 | 90.1 |
| | | | 4 | 0.057 | 84.2 |
| | | | 5 | 0.062 | 76.8 |

[1] *P. dulcis* hull benzyl alcohol extract, citral and methyl cinnamate, [2] % doses of Table 5, [3] % doses of Table 7, [4]%M: % of mortality-Abbott's corrected

**Table 10. Demonstration of synergistic effects for tertiary combinations (Antifeedant Activity)**

| Target pest | Individual active ingredients[1] | | Synergistic effect of tertiary combinations [3] | | |
|---|---|---|---|---|---|
| | Sum of sublethal doses[2,4] | Sum of efficacy[2,4] | Combination | Sum of doses of active ingredients[1] | Efficacy of the combination [4] |
| *Frankliniella occidentalis* | 0.088 | 56.7 | 1 | 0.067 | 74.5 |
| | | | 2 | 0.067 | 69.5 |
| | | | 3 | 0.088 | 70.7 |
| | | | 4 | 0.057 | 60.3 |
| | | | 5 | 0.062 | 63.1 |
| *Tetranychus urticae* | 0.095 | 28.8 | 1 | 0.067 | 61.3 |
| | | | 2 | 0.067 | 57.5 |
| | | | 3 | 0.088 | 67.4 |
| | | | 4 | 0.057 | 58.4 |
| | | | 5 | 0.062 | 46.5 |

[1]Individual active ingredients = *Prunus dulcis* hull benzyl alcohol extract + Citral + Methyl cinnamate, [2] % doses of Table 5, [3] % doses of Table 7,[4] %FR: Feeding reduction index for *Frankliniella occidentalis* and %SI: Settling inhibition index for *Tetranychus urticae.*

**Example 7. Biopesticide composition for treatment and control**

From the formulation of biopesticide composition in the example 2 (solution 150 mg/ml containing 2% TWEEN-80™ in water) were prepared several dilutions (1.0%, 0.5%, 0.1% and 0.05% w/v). Besides, another biopesticide composition such as example 2 based on *Citrus sp.* extract was formulated and the same dilutions were prepared.

Final solution of biopesticide compositions were tested along with commercial products at recommended label dose. The commercial products were selected regarding their natural active principles being close in state of art to the present invention.

Regarding to demonstrate the using of the present invention on broad spectrum of insects, it was tested in the following species: *Bemisia tabaci* is one of several species of whitefly that are currently important agricultural pests. The silverleaf whitefly is a species complex containing at least 40 morphologically indistinguishable species.

**Table 11 *In vitro* efficacy against withefly (*Bemisia tabaci*)**

| Treatment | Dose | Contact mortality (%M) | Settling inhibition (%SI) | Oviposition inhibition (%IO) |
|---|---|---|---|---|
| Orange oil | 4 cc/l | 50.9 ± 5.1 (d) | 71.1 ± 13.1* | 76.7 ± 8.2 * |
| Biopesticide composition based on *Prunus dulcis* extract | 4 cc/l | 100.0 ± 0.0 (a) | 80.3 ± 3.5 * | 73.4 ± 2.3 * |
| | 3 cc/l | 100.0 ± 0.0 (a) | 70.3 ± 6.2 * | 69.8 ± 5.3 * |
| | 2 cc/l | 89.0 ± 8.7 (b) | - | - |
| | 1 cc/l | 70.7 ± 11.7 (c) | - | - |
| %M: % of Mortality- Abbott's corrected; Means within the same column followed by the same letter are not significantly different (ANOVA, Kruskal-Wallis, $p<0.05$). %SI: Settling inhibition index; * $p < 0.05$, Wilcoxon paired test. %IO: Oviposition inhibition index; * $p < 0.05$, Wilcoxon paired test. | | | | |

*Myzus persicae*, known as the green peach aphid, greenfly, or the peach-potato aphid, is a small green aphid belonging to the order *Hemiptera.* It is the most significant aphid pest of peach trees, causing decreased growth, shrivelling of the leaves and the death of various tissues. It also acts as a vector for the transport of plant viruses such as cucumber mosaic virus (CMV), potato virus Y (PVY) and tobacco etch virus (TEV).

**Table 12 In vitro efficacy against aphids *(Myzus persicae)***

| Treatment | Dose | Contact mortality (%M) | Settling inhibition (%SI) |
|---|---|---|---|
| Imidacloprid 20% w/v | 0.75 cc/l | 100.0 ± 0.0 (a) | 60.2 ± 5.7 * |
| Biopesticide composition based on *Prunus dulcis* extract | 4 cc/l | 100.0 ± 0.0 (a) | 61.4 ± 7.9 * |
| | 3 cc/l | 100.0 ± 0.0 (a) | - |
| | 2 cc/l | 97.7 ± 2.3 (a) | - |
| | 1 cc/l | 90.9 ± 4.6 (b) | - |
| %M: % of Mortality- Abbott's corrected; Means within the same column followed by the same letter are not significantly different (ANOVA, Kruskal-Wallis, $p<0.05$). %SI: Settling inhibition index; * $p < 0.05$, Wilcoxon paired test. | | | |

*Frankliniella occidentalis* also known the western flower thrips is an invasive pest insect in agriculture. This species of thrips is native to the Southwestern United States but has spread to other continents, including Europe and Australia. It has been documented to feed on over 500 different species of host plants, including a large number of fruit, vegetable, and ornamental crops including *Brassica oleracea.* The western flower thrips is also the major vector of tomato spotted wilt virus (TSWV), a serious plant disease.

**Table 13 *In vitro* efficacy against thrips (*Frankliniella occidentalis*)**

| Treatment | Dose | Contact mortality (%M) | Feeding reduction (%FR) |
|---|---|---|---|
| Spinosad 48% w/v | 0.70 cc/l | 69.5 ± 12.3 (d) | - |

(continued)

| Treatment | Dose | Contact mortality (%M) | Feeding reduction (%FR) |
|---|---|---|---|
| Biopesticide composition based on Prunus dulcis extract | 4 cc/l | 100.0 ± 0.0 $^{(a)}$ | 70.1 ± 7.2* |
| | 3 cc/l | 100.0 ± 0.0 $^{(a)}$ | - |
| | 2 cc/l | 97.7 ± 2.3 $^{(a)}$ | - |
| | 1 cc/l | 85.9 ± 4.3 $^{(ab)}$ | - |
| %M: % of Mortality- Abbott's corrected; Means within the same column followed by the same letter are not significantly different (ANOVA, Kruskal-Wallis, p<0.05). %FR: Feeding reduction index (expressed as % of silvering); * p < 0.05, Wilcoxon paired test. | | | |

*Spodoptera littoralis,* also referred to as the African cotton leafworm or Egyptian cotton leafworm or Mediterranean brocade, is a species of moth in the family *Noctuidae.* It is a highly polyphagous organism that is a pest of many cultivated plants and crops. As a result, this species was assigned the label of A2 quarantine pest by the EPPO and was cautioned as a highly invasive species in the United States.

**Table 14 *In vitro* efficacy against lepidoptera (*Spodoptera littoralis*)**

| Treatment | Dose | Contact mortality (%M) | Feeding reduction (%FR) |
|---|---|---|---|
| Spinosad 48% w/v | 0.70 cc/l | 56.5 ± 11.2 $^{(d)}$ | 68.1 ± 9.8 * |
| Biopesticide composition based on *Prunus dulcis* extract | 4 cc/l | 100.0 ± 0.0 $^{(a)}$ | 75.6 ± 13.9 * |
| | 3 cc/l | 100.0 ± 0.0 $^{(a)}$ | 68.9 ± 13.8 * |
| | 2 cc/l | 96.1± 7.6 $^{(ab)}$ | 61.8 ± 8.6 * |
| | 1 cc/l | 70.0 ± 8.1 $^{(c)}$ | - |
| | 0.5 cc/l | 31.4 ± 14.3 $^{(e)}$ | - |
| %M: % of Mortality- Abbott's corrected; Means within the same column followed by the same letter are not significantly different (ANOVA, Kruskal-Wallis, p<0.05). %FR: Feeding reduction index (choice assays); * p < 0.05, Wilcoxon paired test | | | |

*Spodoptera littoralis* larvae died after ingestion of treated surface suggesting ingestion mortality and/or neurotoxicity as primary mode of action.

**Table 15 *In vitro* efficacy against lepidoptera *(Tuta absoluta)***

| Treatment | Dose | Contact mortality (%M) | Feeding reduction (%FR) |
|---|---|---|---|
| Spinosad 48% w/v | 0.70 cc/l | 73.3 ± 10.1 $^{(c)}$ | - |
| | 4 cc/l | 100.0 ± 0.0 $^{(a)}$ | 60.0 ± 24.4 * |
| Biopesticide composition based on *Prunus dulcis* extract | 3 cc/l | 96.6 ± 0.9 $^{(ab)}$ | 53.8 ± 7.4* |
| | 2 cc/l | 50.0 ± 11.3 $^{(d)}$ | - |
| | 3 cc/l | 85.7 ± 8.7 $^{(b)}$ | 89.3 ± 5.2 * |
| | 2 cc/l | 71.4 ± 8.3 $^{(c)}$ | 69.1 ± 9.2 * |
| %M: % of Mortality- Abbott's corrected; Means within the same column followed by the same letter are not significantly different (ANOVA, Kruskal-Wallis, p<0.05). %FR: Feeding reduction index (choice assays); * p < 0.05, Wilcoxon paired test. | | | |

*Planococcus citri,* commonly known as the citrus mealybug, is a species of mealybugs native to Asia. It has been introduced to the rest of the world, including Europe, the Americas, and Oceania, as an agricultural pest. It is associated with citrus mealybug, but it attacks a wide range of crop plants, ornamental plants, and wild flora.

The citrus mealybug can live "on almost any flowering plant". It is considered a *Citrus* sp. pest with a preference for grapefruit, but it has been found on plants from almost 70 families. It is found on fruit, vegetable, and other food crops, including pineapple, sugar-apple, coconut, muskmelon, yam, figs, strawberry, sweet potato, mangoes, bananas, avocado, date palm, common guava, pomegranate, common pear, apple, eggplant, cacao tree, and soybean. It infests ornamental plants, including indoor plants, and it is common in greenhouses.

**Table 16 In vitro efficacy against scales (*Planococcus citri*)**

| Treatment | Dose | Contact mortality (%M) |
|---|---|---|
| Spinosad 48% w/v | 0.70 cc/l | - |
| Biopesticide composition based on *Prunus dulcis* extract | 4 cc/l | 93.0 ± 6.9 (a) |

*Tetranychus urticae* Koch (Acari:Tetranychidae) also known as red spider mite or two spotted spider mite (TSSM) is included in the Invasive Species Compendium (ISC) of CABI (https://www.cabi.org/isc/datasheet/53366).TSMM is one of the most economically important pests of fruits, vegetables, and ornamental plants worldwide. It is had been reported to attack more than 1200 species of plant being the most polyphagous in the *Tetranychidae* family. According to Arthropod Resistance Database more than 500 cases of acaricide resistance have been reported for this species comprising more than 90% of spider-mites resistance (https://www.pesticideresistance.org/search.php). It can feed on most vegetables and food crops such as: peppers, tomatoes, potatoes, cucumbers, beans, maize, and strawberries; and ornamental plants such as roses. It lays its eggs on the leaves, causing direct effect to host plants including tiny pale spots or scars on the leaf due to chlorophyll loss, defoliation, necrosis in young leaves.

**Table 17 *In vitro* efficacy against mites *(Tetranychus urticae*)**

| Treatment | Dose | Contact mortality (%M) | Settling inhibition (%SI) | Egg-laying inhibition (%IO) |
|---|---|---|---|---|
| Spinosad 48% w/v | 0.70 cc/l | 13.7 ± 4.8 (c) | 26.1 ± 4.9* | 37.9 ± 3.8* |
| Biopesticide composition based on *Prunus dulcis* extract | 4 cc/l | 100.0 ± 0.0 (a) | 92.1 ± 0.9 (a) | 94.8 ± 2.5 * |
| | 3 cc/l | 100.0 ± 0.0 (a) | - | - |
| | 2 cc/l | 100.0 ± 0.0 (a) | - | - |
| | 1 cc/l | 90.8 ± 5.2 (b) | - | - |
| | 3 cc/l | 97.8 ± 2.1 (a) | - | - |
| | 2 cc/l | 97.7 ± 2.3 (a) | - | - |

*Botrytis cinerea* is a necrotrophic fungus that affects many plant species, although its most notable hosts may be wine grapes. In viticulture, it is commonly known as "*botrytis* bunch rot"; in horticulture, it is usually called "grey mould" or "gray mold". It is economically important on soft fruits such as strawberries and bulb crops.

**Table *18 In vitro* efficacy against Botrytis *(Botrytis cinerea)***

| Treatment | Dose | Mycelial Growth Inhibition (%MGI) |
|---|---|---|
| Tebuconazole 25% w/v | 0.1 % | 81.4 ± 8.4 (a) |
| Biopesticide composition based on *Prunus dulcis* extract | 4 cc/l | 78.7 ± 6.1 (b) |

**Example 8. Field trials based on biopesticide composition.**

The biopesticide composition in example 2 was applied for controlling *Bemisia tabaci* in bean crops. The field trial was designed to evaluate different concentrations of biopesticide composition (2 and 3 cc/l) against a commercial

product applying recommended doses. 60 plants infected 9,000 initial number of insects were treated, 15 plants each treatment, with 2 applications at 7 days, using electric pump at a pressure of 80 psi that guarantees an optimal in the full leaf.

Assessment method was directly count of variable adults on leaves and disc of leaf, and checkpoints were 0, 1, 3, 7 days after first application, 1, 3 and 7 days after second application in adults. The variables tested was population of adults per leaves and the efficacy was calculated using Henderson Tilton formula:

$$\%\ Population = \left(1 - \frac{(n^{\underline{o}}\ in\ Control\ BT * n^{\underline{o}}\ in\ Treated\ AT)}{(n^{\underline{o}}\ in\ Control\ AT * n^{\underline{o}}\ in\ treated\ BT)}\right) * 100$$

Whereas BT is before treatment and AT is after treatment.

**Table 19. Efficacy (%) in adults of *B. tabaci* on leaf disc**

| | 1° Application | | | 2° Application | | |
|---|---|---|---|---|---|---|
| **TREATMENTS** | **Day 1** | **Day 3** | **Day 7** | **Day 1** | **Day 3** | **Day 7** |
| Negative control | 0 | 0 | 0 | 0 | 0 | 0 |
| Biopesticide composition (2cc/L) | 65.7 | 54.4 | 65.1 | 74.9 | 87.8 | 0.0 |
| Biopesticide composition (3cc/L) | 71.6 | 51.1 | 56.8 | 92.4 | 85.2 | 55.0 |
| Positive control (Commercial product) | 65.9 | 65.1 | 73.3 | 82.0 | 89.1 | 78.8 |

**Citation list**

This list of references cited by the applicant is for the readers convenience only. It does not form part of the European patent document. Even though great care has been taken in compiling the references, errors or omissions cannot be excluded and the EPO disclaims all liability in this regard.

**Patent documents cited in the description.**

- US 4,376,784. Pesticidal fluorinated esters of the pyrethrin or pyrethroid type. 24 March 1981.
- US 4,308,279. Crystalline, insecticidal pyrethroid. 30 June 1980.
- US 4,985,251. Flowable insecticidal delivery compositions and methods for controlling insect populations in an aquatic environment. 04 November 1994.
- US 4,983,390. Terrestrial delivery compositions and methods for controlling insect and habitat-associated pest populations in terrestrial environments. 04 November 1994.
- US 4,818,534. Insecticidal delivery compositions and methods for controlling a population of insects in an aquatic environment. 04 November 1994.
- US 4,983,389. Herbicidal delivery compositions and methods for controlling plant populations in aquatic and wetland environments. 01 July 1987.
- US 2,423,284. Insecticides. 17 July 1945.
- US 4,948,013. Method and apparatus for dispensing powdered pesticide. 14 April 1989.
- EP 462,347. Insecticidal composition and corresponding procedure, both of which are harmless towards warm-blooded animals. 21 June 1990
- DE 4,421,471. Insecticidal agent based on natural pyrethrum. 20 June 1994.
- WO 99/18802. A pesticidal composition. 09 October 1998.
- US 4,759,930. Insect killing compositions and method of killing insects employing a synergistic mixture of pyrethrum, eucalyptus, rosemary and peppermint. 09 June 1987.
- US 8,623,420. Sweet whey based biopesticide composition. 07 December 2007.
- US 7,195,788. Pesticidal composition from Prunus. 27 March 2007


**Non-patent literature cited in the description.**

- Banji Adaramola and Adebayo Onigbinde. 2017. Influence of extraction technique on the mineral content and antioxidant capacity of edible oil extracted from ginger rhizome. Chemistry International 3(1) 1-7.
- Qing-Wen Zhang, Li-Gen Lin and Wen-Cai Ye. Techniques for extraction and isolation of natural products: a comprehensive review. Zhang et al. Chin Med (2018) 13:20.
- Dieu-Hien Truong , Dinh Hieu Nguyen, Nhat Thuy Anh Ta, Anh Vo Bui, Tuong Ha Do, and Hoang Chinh Nguyen. Evaluation of the use of different solvents for phytochemical constituents, antioxidants, and in vitro anti-inflammatory activities of Severinia buxifolia. Journal of Food Quality 2019 Article ID 8178294.
- Amita Pandey and Shalini Tripathi. Concept of standardization, extraction and pre-phytochemical screening strategies for herbal drug. Journal of Pharmacognosy and Phytochemistry 2014; 2 (5): 115-119.


The present invention also relates to the following items:

1. A biopesticide composition comprising a plant extract and resulting benzyl alcohol of step b) obtained by a process that comprises the following steps:

   a. Drying and milling of vegetable matrix
   b. Solid-liquid extraction technique from vegetable matrix using benzyl alcohol as extraction solvent.
   c. Separation of solid material.

2. Process according to item 1 wherein step b) is selected from the types of techniques comprising maceration, percolation, Soxhlet, pressurized liquid extraction, microwave-assisted extraction, ultrasound-assisted extraction, and accelerated solvent extraction.

3. Process according to item 2 wherein step b) is preferably maceration.

4. Process according to item 1 wherein step c) is preferably filtration.

5. Process according to item 1 wherein step a) vegetable matrix is selected from the group comprising *Allium sativum, Aesculus hippocastanum, Arctium lappa, Camellia sinensis, Carum carvi, Centella asiatica, Cinnamomum camphora, Cinnamomum cassia, Cinnamomum verum, Citrus sp., Cymbopogon sp., Cynara scolymus, Equinacea purpura, Eucalyptus sp., Foeniculum vulgare, Illicium verum, Juglans regia, Juniperus communis, Lavandula x intermedia, Linum usitatissimum, Melilotus officinalis, Mentha sp., Olea europaea, Origanum vulgare, Persea americana, Petroselinum crispum, Peumus boldus, Pinus sp., Prunus armeniaca, Prunus avium, Prunus cerasus, Prunus dulcis, Salix sp., Salvia officinalis, Satureja montana, Tanacetum vulgare, Thymus vulgaris, Trigonella foenum-graecum, Urtica dioica and Zingiber officinale.*

6. Process according to item 5 wherein step a) vegetable matrix can be employed as powder, essential oil or hydroalcoholic extract.

7. The biopesticide composition of item 1, further comprising at least one compound of the formula

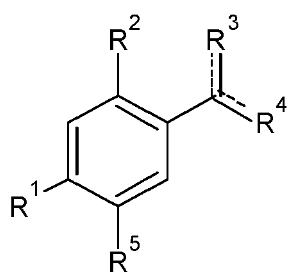

wherein $\mathbf{R_1}$ is any of the following: -H, $-CH_3$, -OH, $-O-CH_3$, $-O-CH_2-CH_3$, $-O-CH_2-$Phenyl, $-O-CO-CH_3$, $-CH-(CH_3)_2$ or $-NH_2$, wherein $\mathbf{R_2}$ is any of the following: -H, -OH, $-O-CO-CH_3$, $-O-CH_2-COOH$ or =O, wherein $\mathbf{R_3}$ is any of the following -H, =O or $-CH_3$, wherein $\mathbf{R_4}$ is $-CH_3$, -OH, $-O-CO-CH_3$, $-O-CO-CH-(CH_3)_2$, $-O-CO-(CH_2)_n-CH_3$, $-O-CO-CH(CH_3)-CH_2-CH_3$, $-O-CO-(CH_2)_7-CH=CH-(CH_2)_7-CH_3$, $-O-CO-(CH_2)_7-CH=CH-CH_2-CH=CH-(CH_2)_4-CH_3$, $-O-CO-(CH_2)_7-CH=CH-CH_2-CH=CH-CH_2-CH=CH-CH_2-CH_3$, =O, =CH-COOH, $=CH-CO-CH_3$, =CH-CO-Phenyl, $=CH-CO-O-CH_2-$Phenyl, =CH-CO-CH=CH-Phenyl, =CH-CO-NH-Glycine, $=CH-CH_2-O-CO-CH_3$, $=CH-CH_2-O-CO-(CH_3)_2$, $=CH-CH_2-O-CO-(CH)_n-CH_3$, $=CH-CH_2-O-CO-CH(CH_3)-CH_2-CH_3$, $-CH-CH_2-O-$

$CO-(CH_2)_7-CH=CH-(CH_2)_7-CH_3$, $=CH-CH_2-O-CO-(CH_2)_7-CH=CH-CH_2-CH=CH-(CH_2)_4-CH_3$$=CH-CH_2-O-CO-(CH_2)_7-CH=CH-CH_2-CH=CH-CH_2-CH=CH-CH_2-CH_3$, -COOH,-CHO, -CH=O, $-CH_2-OH$, $-CH_2-O-CO-CH_3$, $-CH_2-O-CO-(CH_2)_n-CH_3$, $-CH_2-O-CO-(CH_2)_7-CH=CH-(CH_2)_7-CH_3$, $-CH_2-O-CO-(CH_2)_7-CH=CH-CH_2-CH=CH-(CH_2)_4-CH_3$ , $-CH_2-O-CO-(CH_2)_7-CH=CH-CH_2-CH=CH-CH_2-CH=CH-CH_2-CH_3$, $-CH_2=CH_2$, -CH=CH-Phenyl, $-O-CH_3$, $-O-CH_2-CH_3$, $-O-CH_2$-Phenyl, $-O-CH_2$-CH=CH-Phenyl, -NH-Glycine, -NH-CH=CH-$CH_2$-Phenyl, -O-**X**, =C-CO-O-**X**, where **X** is thymol, carvacrol, eugenol, vanillin, bornyl or geraniol, $-NH_2$,-NH-$CH_2$-Phenyl, -N-(-$CH_2$-Phenyl)$_2$, -NH-$CH_2$ - COOH, -O-CO-Phenyl, $=CH-CH_2OH$, =CH-CHO, =CH-CH=CH-CO-$CH_3$, =CH-CH=CH-CO-CH=CH-CH=CH-Phenyl, $=C(CH_3)-COOH$, =CH-COOH, $=CH-COO-CH_3$, $=CH-CO-O-CH_2-CH_3$, =CH-CO-O-$CH_2$-Phenyl, -O-$CH_2$-CH=CH-Phenyl, $=CH-CO-NH_2$, =CH-CO-NH-$CH_2$-Phenyl, =CH-CO-NH-$CH_2$-COOH, =CH-CO-O-CO-CH=CH-Phenyl, =CH-CO-NH-CH=CH-$CH_2$-Phenyl, =CH-CO-CH=CH-vanillin, $-CH=CH_2$, or hybridoma molecules, wherein $\mathbf{R_5}$ is any of the following: -H, -OH, -O, $-O-CH_3$, $-O-CO-CH_3$, $-O-CH_2-COOH$, =O, or $-CH_3$.

8. The biopesticide composition of item 1, further comprising at least one pure compound.

9. The biopesticide composition according to item 8 wherein pure compounds are selected from a group comprising borneol, bornyl acetate, carvone, Y-cadinene, camphene, caryophyllene, citronellal, citronellol, coumarin, 4-methylcoumarin, dihydromyrcenol, decanal, dihydrocarvone, epoxycarvone, epoxygeranial, farnesol, farnesal, felandrene, fenchone, geranial- citral A-, Citronellic acid, geraniol, geranic acid, geranyl acetate, germacrene, 1,4 cineol, 2-heptanone, isocitronellene, D-limonene, linalol, longifolene, menthol, menthyl acetate, ρ-menthane-3,8-diol, p-mentha-1(7),8-diene, methyl, myrcene, neral- citral B-, nerol, nerolidol, neryl acetate, α- ocimene, octanal, 1- octanol, α- pinene, β-pinene, terpinene, terpineol, terpinolene and 3-trans-5-cis-pseudoionone.

10. The biopesticide composition according to item 1 further comprising at least one essential oil.

11. The biopesticide composition according to item 10 wherein essential oil is selected from a group comprising *Cinnamomun sp., Citrus sp., Cuminum sp., Cymbopogon sp., Eucalyptus sp., Geranium sp., Mentha sp., Origanum sp., Pelargonium sp., Pinus sp., Rosmarinus sp., Satureja sp., Salvia sp. and Thymus sp.*

12. The biopesticide composition according to item 1 further comprising at least one Inert Ingredients.

13. The biopesticide composition according to item 12 wherein inert ingredient is selected from surfactants, emulsifiers, wetting additives, solvents, adjuvants, and stabilizers.

14. A method for controlling and treating broad spectrum of pests and diseases in plants comprising applying effective amount of the biopesticide composition such as described in previous claims.

15. The method according to item 14 that comprises controlling pest caused by insects.

16. The method according to item 15 that comprises controlling pest caused by insects, said insect is selected from *Acyrthosiphum sp., Aphis sp, Aulacorthum sp., Brachycaudus sp., Bemisia sp., Brevicoryne sp., Cydia sp., Diuraphis sp, Dysaphis sp, Eriosoma sp., Frankliniella sp., Helicoverpa sp., Hyalopterus sp., Leptinotarsa sp., Liriomyza sp., Lipaphis sp., Macrosiphum sp., Myzus sp., Nasonovia sp., Planococcus sp, Pemphigus sp., Phorodon sp., Phylloxera sp. Pseudococcus sp., Rhopalosiphum sp., Schizaphis sp., Sitobion sp., Spodoptera sp., Trialurodes sp, Tecia sp., Thrips sp., Toxoptera sp., and Tuta sp.*

17. The method according to item 16 that comprises controlling pest caused by insects, said insect is selected from *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Bemisia argentifolii, Bemisia tabaci, Brevicoryne brassicae, Cydia pomonella, Cydia molesta, Cydia splendana, Diuraphis noxia, Dysaphis devecta, Dysaphis plantaginea, Eriosoma lanigerum, Frankliniella bispinosa, Frankliniella gossvpiana, Frankliniella occidentalis, Frankliniella parvula, Frankliniella schultzei, Frankliniella tenuicornis, Frankliniella tritici, Frankliniella vaccinii, Frankliniella williamsi, Helicoverpa armigera, Hyalopterus pruni, Leptinotarsa behrensi, Leptinotarsa collinsi, Leptinotarsa decemlineata, Leptinotarsa defecta, Leptinotarsa haldemani, Leptinotarsa heydeni, Leptinotarsa juncta, Leptinotarsa lineolata, Leptinotarsa peninsularis, Leptinotarsa rubiginosa, Leptinotarsa texana, Leptinotarsa tlascalana, Leptinotarsa tumamoca, Leptinotarsa typographica, Liriomyza brassicae, Liriomyza huidobrensis, Liriomyza trifolii, Lipaphis erysimi, Macrosiphum avenae, Macrosiphum euphorbiae, Macrosiphum* rosae, *Myzus cerasi, Myzus nicotianae, Myzus persicae, Nasonovia ribisnigri, Planococcus citri, Pemphigus bursarius, Phorodon*

*humuli, Phylloxera vitifoliae, Pseudococcus comstocki, Pseudococcus cyptus, Pseudococcus longispinus, Pseudococcus saccharicoia, Pseudococcus viburni, Rhopalosiphum insertum, Rhopalosiphum maidis, Rhopalosiphum padi, Schizaphis graminum, Sitobion avenae, Spodoptera cilium, Spodoptera cosmioides, Spodoptera eridania, Spodoptera frugiperda, Spodoptera litoralis, Spodoptera litura, Spodoptera ornithogalli, Trialurodes vaporariorum , Tecia solanivora, Thrips obscuratus, Thrips palmi, Thrips tabaci, Toxoptera aurantii, Toxoptera citricola, and Tuta absoluta.*

18 The method according to item 14 that comprises controlling pest caused by mites.

19 The method according to item 18 that comprises controlling pest caused by mites said mite is selected from *Tetranychus sp, Eutetranychus sp. and Phyllocoptruta sp.*

20.The method according to item 19 that comprises controlling pest caused by mites said mite is selected from *Tetranychus kanzawai, Tetranychus urticae, Eutetranychus orientalis, Eutetranychus banks* and *Phyllocoptruta oleivora.*

21 The method according to item 14 comprises combating and controlling pests in all life cycle: egg, immature, and adult.

22 The method according to item 14 wherein the disease is caused by *Botrytis* sp., *Erysiphe sp., Fusarium sp, Leveillula sp., and Uncinula sp.*

23. The method according to item 22 wherein the disease is caused by *Botrytis cinerea, Botrytis paeoniae, Botrytis tulipae, Erysiphe necator, Fusarium semitectum, Fusarium moniliforme, Fusarium solani, Fusarium oxysporum, Leveillula taurica, and Uncinula necator.*

## Claims

1. Biopesticide composition comprising a P. *dulcis* extract, wherein the extraction agent is benzylalcohol or a derivative thereof.

2. Biopesticide composition according to claim 1, further comprising at least one compound of the formula:

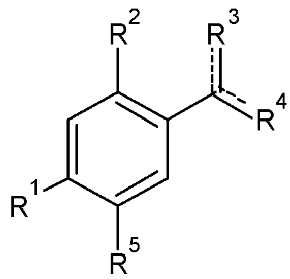

wherein **$R_1$** is any of the following: -H, $-CH_3$, -OH, $-O-CH_3$, $-O-CH_2-CH_3$, $-O-CH_2$-Phenyl, $-O-CO-CH_3$, $-CH-(CH_3)_2$ or $-NH_2$, wherein $R_2$ is any of the following: -H, -OH, $-O-CO-CH_3$, $-O-CH_2-COOH$ or =O, wherein **$R_3$** is any of the following -H, =O or $-CH_3$, wherein **$R_4$** is $-CH_3$, -OH, $-O-CO-CH_3$, $-O-CO-CH-(CH_3)_2$, $-O-CO-(CH_2)_n-CH_3$, $-O-CO-CH(CH_3)-CH_2-CH_3$, $-O-CO-(CH_2)_7-CH=CH-(CH_2)_7-CH_3$, $-O-CO-(CH_2)_7-CH=CH-CH_2-CH=CH-(CH_2)_4-CH_3$, $-O-CO-(CH_2)_7-CH=CH-CH_2-CH=CH-CH_2-CH=CH-CH_2-CH_3$, =O, =CH-COOH, $=CH-CO-CH_3$, =CH-CO-Phenyl, $=CH-CO-O-CH_2$-Phenyl, =CH-CO-CH=CH-Phenyl, =CH-CO-NH-Glycine, $=CH-CH_2-O-CO-CH_3$, $=CH-CH_2-O-CO-(CH_3)_2$, $=CH-CH_2-O-CO-(CH)_n-CH_3$, $=CH-CH_2-O-CO-CH(CH_3)-CH_2-CH_3$, $-CH-CH_2-O-CO-(CH_2)_7-CH=CH-(CH_2)_7-CH_3$, $=CH-CH_2-O-CO-(CH_2)_7-CH=CH-CH_2-CH=CH-(CH_2)_4-CH_3$, $=CH-CH_2-O-CO-(CH_2)_7-CH=CH-CH_2-CH=CH-CH_2-CH=CH-CH_2-CH_3$, -COOH,-CHO, -CH=O, $-CH_2-OH$, $-CH_2-O-CO-CH_3$, $-CH_2-O-CO-(CH_2)_n-CH_3$, $-CH_2-O-CO-(CH_2)_7-CH=CH-(CH_2)_7-CH_3$, $-CH_2-O-CO-(CH_2)_7-CH=CH-CH_2-CH=CH-(CH_2)_4-CH_3$ , $-CH_2-O-CO-(CH_2)_7-CH=CH-CH_2-CH=CH-CH_2-CH=CH-CH_2-CH_3$, $-CH_2=CH_2$, -CH=CH-Phenyl, $-O-CH_3$, $-O-CH_2-CH_3$, $-O-CH_2$-Phenyl, $-O-CH_2-CH=CH$-Phenyl, -NH-Glycine, $-NH-CH=CH-CH_2$-Phenyl, -O-**X**, =C-CO-O-**X**, where **X** is thymol, carvacrol, eugenol, vanillin, bornyl or geraniol, $-NH_2$,$-NH-CH_2$-Phenyl, $-N-(-CH_2-Phenyl)_2$, $-NH-CH_2$ - COOH, -O-CO-Phenyl, $=CH-CH_2OH$, =CH-CHO, $=CH-CH=CH-CO-CH_3$, =CH-CH=CH-CO-CH=CH-CH=CH-Phenyl, $=C(CH_3)-COOH$, =CH-COOH, $=CH-COO-CH_3$, =CH-CO-O-

$CH_2$-$CH_3$, =CH-CO-O-$CH_2$-Phenyl, -O-$CH_2$-CH=CH-Phenyl, =CH-CO-$NH_2$, =CH-CO-NH-$CH_2$-Phenyl, =CH-CO-NH-$CH_2$-COOH, =CH-CO-O-CO-CH=CH-Phenyl, =CH-CO-NH-CH=CH-$CH_2$-Phenyl, =CH-CO-CH=CH-vanillin, -CH=$CH_2$, or hybridoma molecules, wherein **$R_5$** is any of the following: -H, -OH, -O, -O-$CH_3$, -O-CO-$CH_3$, -O-$CH_2$-COOH, =O, or -$CH_3$.

**3.** Biopesticide composition according to claim 1 or 2, wherein said composition comprises the extraction agent.

**4.** Biopesticide composition according to any one of claims 1 to 3, comprising benzylalcohol or a derivative thereof in a concentration of at least 5%.

**5.** Biopesticide composition according to any one of claims 1 to 4, further comprising at least one further active ingredient.

**6.** Biopesticide composition according to claim 5, wherein said further active ingredient is selected from the group consisting of borneol, bornyl acetate, carvone, Y-cadinene, camphene, caryophyllene, citronellal, citronellol, coumarin, 4-methyl-coumarin, dihydromyrcenol, decanal, dihydrocarvone, epoxycarvone, epoxygeranial, farnesol, farnesal, felandrene, fenchone, citral, citronellic acid, geraniol, geranic acid, geranyl acetate, germacrene, 1,4 cineol, 2-heptanone, isocitronellene, D-limonene, linalol, longifolene, menthol, menthyl acetate, ρ-menthane-3,8-diol, p-mentha-1(7),8-diene, methylcinnamate, myrcene, nerol, nerolidol, neryl acetate, α- ocimene, octanal, 1- octanol, α- pinene, β-pinene, terpinene, terpineol, terpinolene and 3-trans-5-cis-pseudoionone.

**7.** Biopesticide composition according to claim 5 or 6, wherein said at least one further active ingredient is selected from citral and methyl cinnamate.

**8.** Biopesticide composition according to claim 7, comprising citral and methyl cinnamate.

**9.** Biopesticide composition comprising

(a) a *P. dulcis* extract
(b) citral
(c) methylcinnamate

**10.** The biopesticide composition according to any one of claims 1 to 9 further comprising at least one essential oil.

**11.** The biopesticide composition according to claim 10 wherein essential oil is selected from a group comprising *Cinnamomun sp., Citrus sp., Cuminum sp., Cymbopogon sp., Eucalyptus sp., Geranium sp., Mentha sp., Origanum sp., Pelargonium sp., Pinus sp., Rosmarinus sp., Satureja sp., Salvia sp. and Thymus sp.*

**12.** The biopesticide composition according to any one of claims 1 to 11 further comprising at least one inert ingredient.

**13.** The biopesticide composition according to claim 12, wherein said inert ingredient is selected from surfactants, emulsifiers, wetting additives, solvents, adjuvants, and stabilizers.

**14.** Biopesticide composition according to any one of claims 1 to 8 and 10 to 13, comprising

| | |
|---|---|
| P. dulcis extract in benzylalcohol | 25 to 40% w/v |
| citral | 10 to 20% w/v |
| methyl cinnamate | 7 to 18% w/v |
| inert ingredients | 22 to 58% w/v |

**15.** A process for obtaining a biopesticide composition comprising

(a) Drying and milling a vegetable matrix based on *P. dulcis*
(b) Applying a solid-liquid extraction technique using benzyl alcohol or a derivative thereof as extraction agent
(c) Separating the solid material thereby obtaining a liquid composition.

**16.** The process according to claim 15, wherein said extraction technique in step b) is selected from the group consisting

of maceration, percolation, Soxhlet, pressurized liquid extraction, microwave-assisted extraction, ultrasound-assisted extraction, and accelerated solvent extraction.

**17.** The process according to claim 15 or 16, wherein said extraction technique is maceration.

**18.** The process according to any one of claims 15 to 17, wherein said separation is done using filtration.

**19.** Process according to any one of claims 15 to 18, wherein said vegetable matrix in step a) can be employed as powder, essential oil or hydroalcoholic extract.

**20.** A biopesticide composition according to any one of claims 1 to 8 and 10 to 14 that has been obtained by a process according to any one of claims 15 to 20.

**21.** A method for controlling and treating at least one plant pest or plant disease and/or for reducing overall damage of plants and plant parts as well as losses in harvested fruits or vegetables caused by plant pests and/or plant diseases comprising applying an effective amount of the biopesticide composition according to any one of claims 1 to 14 and 20 or a biopesticide composition obtained by the method of any one of claims 15 to 20 to a plant, plant part, seed or locus where said plant or seed in intended to be grown.

**22.** The method according to claim 21, wherein said plant pest is an insect.

**23.** The method according to claim 22 wherein said insect pest is selected from *Acyrthosiphum sp., Aphis sp, Aulacorthum sp., Brachycaudus sp., Bemisia sp., Brevicoryne sp., Cydia sp., Diuraphis sp, Dysaphis sp, Eriosoma sp., Frankliniella sp., Helicoverpa sp., Hyalopterus sp., Leptinotarsa sp., Liriomyza sp., Lipaphis sp., Macrosiphum sp., Myzus sp., Nasonovia sp., Planococcus sp, Pemphigus sp., Phorodon sp., Phylloxera sp., Pseudococcus sp., Rhopalosiphum sp., Schizaphis sp., Sitobion sp., Spodoptera sp., Trialurodes sp, Tecia sp., Thrips sp., Toxoptera sp., and Tuta sp.*.

**24.** The method according to claim 23, wherein said insect pest is selected from the group consisting of *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Bemisia argentifolii, Bemisia tabaci, Brevicoryne brassicae, Cydia pomonella, Cydia molesta, Cydia splendana, Diuraphis noxia, Dysaphis devecta, Dysaphis plantaginea, Eriosoma lanigerum, Frankliniella bispinosa, Frankliniella gossvpiana, Frankliniella occidentalis, Frankliniella parvula, Frankliniella schultzei, Frankliniella tenuicornis, Frankliniella tritici, Frankliniella vaccinii, Frankliniella williamsi, Helicoverpa armigera, Hyalopterus pruni, Leptinotarsa behrensi, Leptinotarsa collinsi, Leptinotarsa decemlineata, Leptinotarsa defecta, Leptinotarsa haldemani, Leptinotarsa heydeni, Leptinotarsa juncta, Leptinotarsa lineolata, Leptinotarsa peninsularis, Leptinotarsa rubiginosa, Leptinotarsa texana, Leptinotarsa tlascalana, Leptinotarsa tumamoca, Leptinotarsa typographica, Liriomyza brassicae, Liriomyza huidobrensis, Liriomyza trifolii, Lipaphis erysimi, Macrosiphum avenae, Macrosiphum euphorbiae, Macrosiphum* rosae, *Myzus cerasi, Myzus nicotianae, Myzus persicae, Nasonovia ribisnigri, Planococcus citri, Pemphigus bursarius, Phorodon humuli, Phylloxera vitifoliae, Pseudococcus comstocki, Pseudococcus cyptus, Pseudococcus longispinus, Pseudococcus saccharicoia, Pseudococcus viburni, Rhopalosiphum insertum, Rhopalosiphum maidis, Rhopalosiphum padi, Schizaphis graminum, Sitobion avenae, Spodoptera cilium, Spodoptera cosmioides, Spodoptera eridania, Spodoptera frugiperda, Spodoptera litoralis, Spodoptera litura, Spodoptera ornithogalli, Trialurodes vaporariorum ,Tecia solanivora, Thrips obscuratus, Thrips palmi, Thrips tabaci, Toxoptera aurantii, Toxoptera citricola, and Tuta absoluta.*

**25.** The method according to claim 21, wherein said plant pest is a mite.

**26.** The method according to claim 25, wherein said mite is selected from *Tetranychus sp, Eutetranychus sp. and Phyllocoptruta sp.*.

**27.** The method according to claim 26 wherein said mite is selected from *Tetranychus kanzawai, Tetranychus urticae, Eutetranychus orientalis, Eutetranychus banks* and *Phyllocoptruta oleivora.*

**28.** The method according to any one of claims 21 to 27, wherein said controlling comprises control during at least one period of the pest life cycle selected from egg, immature state, and adult.

**29.** The method according to claim 21 wherein the plant disease is caused by *Botrytis* sp., *Erysiphe sp., Fusarium sp, Leveillula sp., and Uncinula sp.*

**30.** The method according to claim 21 or 29, wherein the disease is caused by *Botrytis cinerea, Botrytis paeoniae, Botrytis tulipae, Erysiphe necator, Fusarium semitectum, Fusarium moniliforme, Fusarium solani, Fusarium oxysporum, Leveillula taurica, and Uncinula necator*.

**31.** The method according to any one of claims 21 to 30, wherein said method is for controlling at least one plant pest during at least one stage selected from egg, larvae and adult.

**32.** The method according to claim 31, wherein said method is for controlling all stages of said at least one plant pest.

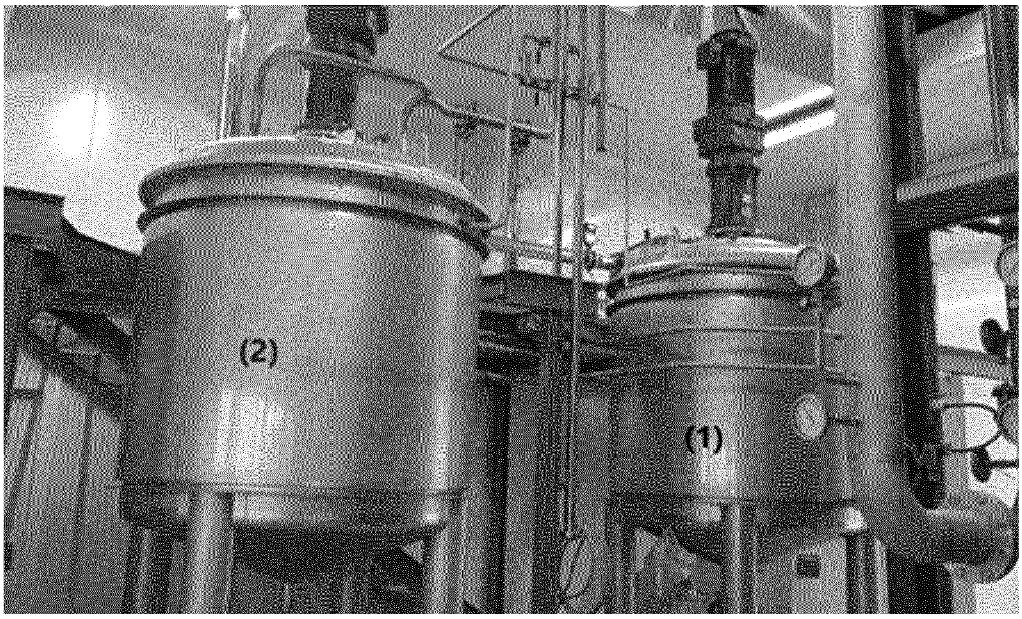


Figure 1/16

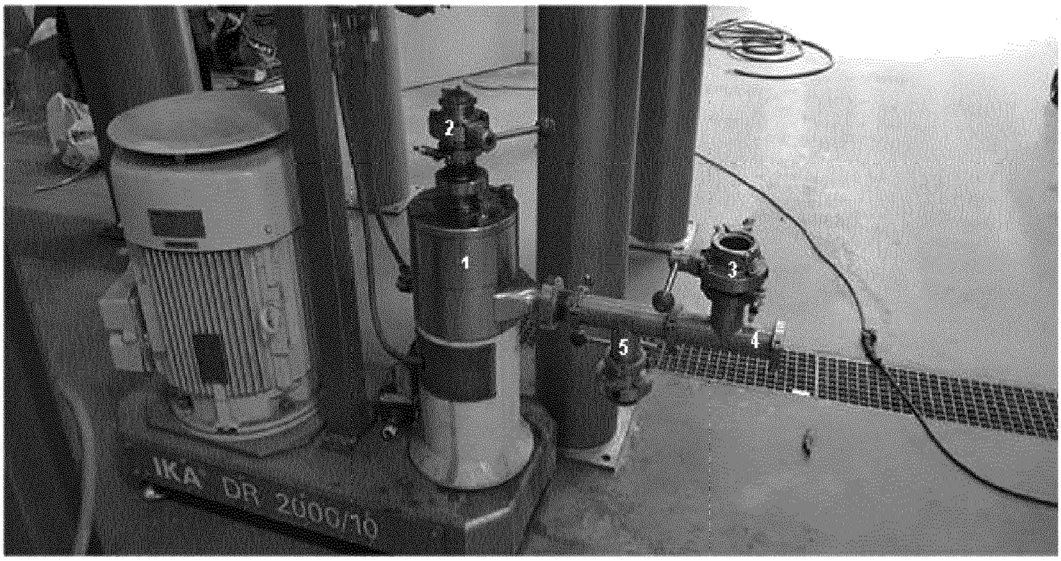


Figure 2/16

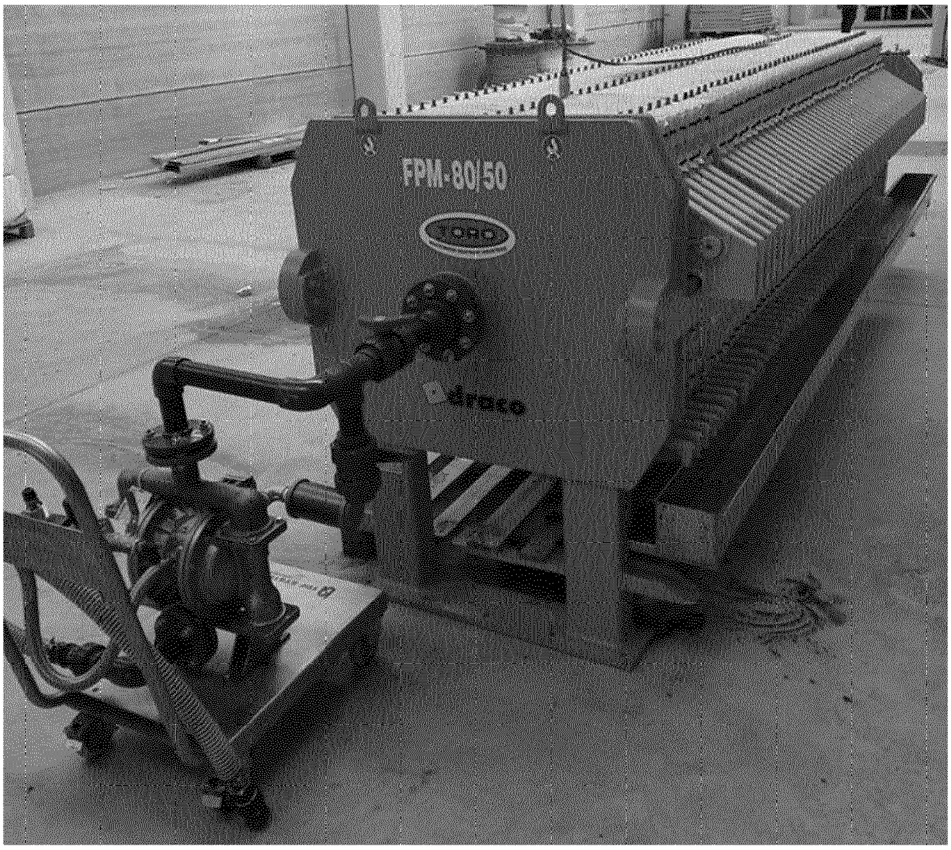


Figure 3/16

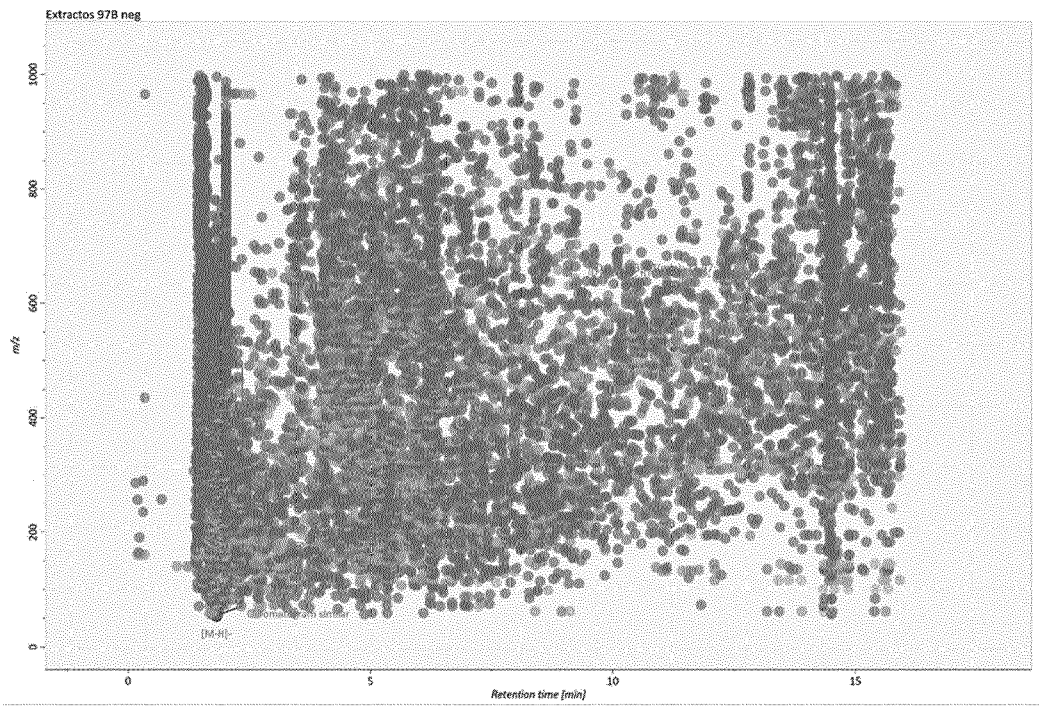


Figure 4/16

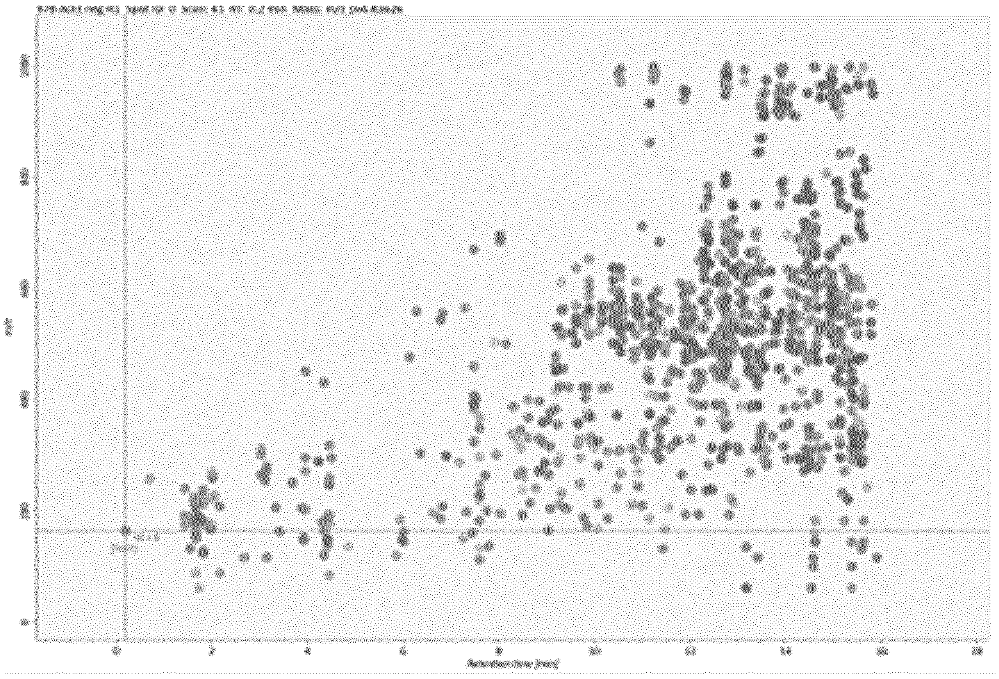

Figure 5/16

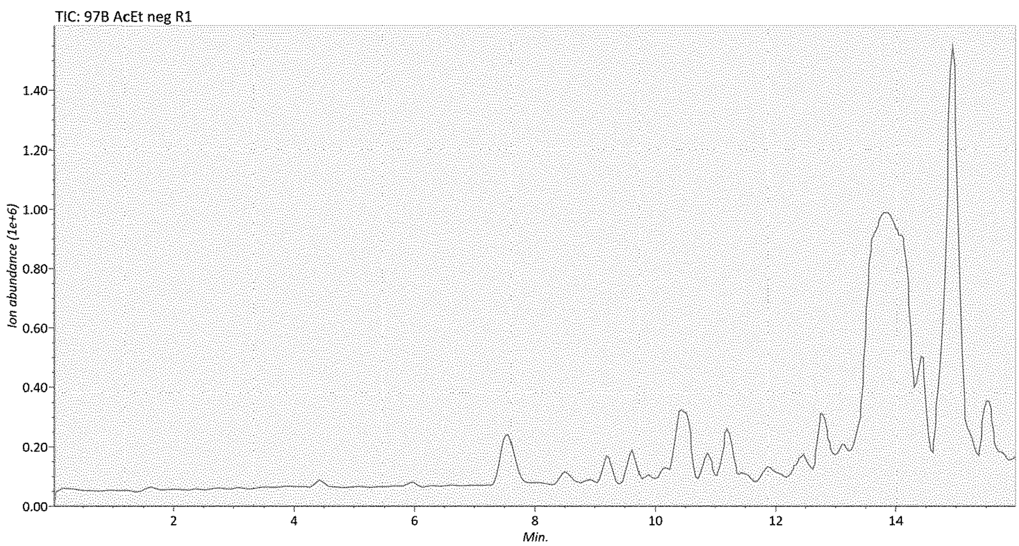


Figure 6/16

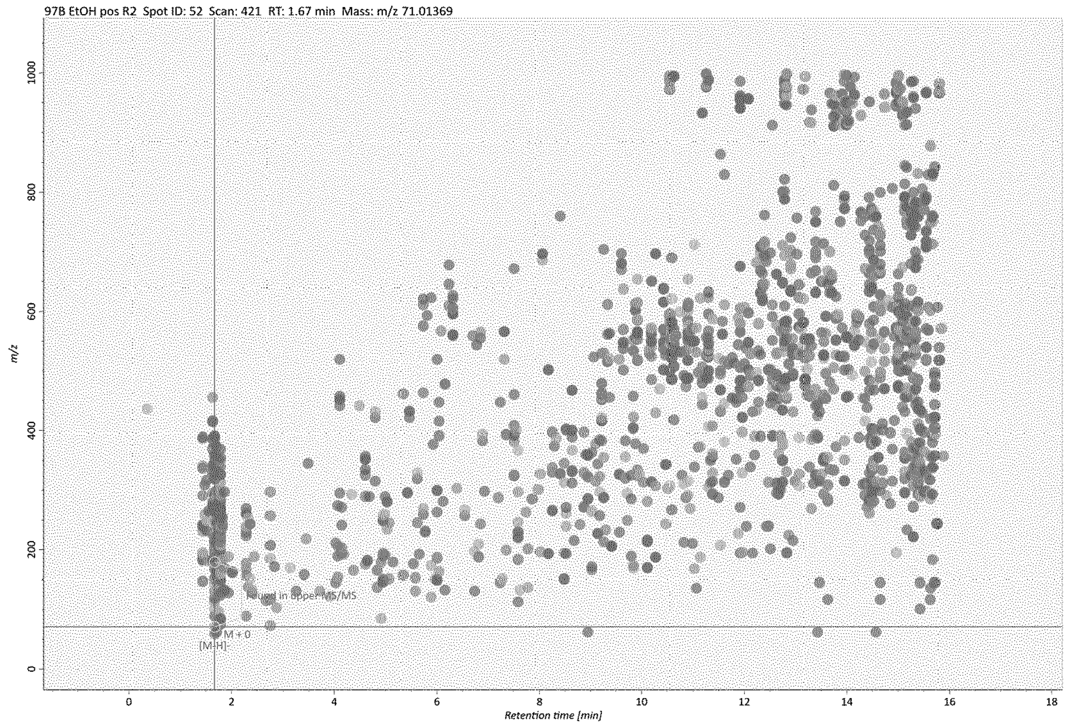


Figure 7/16

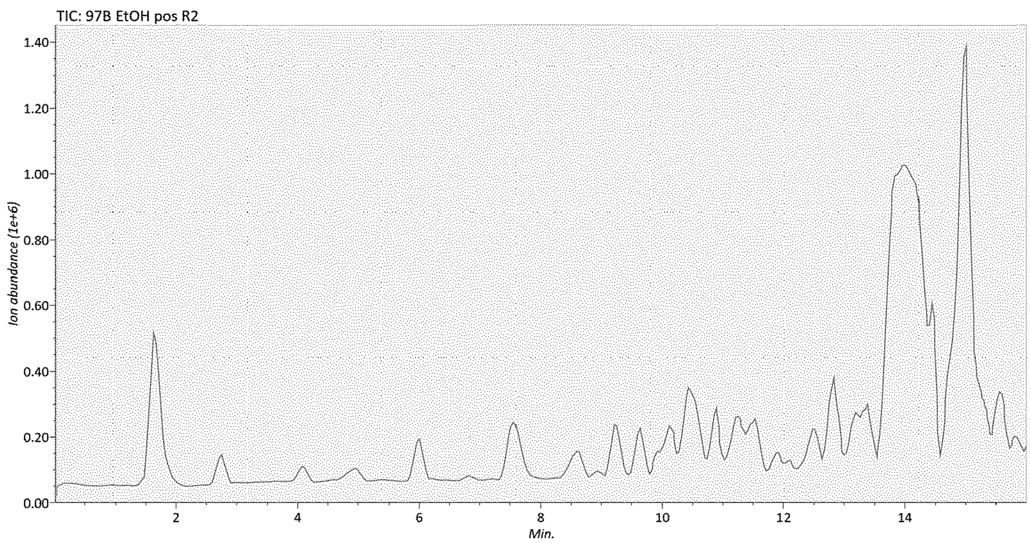


Figure 8/16

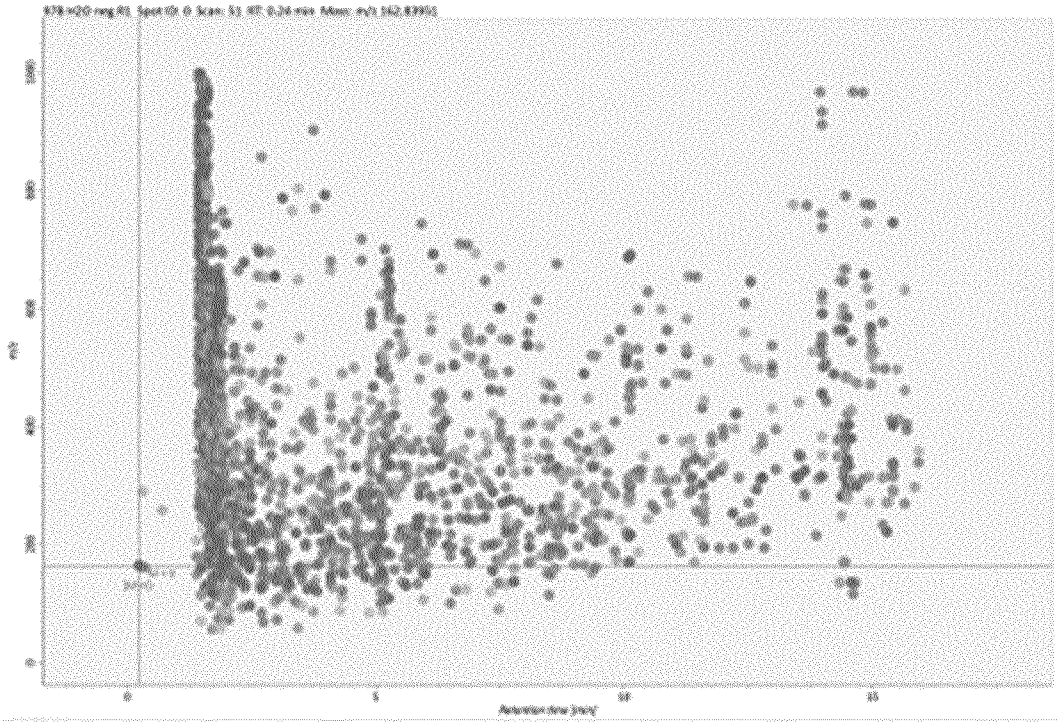


Figure 9/16

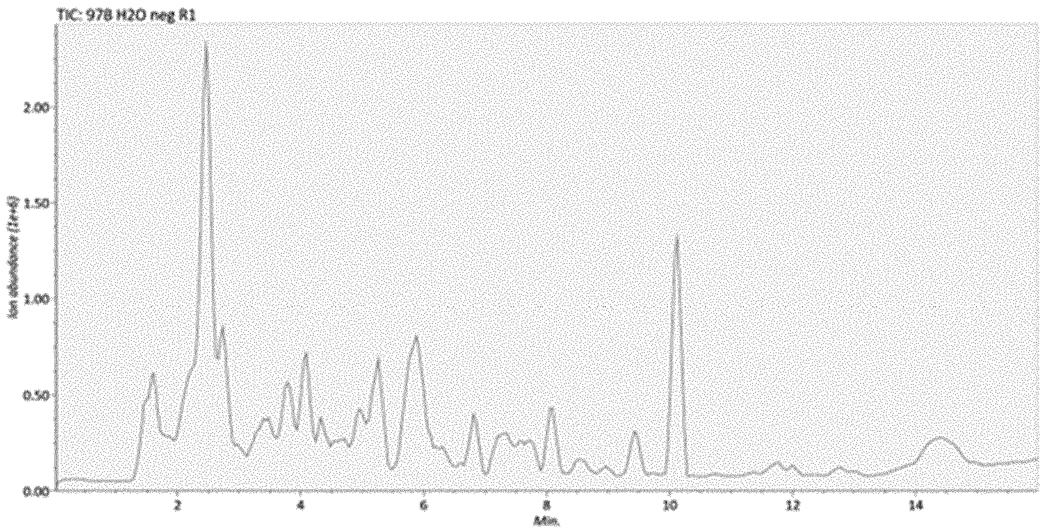


Figure 10/16

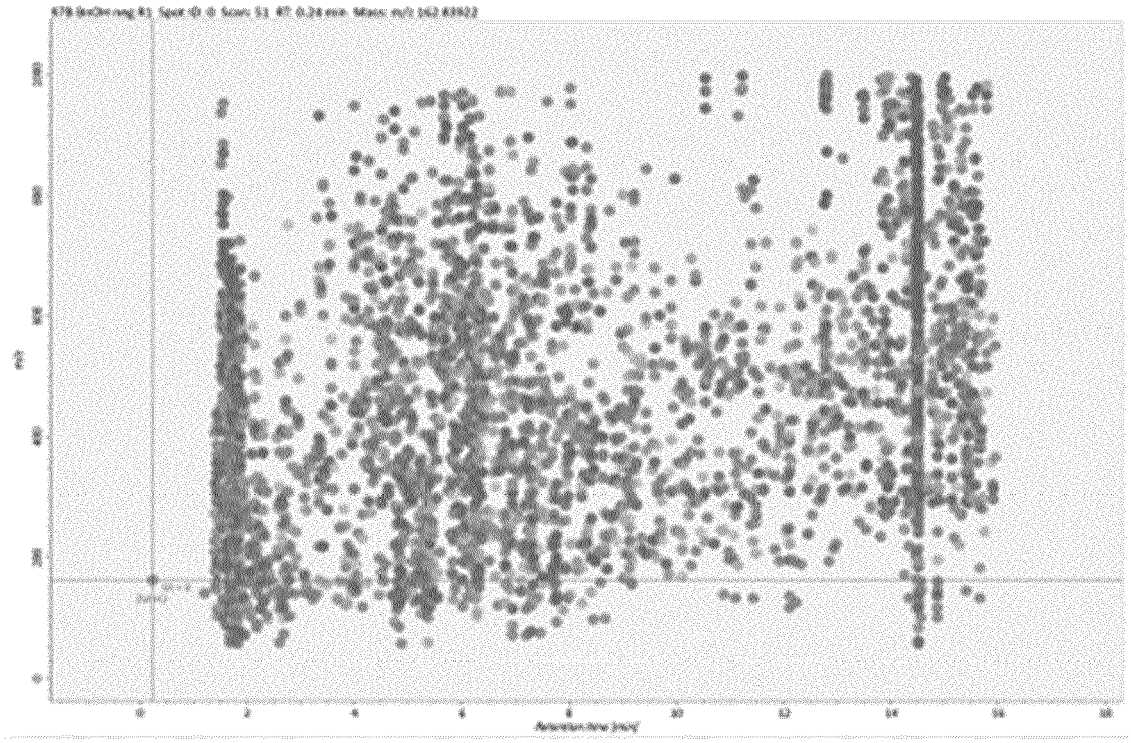

Figure 11/16

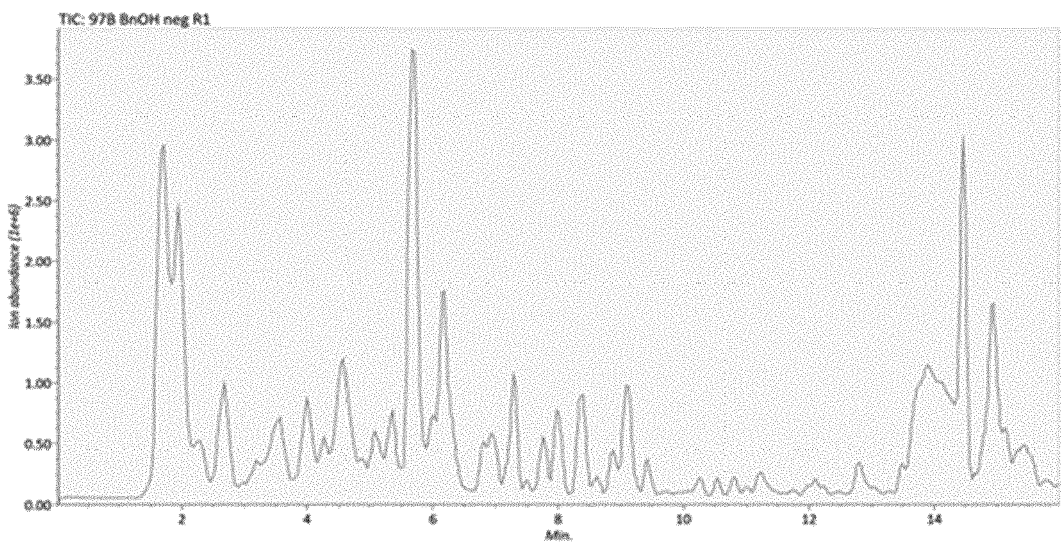


Figure 12/16

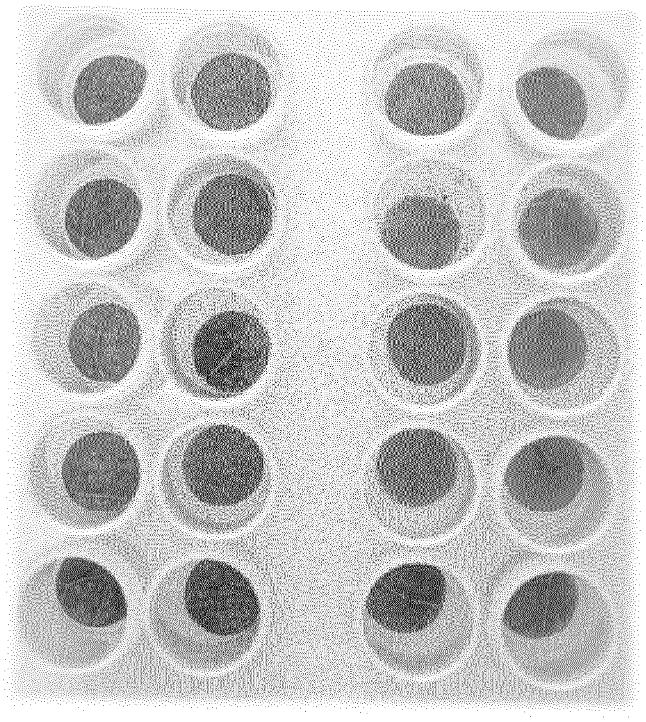

Figure 13 /16

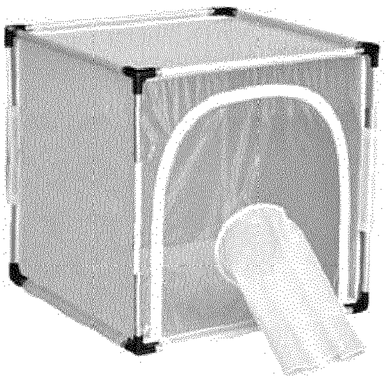

Figure 14/16

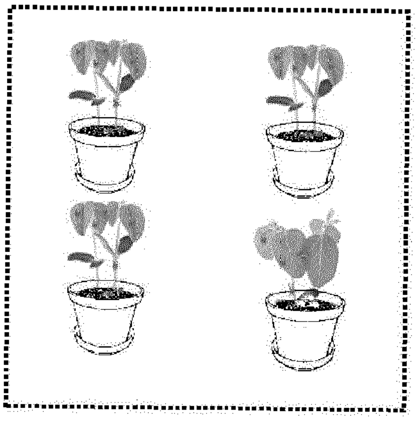

Figure 15/16

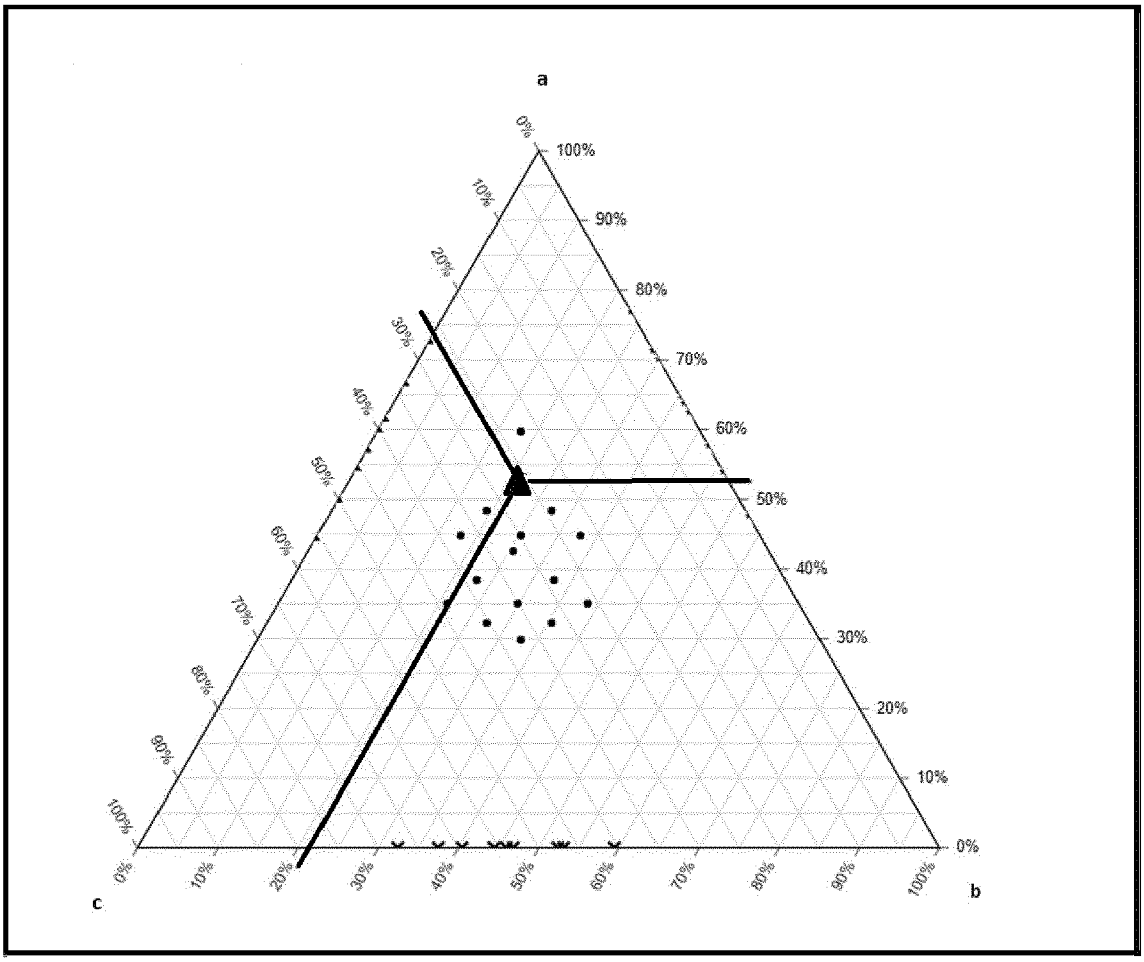
a
0%
10%
20%
30%
40%
50%
60%
70%
80%
90%
100%
100%
90%
80%
70%
60%
50%
40%
30%
20%
10%
0%
c
0%
10%
20%
30%
40%
50%
60%
70%
80%
90%
100%
b

Figure 16/16

Europäisches Patentamt
European Patent Office
Office européen des brevets

# EUROPEAN SEARCH REPORT

Application Number
EP 23 21 6629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2021/148684 A1 (KIMITEC BIOGROUP S L [ES]) 29 July 2021 (2021-07-29)<br>* the claims; paragraphs 73-77 and example 3 * | 1-32<br>1-32 | INV.<br>A01N31/04<br>A01N65/34<br>A01N65/00<br>A01P7/04<br>A01P3/00<br>A01N31/02<br>A01N37/06 |
| Y | CN 101 029 276 B (INST OF RESOURCE INSECTS CHINESE ACADEMY OF FORESTRY) 22 December 2010 (2010-12-22)<br>* the background of the invention and examples one and two * | 1-32 | |
| Y | KARKANIS ANESTIS C ET AL: "Natural insecticides from native plants of the Mediterranean basin and their activity for the control of major insect pests in vegetable crops: shifting from the past to the future",<br>JOURNAL OF PEST SCIENCE,<br>vol. 94, no. 2, 2021, pages 187-202, XP037363454,<br>ISSN: 1612-4758, DOI: 10.1007/S10340-020-01275-X<br>* page 191, left column, second paragraph * | 1-32 | |
| | -/-- | | TECHNICAL FIELDS SEARCHED (IPC)<br>A01N |

The present search report has been drawn up for all claims

| Place of search | Date of completion of the search | Examiner |
|---|---|---|
| Munich | 16 April 2024 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

page 1 of 4

Europäisches Patentamt
European Patent Office
Office européen des brevets

# EUROPEAN SEARCH REPORT

Application Number
EP 23 21 6629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MESERET C EGIGU ET AL: "Cordeauxia edulis and Rhododendron tomentosum extracts disturb orientation and feeding behavior of Hylobius abietis and Phyllodecta laticollis", ENTOMOLOGIA EXPERIMENTALIS ET APPLICATA, KLUWER ACADEMIC PUBLISHERS, DORDRECHT, NL, vol. 138, no. 2, 24 December 2010 (2010-12-24), pages 162-174, XP071203849, ISSN: 0013-8703, DOI: 10.1111/J.1570-7458.2010.01082.X * page 168, left column, second paragraph; table 2, page 172, left column, last paragraph * ----- | 1-32 | |
| Y | MUHAMMAD AZEEM ET AL: "Chemical composition and antifeedant activity of some aromatic plants against pine weevil (Hylobius abietis)", ANNALS OF APPLIED BIOLOGY, ASSOCIATION OF APPLIED BIOLOGISTS, WELLESBOURNE, GB, vol. 177, no. 1, 27 March 2020 (2020-03-27), pages 121-131, XP071023832, ISSN: 0003-4746, DOI: 10.1111/AAB.12586 * page 129, right column, first paragraph * ----- -/-- | 1-32 | TECHNICAL FIELDS SEARCHED (IPC) |

The present search report has been drawn up for all claims

1

| Place of search | Date of completion of the search | Examiner |
|---|---|---|
| Munich | 16 April 2024 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 21 6629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENOSSI MATÍAS ET AL: "Essential oil-loaded bio-nanomaterials for sustainable agricultural applications", JOURNAL OF CHEMICAL TECHNOLOGY AND BIOTECHNOLOGY , vol. 96, no. 8 13 March 2021 (2021-03-13), pages 2109-2122, XP093124581, Hoboken, USA ISSN: 0268-2575, DOI: 10.1002/jctb.6705 Retrieved from the Internet: URL:https://onlinelibrary.wiley.com/doi/full-xml/10.1002/jctb.6705 | 1-32 | |
| Y | * the whole document * ----- | 1-32 | |
| Y | MC KINDLAY K.S. ET AL: "Benzyl alcohol as an aid to penetration of certain ovicides", NATURE, 1 January 1951 (1951-01-01), page 153, XP093048966, * the whole document * ----- | 1-32 | TECHNICAL FIELDS SEARCHED (IPC) |
| X | CN 105 616 234 A (YU DINGDING) 1 June 2016 (2016-06-01) * the whole document * ----- | 1,3,5-7, 10-13,20 | |
| X | US 2020/297610 A1 (DIAZ GOMEZ EDISON [DE] ET AL) 24 September 2020 (2020-09-24) * the claims and tables XXXIII and XXXIV * ----- | 1,3,5, 10,12, 13,20 | |
| X | CN 106 854 532 A (CHANGSHA XIEHAOJI BIOLOGY ENG CO LTD) 16 June 2017 (2017-06-16) * the whole document * ----- -/-- | 1,3,5,6, 10-13,20 | |

The present search report has been drawn up for all claims

1

| Place of search | Date of completion of the search | Examiner |
|---|---|---|
| Munich | 16 April 2024 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 21 6629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAWADE BHAGWAT ET AL: "Profiling of volatile terpenes from almond (Prunus dulcis) young fruits and characterization of seven terpene synthase genes", PLANT SCIENCE, vol. 287, 1 October 2019 (2019-10-01), page 110187, XP093124397, IE ISSN: 0168-9452, DOI: 10.1016/j.plantsci.2019.110187 | 1-32 | |
| Y | * the whole document * ----- | 1-32 | |
| X | WO 02/078451 A1 (PREMIER BOTAN LTD [US]; ROBERTS DONALD D [US]) 10 October 2002 (2002-10-10) | 1-7, 10-13, 20-22, 28-32 | |
| Y | * the whole document * ----- | 1-32 | |
| X | Berlin: In: "Velvet Lifting Foundation Record ID: 1457205 Company: Innovative Cosmetic Brands Manufacturer: Innovative Cosmetic Brands Brand: Make Up Factory Make Up Secrets Category: Colour Cosmetics Sub-Category: Face Colour Cosmetics -Foundations / Fluid Illuminators Market: Germany Store Name: Müller Store T", 1 December 2010 (2010-12-01), XP093124560, pages 1-6, * the whole document * ----- | 1,3,5, 10-13,20 | |
| | | | TECHNICAL FIELDS SEARCHED (IPC) |

The present search report has been drawn up for all claims

1

| Place of search | Date of completion of the search | Examiner |
|---|---|---|
| Munich | 16 April 2024 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 21 6629

This annex lists the patent family members relating to the patent documents cited in the above-mentioned European search report. The members are as contained in the European Patent Office EDP file on
The European Patent Office is in no way liable for these particulars which are merely given for the purpose of information.

16-04-2024

| Patent document cited in search report | Publication date | Patent family member(s) | Publication date |
|---|---|---|---|
| WO 2021148684 A1 | 29-07-2021 | AU 2020424969 A1 | 11-08-2022 |
| | | BR 112022013069 A2 | 06-09-2022 |
| | | ES 2926555 A2 | 26-10-2022 |
| | | JP 2023519648 A | 12-05-2023 |
| | | KR 20220143042 A | 24-10-2022 |
| | | US 2022354128 A1 | 10-11-2022 |
| | | WO 2021148684 A1 | 29-07-2021 |
| CN 101029276 B | 22-12-2010 | NONE | |
| CN 105616234 A | 01-06-2016 | NONE | |
| US 2020297610 A1 | 24-09-2020 | CN 108430445 A | 21-08-2018 |
| | | EP 3383359 A1 | 10-10-2018 |
| | | JP 6800976 B2 | 16-12-2020 |
| | | JP 2018537569 A | 20-12-2018 |
| | | US 2018344605 A1 | 06-12-2018 |
| | | US 2020297610 A1 | 24-09-2020 |
| | | WO 2017097434 A1 | 15-06-2017 |
| | | WO 2017097438 A1 | 15-06-2017 |
| CN 106854532 A | 16-06-2017 | NONE | |
| WO 02078451 A1 | 10-10-2002 | US 2004105901 A1 | 03-06-2004 |
| | | WO 02078451 A1 | 10-10-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4376784 A
- US 4308279 A
- US 4985251 A
- US 4983390 A
- US 4818534 A
- US 4983389 A
- US 2423284 A
- US 4948013 A
- EP 462347 A
- DE 4421471
- WO 9918802 A
- US 4759930 A
- US 8623420 B
- US 7195788 B2
- WO 9717432 A
- WO 9808932 A
- WO 200147952 A
- WO 9850427 A
- WO 2009152359 A
- WO 2007024782 A
- US 6855533 B
- WO 2019103918 A
- WO 2002040677 A
- WO 2006128569 A
- WO 2006128570 A
- US 2002120964 A
- WO 2002034946 A
- WO 2010117737 A
- WO 2010117735 A
- WO 2005103266 A
- US 2005216969 A
- US 2007143876 A
- WO 2006098952 A
- US 2006230473 A
- WO 2002027004 A
- WO 11075593 A
- WO 2011075595 A
- WO 2010077816 A
- US 2006162007 A
- WO 2004053062 A
- US 2003126634 A
- WO 2010080829 A
- WO 2005074671 A
- US 2009217423 A
- WO 2006128573 A
- US 20100024077 A
- WO 2006128571 A
- WO 2006128572 A
- US 2006130175 A
- WO 2004039986 A
- US 2007067868 A
- WO 2005054479 A
- WO 2005054480 A
- WO 2012033794 A
- WO 2011022469 A
- WO 2012075426 A
- WO 2012075429 A
- US 2006070139 A
- WO 2009100188 A
- WO 2011066384 A
- WO 2011066360 A
- US 2009137395 A
- WO 08112019 A
- US 2008312082 A
- WO 2008054747 A
- US 20090210970 A
- WO 2009103049 A
- US 20100184079 A
- WO 2008002872 A
- WO 07091277 A
- US 2006059581 A
- WO 98044140 A
- WO 2011063413 A
- US 2005086719 A
- US 2005188434 A
- WO 2008151780 A
- US 2010050282 A
- WO 2007017186 A
- WO 2010076212 A
- US 2004172669 A
- WO 2004074492 A
- US 2008064032 A
- WO 2006108674 A
- US 2008320616 A
- WO 2006108675 A
- US 2008196127 A
- WO 2003013224 A
- US 2003097687 A
- US 6468747 B
- WO 2000026345 A
- US 20082289060 A
- WO 2000026356 A
- US 2007028322 A
- WO 2005061720 A
- US 2009300784 A
- WO 2007142840 A
- US 2008167456 A
- WO 2005103301 A

- US 2004250317 A
- WO 2002100163 A
- US 2002102582 A
- WO 2004011601 A
- US 2006095986 A
- WO 2011062904 A
- WO 2009111263 A
- US 20110138504 A
- US 2009130071 A
- WO 2009064652 A
- US 20100080887 A
- WO 2010037016 A
- WO 2011034704 A
- WO 2012051199 A
- WO 2010024976 A
- US 20110067141 A
- WO 2009102873 A
- US 2008028482 A
- WO 2005059103 A
- WO 2004072235 A
- US 2006059590 A
- WO 2011153186 A
- WO 2012134808 A
- WO 07140256 A
- US 2008260932 A
- US 2006282915 A
- WO 2006130436 A
- WO 2001031042 A
- WO 2001041558 A
- US 2003188347 A
- US 2007292854 A
- WO 2008114282 A
- WO 2002036831 A
- US 2008070260 A
- WO 2012082548 A
- WO 200244407 A
- US 2009265817 A
- US 2001029014 A
- WO 2001051654 A
- US 2010077501 A
- WO 2008122406 A
- WO 2006128568 A
- US 2005039226 A
- WO 2004099447 A
- WO 2003052073 A
- WO 2011084632 A
- WO 2011084621 A
- WO 2011063413 A2
- WO 2011066360 A1
- WO 2011066384 A1
- WO 2011075593 A1
- WO 2011075595 A1
- WO 2011084621 A1
- WO 2011084632 A1
- WO 2011153186 A1
- WO 2012033794 A2
- WO 2012051199 A2
- WO 2012075426 A1
- WO 2012075429 A1
- WO 2012082548 A2
- WO 2012071039 A1
- US 2012131692 A
- WO 2012075426 A2
- WO 2012075429 A2
- WO 2012134808 A1
- WO 2013003558 A1
- WO 2013010094 A1
- WO 2013012775 A1
- US 7195788 B

**Non-patent literature cited in the description**


- **BAUR et al.** *Pesticide Science,* 1997, vol. 51, 131-152
- **ESTRUCH et al.** *Proc Natl Acad Sci US A.,* 1996, vol. 93 (11), 5389-94
- **BANJI ADARAMOLA ; ADEBAYO ONIGBINDE.** *Chemistry International,* 2017, vol. 3 (1), 1-7
- **QING-WEN ZHANG ; LI-GEN LIN ; WEN-CAI YE. ; ZHANG et al.** Techniques for extraction and isolation of natural products: a comprehensive review. *Chin Med,* 2018, vol. 13, 20
- **DIEU-HIEN TRUONG ; DINH HIEU NGUYEN ; NHAT THUY ANH TA ; ANH VO BUI ; TUONG HA DO ; HOANG CHINH NGUYEN.** Evaluation of the use of different solvents for phytochemical constituents, antioxidants, and in vitro anti-inflammatory activities of Severinia buxifolia. *Journal of Food Quality,* 2019
- **AMITA PANDEY ; SHALINI TRIPATHI.** Concept of standardization, extraction and pre-phytochemical screening strategies for herbal drug. *Journal of Pharmacognosy and Phytochemistry,* 2014, vol. 2 (5), 115-119